# EUROPEAN PATENT SPECIFICATION

(11) **EP 4 585 621 B1**
(45) Date of publication and mention of the grant of the patent: **28.10.2026**
(21) Application number: 23887536.3
(22) Date of filing: 27.07.2023
(51) Int. Cl.: C08F 210/10, A01N 25/10, A01P 1/00, C08F 8/22, C08F 8/32, C08F 8/44, C08F 8/30

(54) **ISOBUTYLENE-BASED CATIONIC SALT POLYMER, PREPARATION METHOD THEREFOR, USE THEREOF, AND ANTIBACTERIAL POLYMER MATERIAL**
KATIONISCHES SALZPOLYMER AUF ISOBUTYLENBASIS, HERSTELLUNGSVERFAHREN DAFÜR, VERWENDUNG DAVON UND ANTIBAKTERIELLES POLYMERMATERIAL
POLYMÈRE DE SEL CATIONIQUE À BASE D'ISOBUTYLÈNE, SON PROCÉDÉ DE PRÉPARATION, SON UTILISATION ET MATÉRIAU POLYMÈRE ANTIBACTÉRIEN

(30) Priority: 11.11.2022 CN 202211411837; 11.11.2022 CN 202211415126; 11.11.2022 CN 202211411836; 11.11.2022 CN 202211412278
(43) Date of publication of application: 16.07.2025
(73) Proprietor: China Petroleum & Chemical Corporation, Beijing 100728 (CN); Sinopec (Beijing) Research Institute of Chemical Industry Co., Ltd., Beijing 100013 (CN)
(72) Inventor: LIANG, Aimin, Beijing 100013 (CN); QIU, Yingxin, Beijing 100013 (CN); MENG, Weijuan, Beijing 100013 (CN); MA, Wenchao, Beijing 100013 (CN); WEI, Zibo, Beijing 100013 (CN); ZHANG, Yuehong, Beijing 100013 (CN); ZHOU, Xinqin, Beijing 100013 (CN)
(74) Representative: Hoffmann Eitle
(86) International application number: PCT/CN2023/109511
(87) International publication number: WO 2024/098840

(56) References cited:
- CN-A- 1 043 506
- CN-A- 102 796 214
- CN-A- 104 761 666
- CN-A- 107 347 909
- CN-A- 107 709 374
- CN-A- 109 942 629
- CN-A- 110 256 617
- CN-A- 111 434 695
- CN-A- 111 434 696
- CN-A- 111 434 697
- CN-A- 112 608 402
- CN-A- 112 608 402
- US-A- 5 366 727
- US-A- 5 366 727
- US-A1- 2012 148 773

## Description

### CROSS-REFERENCE TO RELATED APPLICATIONS

The application claims the benefit of the Chinese patent application No. "202211411837.6", filed on November 11, 2022; the Chinese patent application No. "202211415126.6", filed on November 11, 2022; the Chinese patent application No. "202211411836.1", filed on November 11, 2022; and the Chinese patent application No. "202211412278.0", filed on November 11, 2022.

### TECHNICAL FIELD

The present invention relates to the field of antimicrobial functional polymer materials, in particular to an isobutylene-based cationic salt ionic polymer, a preparation method therefor and a use thereof, and an antimicrobial polymer material.

### BACKGROUND ART

The commercially produced isobutylene-based random copolymers are composed of two types, one is a copolymer of isobutylene and isoprene, it belongs to the unsaturated form, and the other is a copolymer of isobutylene and p-methylstyrene, it belongs to the saturated form. Both copolymers can be subjected to the bromination reaction to obtain the brominated modified products, which are brominated isobutylene-isoprene rubber (BIIR) and brominated isobutylene-p-methylstyrene rubber (BIMS), respectively. The main application areas of the two products are tire innerliners and pharmaceutical rubber plug. The commercially produced BIIR and BIMS are rubber-based elastomer products characterized by high molecular weights (weight average molecular weight Mw above 500,000g/mol) and low content of copolymerization functional monomers, a mole fraction of isoprene is less than 3%, a mole fraction of p-methylstyrene is less than 5%, and a mole fraction of functional bromine is lower than 1.5% in common copolymer.

The isobutylene-based ionic polymers in the prior art are generally prepared by using commercially available BIIR or BIMS as basic rubber , for example, the literatures "Synthesis and characterization of isobutylene-based ammonium and phosphonium bromide ionomers" (Macromolecules, 2004, 37, 7477-7483), "Quaternary ammonium BIMS ionomers" (Presented at the 163rd Technical Meeting of the Rubber Division, American Chemical Society, San Francisco, California, April 28-30, 2003) disclose that subjecting BIIR or BIMS rubbers and alkylamines, alkylphosphines, imidazoles, and the like to a melt blending reaction in a mixer at 130°C, during which a nucleophilic substitution reaction on the allyl bromide functional groups in BIIR or the benzyl bromide functional groups in BIMS is performed to obtain the ammonium salt ionic polymer, phosphonium salt ionic polymer, imidazolium salt, and other ionic polymers. Alternatively, for example, the literature "An imidazolium-functionalized isobutylene polymer having improved mechanical and barrier properties: Synthesis and characterization" (J. APPL. POLYM. SCI. 2012, DOl: 10.1002/APP. 38458) discloses that the BIIR or BIMS products are re-dissolved in an organic solvent for carrying out an ionization reaction for a long time. Due to the low content of functional monomers copolymerized in BIIR or BIMS rubbers, only a limited ionization can be implemented in the BIIR or BIMS rubbers, the molar content of ionic salts is generally less than 1%, it is difficult to widely expand their application fields, which can only be applied as one ionic rubber in the traditional vulcanized rubber product field, for example, CN112135848A. Moreover, such ionized rubber elastomers are difficult to blend simply and directly with resins, requiring specific dynamic blending vulcanization techniques to prepare rubber and plastic composite materials

US2012/148773 discloses a thermoset ionomer from brominated polyisobutylene-co-methylstyrene (BIMS) and imidazole. The reaction involves nucleophilic displacement of bromide to yield an imidazolium salt which then results in a crosslinked structure.

Bacteria, fungi, and viruses are pathogenic microorganisms that always threaten human life and health, and the novel antibacterial therapy is urgently required along with the enhancement of pathogen resistance and the continuous emergence of new pathogens. Among them, one of the important ways to cut the spreading of pathogens in the environment is to prevent the breeding of pathogenic microorganisms at the surface of objects by using antibacterial/antiviral coatings, thus the antibacterial polymer materials (e.g., antibacterial fibers, antibacterial plastics, antibacterial rubber, antibacterial coatings) have emerged in response to the proper time and conditions, and have been widely used in daily life.

Among the small molecule organic antibacterial agents, the cationic salt compounds, which have a strong positive electricity so that pathogenic microorganisms do not prone to develop drug resistance, are widely used as antibacterial agents and bactericides, surfactants and antistatic agents, such as quaternary ammonium salts, quaternary phosphonium salts, guanidinium salts, imidazolium salts, pyridinium salts, pyrimidine salts; in particular, quaternary ammonium salts as antibacterial agents and fungicides, are widely used in household washing, medical disinfection, aquaculture, industrial circulating water algaecides, and other fields, for example, the commonly used benzalkonium chloride and benzalkonium bromide, and the like, have excellent bactericidal and antibacterial effects on bacteria including gram-negative bacteria and gram-positive bacteria. However, since the small molecule antibacterial agents belong to environment-releasing materials, they are prone to loss and have a short effect time, and they may cause environmental pollution, the stronger antibacterial effect they have, the greater the toxicity is often, thereby affecting health of human or animals. In addition, the small molecule organic antibacterial agents are generally not resistant to high temperatures, are difficult to withstand the high temperature process for manufacturing the polymer materials, and they are prone to migrate and release in materials, as a result, the use of metal-type inorganic nanometer antibacterial agents is still predominant in the polymer materials field. The disadvantage of metal-type inorganic nanometer antibacterial agents is that they sterilize by releasing the metal toxicant to the environment, they are not resistant to the washing process and have a short effect time, i.e., the antibacterial properties of the material decay over time.

Although a lot of research has been conducted in recent years to prepare polymer-type cationic salt antibacterial agents, which cannot be put into large scale industrial production and practical use due to complicated preparation method, and high costs. For example, polymer materials or products are soaked in strongly oxidizing solution, or the surface of polymer materials are subjected to high energy irradiation, ozone treatment, plasma treatment, and the like to generate active centers on the surface, causing the graft copolymerization of quaternary ammonium salt monomers. However, such surface treatment method easily leads to degradation, cross-linking of polymer material surface, thereby affecting or even destroying mechanical properties of materials, and the grafting amount is unstable and has poor repeatability. Alternatively, the small molecule quaternary ammonium salt can be grafted and loaded on a filler through chemical reaction, an antibacterial filler is then added in the polymer materials, but the loading amount is unstable, and the filler is affected by the dispersity of the filler in polymer materials, it is difficult to exert the satisfactory antibacterial effect. Alternatively, the antibacterial polymer material is prepared directly through copolymerization reaction by grafting quaternary ammonium salt onto the comonomers which can participate in polymer synthesis, but on the one hand, the preparation process of polymer is further complicated, the production costs are increased, and on the other hand, the polymerization reaction of polymer is affected, thus the process cannot be put into the practical use.

### SUMMARY OF the present invention

The present invention aims to overcome the defects in the prior art that the isobutylene-based copolymer has a low content of functional groups and a very limited degree of ionization, resulting in the limited application field of the isobutylene-based cationic salt polymer, and provides an isobutylene-based cationic salt ionic polymer, a preparation method therefor and a use thereof, the isobutylene-based cationic salt ionic polymer comprises a macromolecular backbone comprising main structural units provided by isobutylene and functional structural units provided by alkyl styrene, and the cationic salt functional groups are contained in both the side group and main chain of the polymer, so that the polymer has a satisfactory higher degree of ionization, can be used as an antibacterial agent for preparing antibacterial polymer materials having stable, durable and safety antibacterial properties with low toxicity, such as antibacterial plastics, antibacterial rubber, antibacterial fibers, and antibacterial coatings, and can effectively suppress and kill bacteria, fungi, and viruses.

In order to achieve the above objects, the first aspect of the present invention discloses an isobutylene-based cationic salt ionic polymer comprising a structural unit A, a structural unit B, and a structural unit C;
the structural unit A has a structure represented by formula (2) and/or formula (3), and optionally a structure represented by formula (1); the structural unit B has a structure represented by formula (4); and the structural unit C has a structure represented by formula (5); 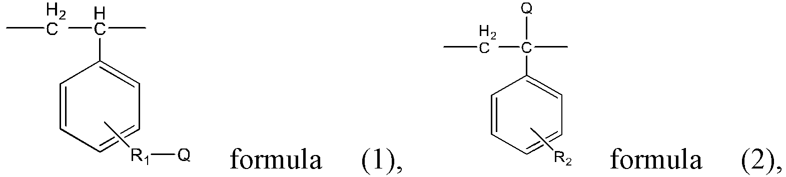 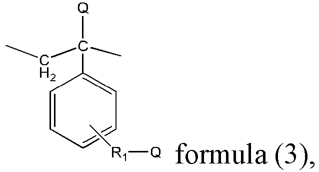 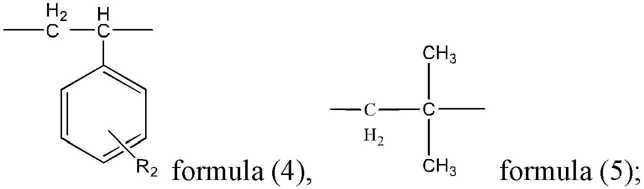
wherein R₁ is C₁-C₄ alkylene, and R₂ is C₁-C₄ alkyl;
Q is 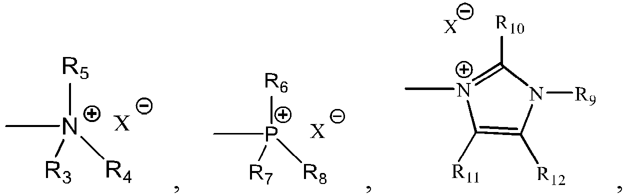 or 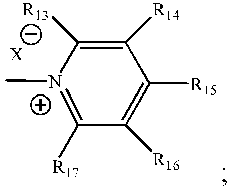
wherein R₃, R₄, and R₅ are each independently C₁-C₂₀ straight chain alkyl, C₁-C₂₀ branched chain alkyl, or C₆-C₂₀ aryl;
R₆, R₇, and R₈ are each independently C₁-C₁₀ straight chain alkyl, C₁-C₁₀ branched chain alkyl, C₃-C₁₀ cycloalkyl, or C₆-C₁₀ aryl;
R₉ is hydrogen, C₁-C₂₀ straight chain alkyl; R₁₀, R₁₁, and R₁₂ are each independently hydrogen, halogen atom, C₁-C₁₀ straight chain alkyl, C₁-C₁₀ branched chain alkyl, hydroxyl, nitro, -(CH₂)ₙ-NH₂, cyano group, or C₆-C₁₀ aryl; n is an integer between 0 and 5;
R₁₃, R₁₄, R₁₅, R₁₆, and R₁₇ are each independently hydrogen, halogen atom, C₁-C₂₀ straight chain alkyl, C₁-C₂₀ branched chain alkyl, nitro, amino, or cyano group;
X is Cl, or Br.

The second aspect of the present invention discloses a method preparing the isobutylene-based cationic salt ionic polymer comprising:
(1) dissolving the polymer in an organic solvent to obtain a polymer solution, adding a halogen to the polymer solution to carry out a halogenation reaction to obtain a halogenated polymer solution;
(2) adding at least one of a tertiary amine compound, a tertiary phosphine compound, an imidazole compound, and a pyridine compound to the halogenated polymer solution to perform an ionization reaction to obtain the isobutylene-based cationic salt ionic polymer;
   the polymer is a random copolymer of isobutylene and alkyl styrene;
   the halogenation reaction is carried out under irradiation of a visible light, the visible light has a pulsed type light emission mode.

The third aspect of the present invention discloses an isobutylene-based cationic salt ionic polymer prepared with the aforementioned method.

The fourth aspect of the present invention discloses a use of the aforementioned isobutylene-based cationic salt ionic polymer as an antibacterial agent.

The fifth aspect of the present invention discloses the aforementioned isobutylene-based cationic salt ionic polymer used for inhibiting and killing at least one of bacteria, fungi, and viruses.

The sixth aspect the present invention discloses an antibacterial polymer material comprising the aforementioned isobutylene-based cationic salt ionic polymer.

Due to the aforementioned technical solution, the isobutylene-based cationic salt polymer, a preparation method therefor, a use thereof, and the antibacterial agent polymer material disclose by the present invention produce the favorable effects as follows:
the isobutylene-based cationic salt ionic polymer disclosed by the present invention comprises a macromolecular backbone comprising main structural units provided by isobutylene and functional structural units provided by alkyl styrene, and the cationic salt functional groups are contained in both the side group and main chain of the polymer, so that the polymer has a satisfactory higher degree of ionization, can be used as an antibacterial agent for preparing antibacterial polymer materials having stable, durable and safe antibacterial properties with low toxicity, such as antibacterial plastics, antibacterial rubber, antibacterial fibers, and antibacterial coatings, and can effectively suppress and kill bacteria, fungi, and viruses.

### BRIEF DESCRIPTION OF THE DRAWINGS

FIG. 1a illustrates a nuclear magnetic hydrogen spectrum of the brominated isobutylene-p-methylstyrene copolymer XP-I-1 in Example I-1;
FIG. 1b illustrates a nuclear magnetic hydrogen spectrum of the isobutylene-based quaternary ammonium salt ionic polymer A-I-1 in Example I-1;
FIG. 1c illustrates a thermal weight loss diagram of the isobutylene-p-methylstyrene copolymer P-1-1;
FIG. 1d illustrates a thermal weight loss diagram of the brominated isobutylene-p-methylstyrene copolymer XP-I-1;
FIG. 1e illustrates a thermal weight loss diagram of the isobutylene-based quaternary ammonium salt ionic polymer A-I-1 in Example I-1;
FIG. 2a illustrates a nuclear magnetic hydrogen spectrum of the brominated isobutylene-p-methylstyrene copolymer XP-II-1 in Example II-1;
FIG. 2b illustrates a nuclear magnetic hydrogen spectrum of the isobutylene-based quaternary phosphonium salt ionic polymer A-II-1 in Example II-1;
FIG. 2c illustrates a thermal weight loss diagram of the isobutylene-p-methylstyrene copolymer P-II-1;
FIG. 2d illustrates a thermal weight loss diagram of the brominated isobutylene-p-methylstyrene copolymer XP-II-1;
FIG. 2e illustrates a thermal weight loss diagram of the isobutylene-based quaternary phosphonium salt ionic polymer in Example II-1;
FIG. 3a illustrates a nuclear magnetic hydrogen spectrum of the brominated isobutylene-p-methylstyrene copolymer XP-III-1 in Example III-1;
FIG. 3b illustrates a nuclear magnetic hydrogen spectrum of the isobutylene-based imidazolium salt ionic polymer A-III-1 in Example III-1;
FIG. 3c illustrates a thermal weight loss diagram of the isobutylene-p-methylstyrene copolymer P-III-1;
FIG. 3d illustrates a thermal weight loss diagram of the brominated isobutylene-p-methylstyrene copolymer XP-III-1 in Example III-1;
FIG. 3e illustrates a thermal weight loss diagram of the isobutylene-based imidazolium salt ionic polymer A-III-l in Example III-1;
FIG. 4a illustrates a nuclear magnetic hydrogen spectrum of the brominated isobutylene-p-methylstyrene copolymer XP-IV-1 in Example IV-1;
FIG. 4b illustrates a nuclear magnetic hydrogen spectrum of the isobutylene-based pyridinium salt ionic polymer A-IV-1 in Example IV-1;
FIG. 4c illustrates a thermal weight loss diagram of the isobutylene-p-methylstyrene copolymer P-IV-1;
FIG. 4d illustrates a thermal weight loss diagram of the brominated isobutylene-p-methylstyrene copolymer XP-IV-1 in Example IV-1;
FIG. 4e illustrates a thermal weight loss diagram of the isobutylene-based pyridinium salt ionic polymer in Example IV-1.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

In the first aspect, the present invention discloses an isobutylene-based cationic salt ionic polymer comprising a structural unit A, a structural unit B, and a structural unit C;
the structural unit A has a structure represented by formula (2) and/or formula (3), and optionally a structure represented by formula (1); the structural unit B has a structure represented by formula (4); and the structural unit C has a structure represented by formula (5); 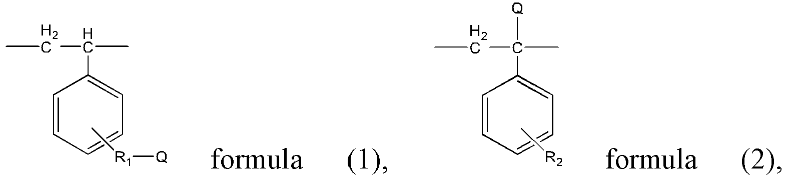 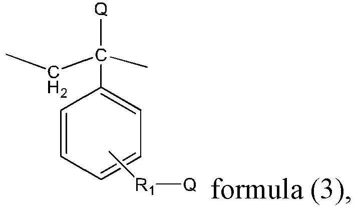 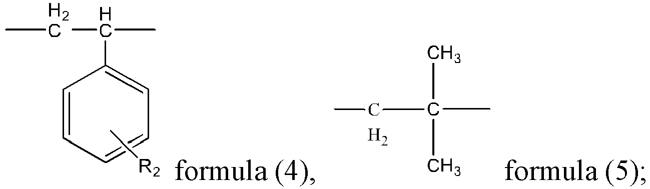
wherein R₁ is C₁-C₄ alkylene, and R₂ is C₁-C₄ alkyl;
Q is 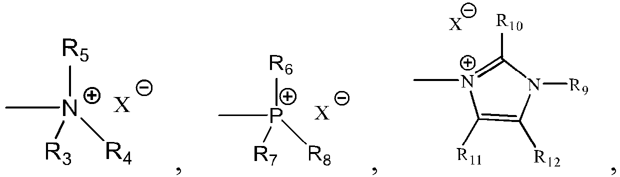 or 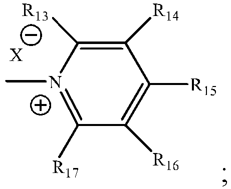
wherein R₃, R₄, and R₅ are each independently C₁-C₂₀ straight chain alkyl, C₁-C₂₀ branched chain alkyl, or C₆-C₂₀ aryl;
R₆, R₇, and R₈ are each independently C₁-C₁₀ straight chain alkyl, C₁-C₁₀ branched chain alkyl, C₃-C₁₀ cycloalkyl, or C₆-C₁₀ aryl;
R₉ is hydrogen, C₁-C₂₀ straight chain alkyl; R₁₀, R₁₁, and R₁₂ are each independently hydrogen, halogen atom, C₁-C₁₀ straight chain alkyl, C₁-C₁₀ branched chain alkyl, hydroxyl, nitro, -(CH₂)ₙ-NH₂, cyano group, or C₆-C₁₀ aryl; n is an integer between 0 and 5;
R₁₃, R₁₄, R₁₅, R₁₆, and R₁₇ are each independently hydrogen, halogen atom, C₁-C₂₀ straight chain alkyl, C₁-C₂₀ branched chain alkyl, nitro, amino, or cyano group;
X is Cl, or Br.

In the present invention, the isobutylene-based cationic salt ionic polymer comprises a macromolecular backbone comprising main structural units provided by isobutylene and functional structural units provided by alkyl styrene, and the cationic salt functional groups are simultaneously introduced in both the side group and main chain of alkyl styrene units in the polymer, such that the polymer has a satisfactory higher degree of ionization, and contains a high content of cationic salt functional groups, can be used as an antibacterial agent for preparing antibacterial polymer materials having stable, durable and safe antibacterial properties with low toxicity, such as antibacterial plastics, antibacterial rubber, antibacterial fibers, and antibacterial coatings, and can effectively suppress and kill bacteria, fungi, and viruses.

In a specific embodiment of the present invention, R₁ is methylene or ethydene, preferably methylene; R₂ is methyl or ethyl, preferably methyl; R₃, R₄, and R₅ are each independently C₁-C₁₈ straight chain alkyl or C₆-C₉ aryl, preferably methyl, C₈-C₁₆ straight chain alkyl, or phenyl; and X is Br.

In a specific embodiment of the present invention, R₁ is methylene or ethydene, more preferably methylene; R₂ is methyl or ethyl, more preferably methyl; R₆, R₇, and R₈ are each independently C₁-C₈ straight chain alkyl, C₅-C₈ cycloalkyl, or C₆-C₈ aryl, more preferably C₁-C₈ straight chain alkyl, cyclopentyl, cyclohexyl, or phenyl; and X is Br.

In a specific embodiment of the present invention, R₁ is methylene or ethydene, more preferably methylene; R₂ is methyl or ethyl, more preferably methyl; R₉ is hydrogen, C₁-C₁₈ straight chain alkyl, more preferably hydrogen, C₁-C₁₆ straight chain alkyl; R₁₀, R₁₁, and R₁₂ are each independently hydrogen, halogen atom, C₁-C₅ straight chain alkyl, C₁-C₅ branched chain alkyl, hydroxyl, nitro, -(CH₂)ₙ-NH₂, cyano group, or C₆-C₈ aryl, n is an integer from 0 to 3, more preferably each independently hydrogen, halogen atom, C₁-C₄ straight chain alkyl, hydroxyl, nitro, cyano group, amino, or phenyl; and X is Br.

In a specific embodiment of the present invention, R₁ is methylene or ethydene, more preferably methylene; R₂ is methyl or ethyl, more preferably methyl; R₁₃, R₁₄, R₁₅, R₁₆, and R₁₇ are each independently hydrogen, halogen, C₁-C₁₅ straight chain alkyl, C₁-C₁₃ branched chain alkyl, nitro, amino, or cyano group, more preferably hydrogen, halogen, C₁-C₁₀ straight chain alkyl, amino, or cyano group; X is Br.

According to the present invention, a content of cationic salt groups is within the range of 1.5-35mol%, based on the total molar amount of the polymer.

When the content of cationic salt groups in the polymer satisfys the aforementioned range, the antimicrobial properties of the polymer materials comprising the polymer can be further improved.

Further, in a specific embodiment of the present invention, the content of cationic salt groups is within the range of 2.5-25mol%, based on the total molar amount of the polymer.

According to the present invention, a content of side-chain benzyl cationic salt groups is within the range of 1-20mol%, and a content of main chain tertiary carbon cationic salt groups is within the range of 0.5-15mol%, based on the total molar amount of the polymer.

In the present invention, when the contents of side-chain benzyl cationic salt groups and main chain tertiary carbon cationic salt groups in the polymer satisfy the aforementioned ranges, the polymer has more effective bactericidal and antibacterial properties.

In the present invention, the main chain tertiary carbon cationic salt groups refer to the cationic salt groups on the main chain of alkyl styrene, including the cationic salt groups located on the main chain of alkyl styrene of the structural units represented by formula (2) and the structural units represented by formula (3). According to the present invention, the content of the main chain cationic salt groups refers to the sum of a content of the cationic salt groups in the structural units represented by formula (2) and a content of the cationic salt groups in the structural units represented by formula (3) in the main chain.

In the present invention, the side-chain benzyl cationic salt groups refers to the cationic salt groups located on a side chain of the alkyl styrene, including the cationic salt groups located on the side chain of alkyl styrene of the structural units represented by formula (1) and the the structural units represented by formula (3). According to the present invention, the content of the side-chain benzyl cationic salt groups refers to the sum of a content of the cationic salt groups in the structural units represented by formula (1) and a content of the cationic salt groups in the structural units represented by formula (3) in the side chain.

Further, the content of side-chain benzyl cationic salt groups is within the range of 1.5-15mol%, and the content of main chain tertiary carbon cationic salt groups is within the range of 1-10mol%, based on the total molar amount of the polymer.

According to the present invention, the structural unit A is contained in an amount of 1-20mol%, the structural unit B is contained in an amount of 0.5-10mol%, and the structural unit C is contained in an amount of 75-97mol%, based on the total molar amount of the polymer.

In the present invention, the isobutylene-based cationic salt ionic polymer comprises structural unit A represented by formula (3), the structural unit A comprises both side chain cationic salt groups and main chain cationic salt groups, and finally the total content of cationic salt groups in the isobutylene-based cationic salt ionic polymer is higher than the content of structural unit A.

In the present invention, the high content of structural unit A in the isobutylene-based cationic salt ionic polymer enables the polymer to introduce more cationic salt functional groups, the higher content of cationic salt functional groups in the finally produced polymer enables the polymer to be used as an antibacterial agent for preparing antibacterial polymer materials having stable, durable and safe antibacterial properties with low toxicity, such as antibacterial plastics, antibacterial rubber, antibacterial fibers, and antibacterial coatings, and can effectively suppress and kill bacteria, fungi, germs and the like.

Further, the structural unit A is contained in an amount of 2-15mol%, the structural unit B is contained in an amount of 1-5mol%, and the structural unit C is contained in an amount of 80-95mol%, based on the total molar amount of the polymer.

According to the present invention, the isobutylene-based cationic salt polymer has a thermal decomposition temperature within the range of 150-550°C.

According to the present invention, a temperature for 5wt% thermal weight loss of the isobutylene-based cationic salt ionic polymer is ≥ 170°C.

In the present invention, the isobutylene-based cationic salt ionic polymer has a high thermal decomposition temperature and a high temperature for 5wt% thermal weight loss, so that the polymer meets the requirements of the hot-working processing of polymer materials, can be directly used as antibacterial agent with the polymer materials for preparing antibacterial polymer materials, such as antibacterial plastics, antibacterial rubber, antibacterial fibers, antibacterial coatings.

Further, the isobutylene-based cationic salt polymer has a thermal decomposition temperature within the range of 180-500°C.

Further, the temperature for 5wt% thermal weight loss of the isobutylene-based cationic salt ionic polymer is ≥ 180°C.

### Specific embodiment I

The isobutylene-based cationic salt ionic polymer is an isobutylene-based quaternary ammonium salt ionic polymer, wherein the polymer comprising a structural unit A, a structural unit B, and a structural unit C;
the structural unit A has a structure represented by formula (2-1) and/or (3-1) and optionally a structure represented by formula (1-1); the structural unit B has a structure represented by formula (4-1); and the structural unit C has a structure represented by formula (5-1); 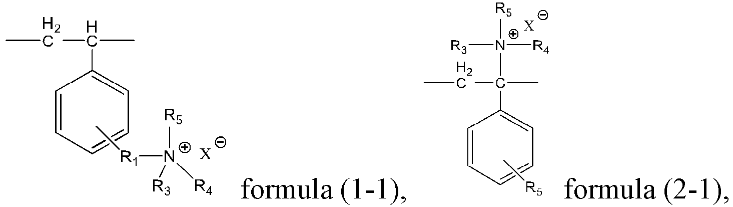 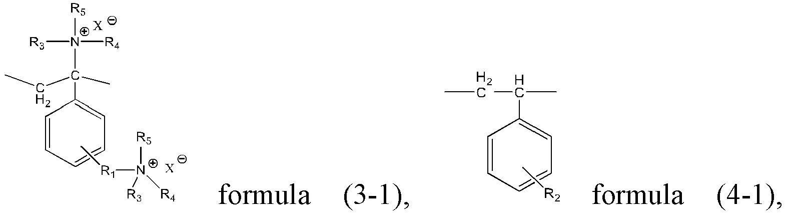 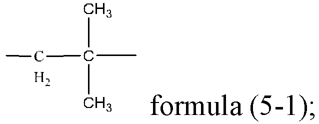
wherein R₁ is C₁-C₄ alkylene; R₂ is C₁-C₄ alkyl; R₃, R₄, and R₅ are each independently C₁-C₂₀ straight chain alkyl, C₁-C₂₀ branched chain alkyl, or C₆-C₂₀ aryl; and X is Cl, or Br.

Further, R₁ is methylene or ethydene; R₂ is methyl or ethyl; R₃, R₄, and R₅ are each independently C₁-C₁₈ straight chain alkyl or C₆-C₉ aryl; X is Br.

Further preferably, R₁ is methylene; R₂ is methyl; R₃, R₄, and R₅ are each independently methyl, C₈-C₁₆ straight chain alkyl, or phenyl; and X is Br.

According to the present invention, a quaternary ammonium salt groups are contained in an amount of 1.5-35 mol%, based on the total molar amount of the polymer.

Further, the quaternary ammonium salt groups are contained in an amount of 2.5-25 mol%, based on the total molar amount of the polymer.

According to the present invention, a content of side-chain benzyl cationic salt groups is within the range of 1-20mol%, and a content of main chain tertiary carbon cationic salt groups is within the range of 0.5-15 mol%, based on the total molar amount of the polymer.

Further, the content of side-chain benzyl cationic salt groups is within the range of 1.5-15mol%, and the content of main chain tertiary carbon cationic salt groups is within the range of 1-10mol%, based on the total molar amount of the polymer.

According to the present invention, the structural unit A is contained in an amount of 1-20mol%, the structural unit B is contained in an amount of 0.5-10mol%, and the structural unit C is contained in an amount of 75-97mol%, based on the total molar amount of the polymer.

Further, the structural unit A is contained in an amount of 2-15mol%, the structural unit B is contained in an amount of 1-5mol%, and the structural unit C is contained in an amount of 80-95mol%, based on the total molar amount of the polymer.

According to the present invention, the isobutylene-based quaternary ammonium salt ionic polymer has a thermal decomposition temperature within the range of 150-500°C.

According to the present invention, the temperature for 5wt% thermal weight loss of the isobutylene-based quaternary ammonium salt ionic polymer is ≥ 170°C.

In the present invention, the isobutylene-based quaternary ammonium salt ionic polymer has a high thermal decomposition temperature and a high temperature for 5wt% thermal weight loss, so that the polymer meets the requirements of the hot-working processing of polymer materials, can be directly used as antibacterial agent with the polymer materials for preparing the antibacterial polymer materials, such as antibacterial plastics, antibacterial rubber, antibacterial fibers, antibacterial coatings.

Further, the isobutylene-based quaternary ammonium salt ionic polymer has a thermal decomposition temperature within the range of 180-450°C.

Further, the temperature for 5wt% thermal weight loss of the isobutylene-based quaternary ammonium salt ionic polymer is ≥ 180°C.

### Specific embodiment II

The isobutylene-based cationic salt ionic polymer is an isobutylene-based quaternary phosphonium salt ionic polymer, wherein the polymer comprises a structural unit A, a structural unit B and a structural unit C;
the structural unit A has a structure represented by formula (2-2) and/or (3-2) and optionally a structure represented by formula (1-2); the structural unit B has a structure represented by formula (4-2); and the structural unit C has a structure represented by formula (5-2); 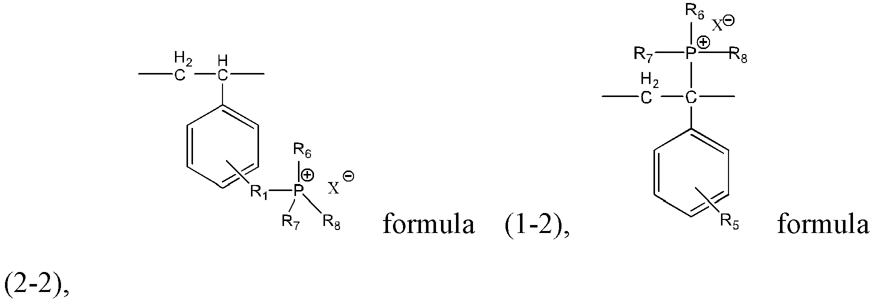 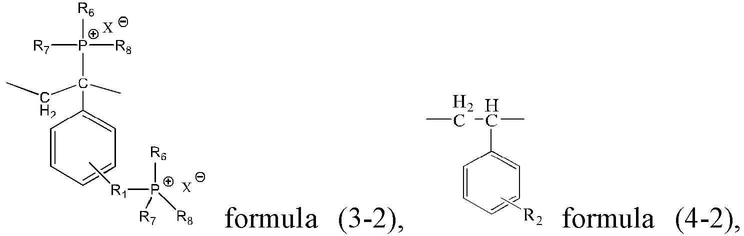 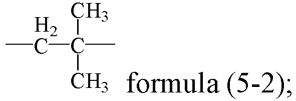
wherein R₁ is C₁-C₄ alkylene; R₂ is C₁-C₄ alkyl; R₆, R₇, and R₈ are each independently C₁-C₁₀ straight chain alkyl, C₁-C₁₀ branched chain alkyl, C₃-C₁₀ cycloalkyl, or C₆-C₁₀ aryl; and X is Cl, or Br.

Further , R₁ is methylene or ethydene; R₂ is methyl or ethyl; R₆, R₇, and R₈ are each independently C₁-C₁₈ straight chain alkyl or C₆-C₉ aryl; X is Br.

Further preferably, R₁ is methylene; R₂ is methyl; R₆, R₇, and R₈ are each independently C₁-C₈ straight chain alkyl, cyclopentyl, cyclohexyl, or phenyl; and X is Br.

According to the present invention, a quaternary phosphonium salt functional groups are contained in an amount of 1.5-23mol%, based on the total molar amount of the polymer.

Further, the quaternary phosphonium salt functional groups are contained in an amount of 3-18mol%, based on the total molar amount of the polymer.

According to the present invention, a content of side-chain benzyl quaternary phosphonium salt functional groups is within the range of 1-15mol%, and a content of main chain tertiary carbon quaternary phosphonium salt functional groups is within the range of 0.5-8mol%, based on the total molar amount of the polymer.

Further, the content of side-chain benzyl quaternary phosphonium salt functional groups is within the range of 2-13mol%, and the content of main chain tertiary carbon quaternary phosphonium salt functional groups is within the range of 1-5mol%, based on the total molar amount of the polymer.

According to the present invention, the structural unit A is contained in an amount of 1-20mol%, the structural unit B is contained in an amount of 0.5-10mol%, and the structural unit C is contained in an amount of 75-97mol%, based on the total molar amount of the polymer.

Further, the structural unit A is contained in an amount of 2-15mol%, the structural unit B is contained in an amount of 1-5mol%, and the structural unit C is contained in an amount of 80-95mol%, based on the total molar amount of the polymer.

According to the present invention, the isobutylene-based quaternary phosphonium salt ionic polymer has a thermal decomposition temperature within the range of 150-500°C.

According to the present invention, the temperature for 5wt% thermal weight loss of the isobutylene-based quaternary phosphonium salt ionic polymer is ≥ 200°C.

Preferably, the isobutylene-based quaternary phosphonium salt ionic polymer has a thermal decomposition temperature within the range of 200-450°C.

Preferably, the temperature for 5wt% thermal weight loss of the isobutylene-based quaternary phosphonium salt ionic polymer is ≥ 220°C.

### Specific embodiment III

In a specific embodiment of the present invention, the isobutylene-based cationic salt ionic polymer is an isobutylene-based imidazolium salt ionic polymer, wherein the polymer comprises a structural unit A, a structural unit B, and a structural unit C;
the structural unit A has a structure represented by formula (2-3) and/or (3-3) and optionally a structure represented by formula (1-3); the structural unit B has a structure represented by formula (4-3); and the structural unit C has a structure represented by formula (5-3); 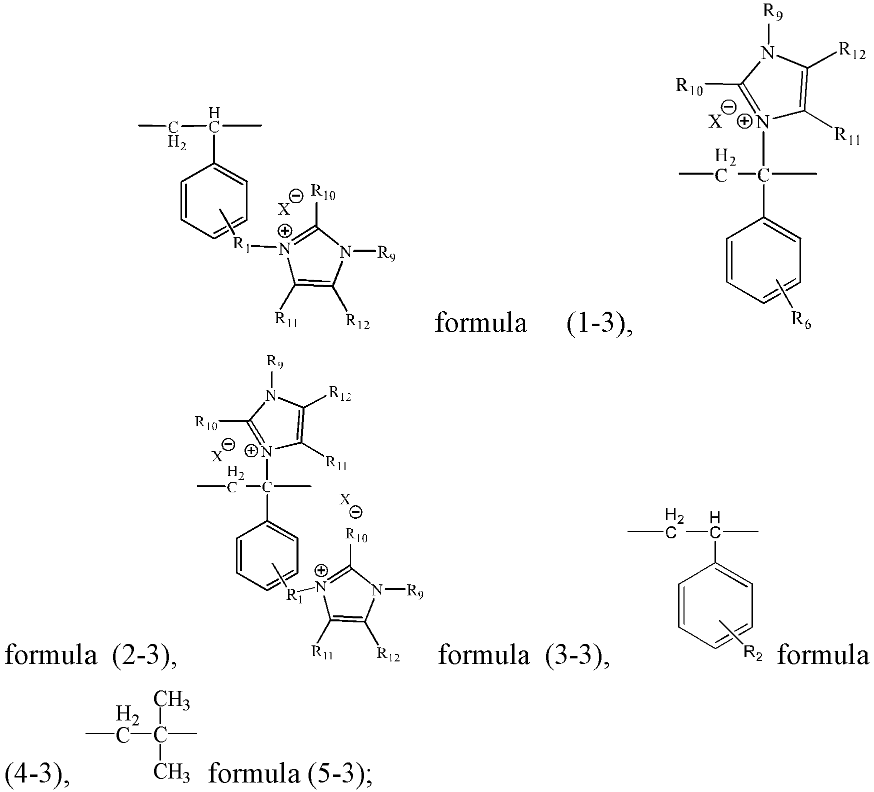
wherein R₁ is C₁-C₄ alkylene; R₂ is C₁-C₄ alkyl; R₉ is hydrogen, C₁-C₂₀ straight chain alkyl; R₁₀, R₁₁, and R₁₂ are each independently hydrogen, halogen atom, C₁-C₁₀ straight chain alkyl, C₁-C₁₀ branched chain alkyl, hydroxyl, nitro, -(CH₂)ₙ-NH₂, cyano group, or C₆-C₁₀ aryl; n is an integer between 0 and 5; X is Cl, or Br.

Preferably, R₁ is methylene or ethydene; R₂ is methyl or ethyl; R₉ is hydrogen, C₁-C₁₈ straight chain alkyl; R₁₀, R₁₁, and R₁₂ are each independently hydrogen, halogen atom, C₁-C₅ straight chain alkyl, C₁-C₅ branched chain alkyl, hydroxyl, nitro, -(CH₂)ₙ-NH₂, cyano group, or C₆-C₈ aryl, n is an integer from 0 to 3; X is Br.

Further preferably, R₁ is methylene; R₂ is methyl; R₉ is hydrogen, C₁-C₁₆ straight chain alkyl; R₁₀, R₁₁, and R₁₂ are each independently hydrogen, halogen atom, C₁-C₄ straight chain alkyl, hydroxyl, nitro, cyano group, amino, or phenyl; and X is Br.

According to the present invention, a imidazolium salt groups are contained in an amount of 1.5-23mol%, based on the total molar amount of the polymer.

Preferably, the imidazolium salt groups are contained in an amount of 3-18 mol%, based on the total molar amount of the polymer.

According to the present invention, a content of side-chain benzyl imidazolium salt groups is within the range of 1-15mol%, and a content of main chain tertiary carbon imidazolium salt functional groups is within the range of 0.5-8 mol%, based on the total molar amount of the polymer.

Preferably, the content of side-chain benzyl imidazolium salt groups is within the range of 2-13mol%, and the content of main chain tertiary carbon imidazolium salt functional groups is within the range of 1-5 mol%, based on the total molar amount of the polymer.

According to the present invention, the structural unit A is contained in an amount of 1-20mol%, the structural unit B is contained in an amount of 0.5-10mol%, and the structural unit C is contained in an amount of 75-97mol%, based on the total molar amount of the polymer.

Preferably, the structural unit A is contained in an amount of 2-15mol%, the structural unit B is contained in an amount of 1-5mol%, and the structural unit C is contained in an amount of 80-95mol%, based on the total molar amount of the polymer.

According to the present invention, the isobutylene-based imidazolium salt ionic polymer has a thermal decomposition temperature within the range of 150-550°C.

According to the present invention, a temperature for 5wt% thermal weight loss of the isobutylene-based imidazolium salt ionic polymer is ≥ 200°C.

Preferably, the isobutylene-based imidazolium salt ionic polymer has a thermal decomposition temperature within the range of 200-500°C.

Preferably, the temperature for 5wt% thermal weight loss of the isobutylene-based imidazolium salt ionic polymer is ≥ 220°C.

### Specific embodiment IV

In a specific embodiment of the present invention, the isobutylene-based cationic salt ionic polymer is an isobutylene-based pyridinium salt ionic polymer, wherein the polymer comprises a structural unit A, a structural unit B, and a structural unit C;
the structural unit A has a structure represented by formula (2-4) and/or (3-4) and optionally a structure represented by formula (1-4); the structural unit B has a structure represented by formula (4-4); and the structural unit C has a structure represented by formula (5-4); 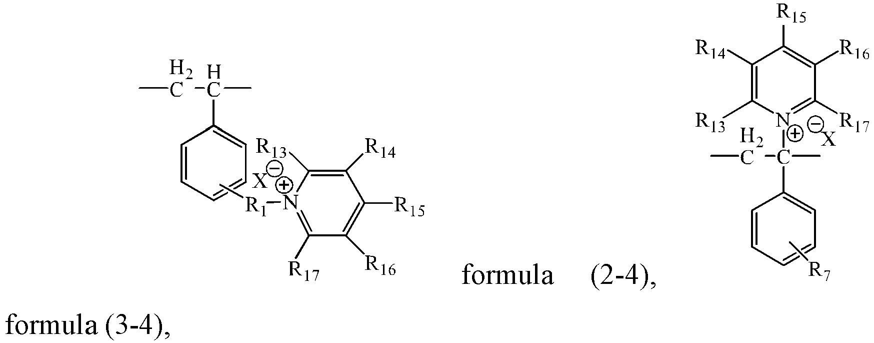 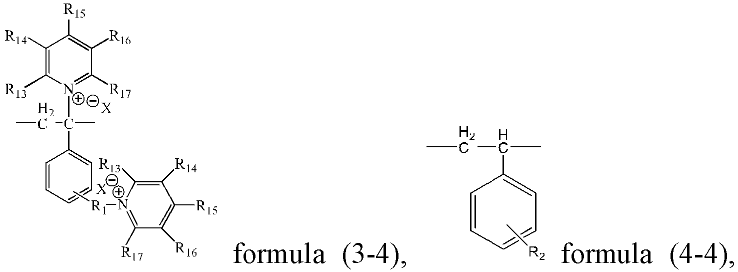 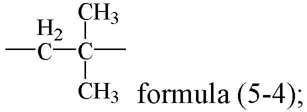
wherein R₁ is C₁-C₄ alkylene; R₂ is C₁-C₄ alkyl; R₁₃, R₁₄, R₁₃, R₁₆, and R₁₇ are each independently hydrogen, halogen, C₁-C₂₀ straight chain alkyl, C₁-C₂₀ branched chain alkyl, nitro, amino, or cyano group; and X is Cl, or Br.

Further , R₁ is methylene or ethydene; R₂ is methyl or ethyl; R₁₃, R₁₄, R₁₅, R₁₆, and R₁₇ are each independently hydrogen, halogen, C₁-C₁₅ straight chain alkyl, C₁-C₁₅ branched chain alkyl, nitro, amino, or cyano group; and X is Br.

Further preferably, R₁ is a methylene; R₂ is a methyl; R₁₃, R₁₄, R₁₅, R₁₆, and R₁₇ are each independently hydrogen, halogen, C₁-C₁₀ straight chain alkyl, amino, or cyano group; X is Br.

According to the present invention, the structural unit A is contained in an amount of 1-20mol%, the structural unit B is contained in an amount of 0.5-10mol%, and the structural unit C is contained in an amount of 75-97mol%, based on the total molar amount of the polymer.

Preferably, the structural unit A is contained in an amount of 2-15mol%, the structural unit B is contained in an amount of 1-5mol%, and the structural unit C is contained in an amount of 80-95mol%, based on the total molar amount of the polymer.

According to the present invention, a pyridinium salt functional groups are contained in an amount of 1.5-35 mol%, based on the total molar amount of the polymer.

Preferably, the pyridinium salt functional groups are contained in an amount of 3-25 mol%, based on the total molar amount of the polymer.

According to the present invention, a content of side-chain benzyl pyridinium salt groups is within the range of 1-20mol%, and a content of main chain tertiary carbon pyridinium salt groups is within the range of 0.5-15 mol%, based on the total molar amount of the polymer.

Preferably, the content of side-chain benzyl pyridinium salt groups is within the range of 1.5-15mol%, and the content of main chain tertiary carbon pyridinium salt groups is within the range of 1-10 mol%, based on the total molar amount of the polymer.

According to the present invention, the isobutylene-based pyridinium salt ionic polymer has a thermal decomposition temperature within the range of 100-500°C.

According to the present invention, a temperature for 5wt% thermal weight loss of the isobutylene-based pyridinium salt ionic polymer is ≥ 180°C.

Preferably, the isobutylene-based pyridinium salt ionic polymer has a thermal decomposition temperature within the range of 150-450°C.

Preferably, the temperature for 5wt% thermal weight loss of the isobutylene-based pyridinium salt ionic polymer is ≥ 200°C.

The second aspect of the present invention discloses a method for preparing the isobutylene-based cationic salt ionic polymer comprising :
(1) dissolving the polymer in an organic solvent to obtain a polymer solution, adding a halogen to the polymer solution to carry out a halogenation reaction to obtain a halogenated polymer solution;
(2) adding at least one of a tertiary amine compound, a tertiary phosphine compound, an imidazole compound, and a pyridine compound to the halogenated polymer solution to perform an ionization reaction to obtain the isobutylene-based cationic salt ionic polymer;

the polymer is a random copolymer of isobutylene and alkyl styrene;
the halogenation reaction is carried out under irradiation of a visible light, the visible light has a pulsed type light emission mode.

In the present invention, a process for halogenating a random copolymer of isobutylene and alkyl styrene is performed under the irradiation of visible light, particularly the visible light has a pulsed type light emission mode, it can not only provide the polymer system with high purity, control the halogenation reaction rate, reduce the probability of side reactions of halogenation, but more importantly, it can regulate and control the selectivity of halogenation reaction, obtain the high efficiency and high degree of halogenation reaction, thereby preparing the isobutylene-based cationic salt ionic polymer according to the first aspect of the present invention, the polymer contains cationic salt functional groups in both side group and main chain, such that the polymer has a high degree of ionization, and the polymer has a high content of cationic salt functional groups, the polymer can be used as an antibacterial agent for preparing antibacterial polymer materials having stable, durable and safe antibacterial properties with low toxicity, such as antibacterial plastics, antibacterial rubber, antibacterial fibers, and antibacterial coatings, and can effectively suppress and kill bacteria, fungi, germs and the like.

In the present invention, a polymer solution is subjected to a halogenation reaction using the process in step (1), the structural units provided by an alkyl styrene in a polymer macromolecular chain are subjected to a halogen substitution reaction, and it is possible to cause that both an alkyl hydrogen on an alkyl styrene benzene ring and a main chain tertiary carbon hydrogen connected with the benzene ring carry out a halogenation reaction, thereby forming a side group alkyl halide structure and a main chain tertiary carbon halide structure in the polymer macromolecular chain, in particular, after the halogenation reaction, the structural units provided by the alkyl styrene form three structures as follows:

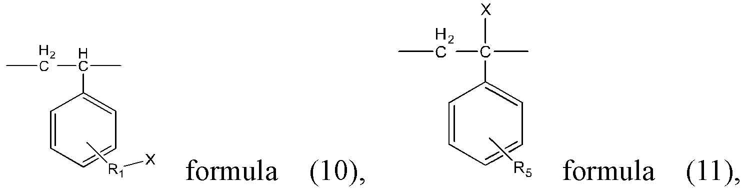

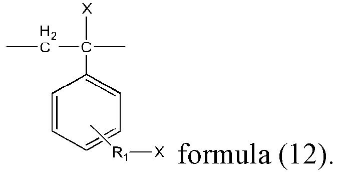

Further, the present invention triggers a halogenation reaction by using a visible light within a specific wavelength range, so that the halogenation reaction is characterized by a highly controllable, low side-reaction and high selectivity, in particular, the visible light within a specific wavelength refers to the light wave within the yellow to red wave range (i.e., the light length is from 560 to 630nm), preferably a light-emitting diode (LED) light source. In the present invention, the light source has an output power of 10-200W.

In the present invention, the pulsed type light emission refers to that the light source emits light waves and stops emitting light waves alternately with an equal time difference, in particular, the pulsed type light emission has a pulse time within the range of 5-40s, preferably 10-30s.

In the present invention, a use of the light irradiation and halogenation method of the present invention can achieve a halogenation reaction efficiency over 80%, preferably over 90%.

In the present invention, halogenation reaction efficiency refers to that for a halogenation substitution reaction carried out according to a free radical mechanism, when 100% of halogen undergoes hydrogen substitution reaction, theoretically 50% of the halogen is substituted on the polymer, the ratio of the actually measured halogen content in the polymer to the theoretical halogen content is the halogenation reaction efficiency.

According to the present invention, the content of structural unit provided by alkyl styrene is within the range of 3-25mol%, and the content of structural unit provided by isobutylene is within the range of 75-97mol%, based on the total molar amount of the polymer.

Preferably, the content of structural unit provided by alkyl styrene is within the range of 5-20mol%, and the content of structural unit provided by isobutylene is within the range of 80-95mol%, based on the total molar amount of the polymer.

According to the present invention, the polymer has a weight average molecular weight Mw within the range of 1×10⁴g/mol-1×10⁵g/mol, and a molecular weight distribution coefficient within the range of 2-3.5.

Preferably, the polymer has a weight average molecular weight Mw within the range of 2×10⁴g/mol-8×10⁴g/mol; and a molecular weight distribution coefficient within the range of 2.2-3.

According to the present invention, a content of aluminum ions in said polymer is less than 10ppm, preferably less than 5ppm.

In the present invention, the kind of the organic solvent is not particularly limited, it may be the commonly used organic solvent in the art, preferably at least one of C₆-C₁₀ straight chain alkyl, C₆-C₁₀ cycloalkyl, C₁-C₄ halogenated alkane; wherein the straight-chain alkane comprises at least one of n-hexane, n-heptane, n-octane, n-nonane, and n-decane; the cycloalkane includes cyclohexane; and the halogenated alkane comprises at least one of dichloromethane, trichloromethane, and tetrachloromethane.

According to the present invention, the molar ratio of the polymer to the halogen is 1: (0.5-2), preferably 1: (0.8-1.5), based on the molar content of the structural unit provided by alkyl styrene.

In the present invention, preferably, the halogen is used after being diluted with an organic solvent halogenated alkane, and there is no particular limited on the dilution concentration, as long as it facilitates control of the halogenation reaction.

In the present invention, the halogenation reaction is carried out in an environment away from light, and the temperature of halogenation reaction is not particularly required, for example room temperature.

According to the present invention, the halogen is preferably mixed with an organic solvent to obtain a halogen solution, and the halogen solution is dropwise added to the polymer solution for carrying out a halogenation reaction, in order to control selectivity of the halogenation reaction.

In a preferred embodiment of the present invention, the dropwise addition rate of the halogen solution is controlled such that the halogenation reaction time is within the range of 30-180 minutes.

In a specific embodiment of the present invention, a halogen solution is slowly and dropwise added to a polymer solution, and a photohalogenation reaction is performed under the pulsed type light emission with a wavelength range of 560nm-630nm by an LED light source, a halogenated polymer solution is obtained. To neutralize the hydrogen halide generated during the halogenation reaction process, a certain amount of an alkaline compound (e.g., sodium carbonate, sodium bicarbonate, calcium carbonate, magnesium carbonate, calcium oxide, magnesium oxide) may be added to the polymer solution. The halogenated polymer solution is centrifuged or filtered to remove the solid halogenated salt compound and then be used for an ionization reaction.

According to the present invention, the halogen is liquid bromine.

According to the present invention, the tertiary amine compound has a structure represented by formula (6); 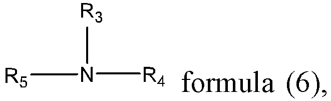 wherein R₃, R₄, and R₅ are each independently C₁-C₂₀ straight chain alkyl, C₁-C₂₀ branched chain alkyl, or C₆-C₂₀ aryl.

According to the present invention, the tertiary phosphine compound has a structure represented by formula (7); 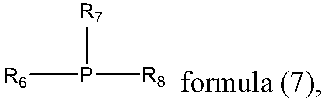 wherein R₆, R₇, and R₈ are each independently C₁-C₁₀ straight chain alkyl, C₁-C₁₀ branched chain alkyl, C₃-C₁₀ cycloalkyl, or C₆-C₁₀ aryl.

According to the present invention, the imidazole compound has a structure represented by formula (8); 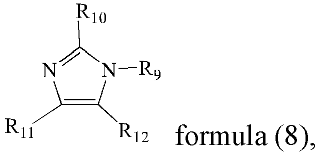 wherein R₉ is hydrogen, C₁-C₂₀ straight chain alkyl, R₁₀, R₁₁, and R₁₂ are each independently hydrogen, halogen atoms, C₁-C₁₀ straight chain alkyl, C₁-C₁₀ branched chain alkyl, hydroxyl, nitro, -(CH₂)ₙ-NH₂, cyano group, or C₆-C₁₀ aryl, n is an integer between 0 and 5.

According to the present invention, the pyridine compound has a structure represented by formula (9); 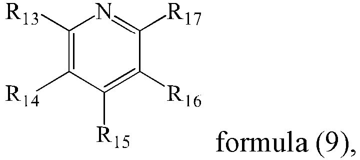 wherein R₁₃, R₁₄, R₁₃, R₁₆, and R₁₇ are each independently hydrogen, halogen atom, C₁-C₂₀ straight chain alkyl, C₁-C₂₀ branched chain alkyl, nitro, amino, or cyano group.

In a specific embodiment of the present invention, R₃, R₄, and R₅ are each independently C₁-C₁₈ straight chain alkyl or C₆-C₉ aryl; preferably, R₃, R₄, and R₅ are each independently methyl, C₈-C₁₆ straight chain alkyl, or phenyl; further preferably, both R₃ and R₄ are methyl, and R₅ is C₈-C₁₆ straight chain alkyl, or phenyl

In a specific embodiment of the present invention, R₆, R₇, and R₈ are each independently C₁-C₈ straight chain alkyl, C₅-C₈ cycloalkyl, or C₆-C₈ aryl; preferably, R₆, R₇, and R₈ are each independently C₁-C₈ straight chain alkyl, cyclopentyl, cyclohexyl, or phenyl.

In a specific embodiment of the present invention, R₉ is hydrogen, C₁-C₁₈ straight chain alkyl; R₁₀, R₁₁, and R₁₂ are each independently hydrogen, halogen atom, C₁-C₅ straight chain alkyl, C₁-C₅ branched chain alkyl, hydroxyl, nitro, -(CH₂)ₙ-NH₂, cyano group, or C₆-C₈ aryl; n is an integer from 0 to 3; preferably, R₉ is hydrogen, C₁-C₁₆ straight chain alkyl; R₁₀, R₁₁, and R₁₂ are each independently hydrogen, halogen atom, C₁-C₄ straight chain alkyl, hydroxyl, nitro, cyano group, amino, or phenyl.

In a specific embodiment of the present invention, R₁₃, R₁₄, R₁₅, R₁₆, and R₁₇ are each independently hydrogen, halogen, C₁-C₁₃ straight chain alkyl, C₁-C₁₅ branched chain alkyl, nitro, amino, or cyano group; preferably, R₁₃, R₁₄, R₁₅, R₁₆, and R₁₇ are each independently hydrogen, halogen, C₁-C₁₀ straight chain alkyl, amino, or cyano group.

In the present invention, the tertiary amine compound represented by formula (6) includes, but is not limited to, at least one selected from the group consisting of trimethylamine, triethylamine, tripropylamine, tributylamine, tripentylamine, trihexylamine, triheptylamine, trioctylamine, trinnonylamine, tridecylamine, tris (undecyl) amine, tris (dodecyl) amine, tris (tetradecyl) amine, tris (pentadecyl) amine, tris (hexadecyl) amine, tris (heptadecyl) amine, tris (octadecyl) amine, tris (decadecyl) amine, tris (eicosyl) amine, triphenylamine, N,N-dimethylethylamine, N,N-dimethylpropylamine, N,N-dimethylpropylamine, N,N-dimethylpropylamine Methylbutylamine, N,N-dimethylpentylamine, N,N-dimethylhexylamine, N,N-dimethylheptylamine, N,N-dimethyloctylamine, N,N-dimethylnonylamine, N,N-dimethyldecylamine, N,N-dimethyldecaalkylamine, N,N-dimethylundecylamine, N,N-dimethyldodecylamine N,N-dimethylundecylamine, N,N-dimethyltetradecylamine, N,N-dimethylpentadecylamine, N,N-dimethylhexadecylamine, N,N-dimethylheptadecylamine, N,N-dimethyloctadecylamine, N,N-dimethylundecylamine, N,N-dimethyleicosylamine, N,N-dimethylphenylamine. Preferably, the tertiary amine is N,N-dimethylalkylamine, especially at least one of N,N-dimethyl C₈-C₁₆ alkylamines, such as N,N-dimethyldecaalkylamine, N,N-dimethyldodecylamine, and N,N-dimethyltetradecylamine or a combination thereof.

In the present invention, the tertiary phosphine compound represented by formula (7) includes, but is not limited to, at least one selected from the group consisting of trimethylphosphine, triethylphosphine, tripropylphosphine, tributylphosphine, tripentylphosphine, tricyclopentylphosphine, trihexylphosphine, tricyclohexylphosphine, triheptylphosphine, trioctylphosphine, trinonylphosphine, tridecylphosphine, triphenylphosphine, dimethylphenyl phosphine, dimethylethyl phosphine, dimethylpropylphosphine, dimethylbutyl phosphine, dimethylpentylphosphine, dimethylhexylphosphine, dimethylheptylphosphine, dimethyloctylphosphine, dimethylnonylphosphine, dimethyldecylphosphine, methyl ethyl phenyl phosphine, methyl ethyl propyl phosphine, methyl ethyl butyl phosphine, methyl ethyl pentyl phosphine, methyl ethyl hexyl phosphine, methyl ethyl heptylphosphine, methyl ethyl octyl phosphine, methyl ethyl nonyl phosphine, methyl ethyl decyl phosphine, methyl ethyl phenyl phosphine, diethyl phenyl phosphine, diethyl methyl phosphine, diethyl propylphosphine, diethyl butyl phosphine diethylpentylphosphine, diethylhexylphosphine, diethylheptylphosphine, diethyloctylphosphine, diethylnonylphosphine, diethyldecylphosphine, ethylpropylphenyl phosphine, ethylpropylbutyl phosphine, ethylpropylpentylphosphine, ethylpropylhexylphosphine, ethylpropylheptylphosphine, ethylpropyloctylphosphine, ethylpropylnonylphosphine, ethylpropyldecylphosphine, dipropylphenyl phosphine, dipropylmethylphosphine, dipropylethyl phosphine, dipropylbutyl phosphine, dipropylpentylphosphine, dipropyl phosphine dihexylphosphine, dipropylcyclohexylphosphine, dipropylheptylphosphine, dipropyloctylphosphine, dipropylnonylphosphine, dipropyldecylphosphine, propylbutylphenylphosphine, propylbutylpentylphosphine, propylbutylpentylphosphine, propylbutylpentylphosphine, propylbutylpentylphosphine, propylbutylpentylphosphine, propylbutylpentylphosphine, propylbutylpentylphosphine, and dibutylphenylphosphine dibutylmethylphosphine, dibutylpropylphosphine, dibutylpentylphosphine, dibutylpentylphosphine, dibutylhexylphosphine, dibutylcyclohexylphosphine, dibutylhentylphosphine, dibutylphenylphosphine, dibutylmethylphosphine, dibutylmethylphosphine, dibutylpropylphosphine, dibutylbutylphosphine, dibutylhexylphosphine, dibutylhexylphosphine, dibutylcyclohexylphosphine, dibutylhentylphosphine, dibutylhentylphosphine, dibutylpentylphosphine, and dibutylphenylphosphine. phosphine, dipentyl decyl phosphine, dihexyl phenyl phosphine, dihexyl methyl phosphine, dihexyl ethyl phosphine, dihexyl propylphosphine, dihexyl butyl phosphine, dihexyl pentyl phosphine, dihexyl heptylphosphine, dihexyl octyl phosphine, dihexyl nonyl phosphine, dihexyl decyl phosphine, dicyclohexyl phenyl phosphine, dicyclohexyl methyl phosphine, and dicyclohexyl ethyl phosphine Dicyclohexylpropylphosphine, dicyclohexylbutyl phosphine, dicyclohexylpentylphosphine, dicyclohexylheptylphosphine, dicyclohexyloctylphosphine, dicyclohexylnonylphosphine, dicyclohexyldecylphosphine, diheptylphenyl phosphine, diheptylmethylphosphine, diheptylethylphosphine, diheptylpropylphosphine, diheptylbutyl phosphine, diheptylpentylphosphine, diheptylhexylphosphine, diheptyloctylphosphine, diheptylnonylphosphine, diheptyldecane basic phosphine, dioctylphenyl phosphine, dioctylmethyl phosphine, dioctylethyl phosphine, dioctylpropylphosphine, dioctylbutyl phosphine, dioctylpentyl phosphine, dioctylhexyl phosphine, dioctylheptylphosphine, dioctylnonyl phosphine, dioctyldecyl phosphine, nonylphenyl phosphine, nonylmethyl phosphine, nonylethyl phosphine, nonylpropylphosphine, nonylbutyl phosphine, nonylpentyl phosphine, nonylhexyl phosphine, dinylcyclohexylphosphine, dinylheptylphosphine, dinyloctylphosphine, dinyldecyl phosphine, dinylphenyl phosphine, dinylmethyl phosphine, dinylethyl phosphine, dinylpropylphosphine, dinylbutyl phosphine, dinylpentylphosphine, dinylhexylphosphine, dinylheptylphosphine, dinyloctylphosphine, and dinylnonylphosphine; the present invention prefers tricyclohexylphosphine and triphenylphosphine.

In the present invention, the imidazole compound represented by formula (8) includes, but is not limited to, at least one selected from the group consisting of imidazole, 1-methylimidazole, 1-ethylimidazole, 1-propylimidazole, 1-butylimidazole, 1-pentylimidazole, 1-hexylimidazole, 1-heptanylimidazole, 1-octylimidazole, 1-nonylimidazole, 1-decylimidazole, 1-undecylimidazole, 1-dodecylimidazole, 1-dodecylimidazole, 1-decadecylimidazole, 1-pentadecylimidazole, 1-hexadecylimidazole, 1-heptadecylimidazole, 1-octadecylimidazole, 1,2-dimethylimidazole, 1,2-diethylimidazole, 1,2-dipropylimidazole, 1,2-dibutyl imidazole, 1-methyl-2-ethyl imidazole, 1-methyl-2-propylimidazole, 1-methyl-2-butyl imidazole, 2-methylimidazole, 2-ethylimidazole, 2-propylimidazole, 2-butyl imidazole, 2-pentyl imidazole, 2-hexyl imidazole, 2-heptanyl imidazole, 2-octyl imidazole, 2-nonyl imidazole, 2-decyl imidazole, 2-nitroimidazole, 4-nitroimidazole 5-nitroimidazole, 1-methyl-4-nitroimidazole, 1-methyl-5-nitrimidazole, 1-ethyl-4-nitroimidazole, 1-ethyl-5-nitrimidazole, 1-propyl-4-nitroimidazole, 1-propyl-5-nitrimidazole, 1-butyl-4-nitroimidazole, 1-butyl-5-nitroimidazole, 2-methyl-5-nitrimidazole, 1-butyl-2-methyl-4-nitroimidazole, 1,2-dimethyl-5-nitrimidazole, 2-chloro-4-nitroimidazole, 2-chloro-5-nitrimidazole, 2-ethyl-4-methylimidazole, 2-phenylimidazole, 1-benzyl-2-methylimidazole, 1-cyanoethyl-2-ethyl-4-methylimidazole At least one of imidazole, 1-cyanoethyl-2-undecylimidazole, methylbenzimidazole, benzimidazole, and 2-aminobenzimidazole; The present invention prefers 1-alkylimidazole (N-alkylimidazole).

In the present invention, the pyridine compound represented by formula (9) includes, but is not limited to, at least one selected from the group consisting of pyridine, 2-methylpyridine, 3-methylpyridine, 4-methylpyridine, 5-methylpyridine, 6-methylpyridine, 2,6-dimethylpyridine, 2,4,6-trimethylpyridine, 2-ethylpyridine, 3-ethylpyridine, 4-ethylpyridine, 5-ethylpyridine, 6-ethylpyridine, 2,6-diethylpyridine, 2,4,6-triethylpyridine, 2-propylpyridine, 3-propylpyridine, 4-propylpyridine, 5-propylpyridine, 6-propylpyridine, 2,6-dipropylpyridine, 2,4,6-tripropylpyridine, 2-butyl pyridine, 3-butyl pyridine, 4-butyl pyridine, 5-butyl pyridine, 6-butyl pyridine, 2,6-dibutyl pyridine, 2,4,6-tributyl pyridine, 2-pentylpyridine 3-pentylpyridine, 4-pentylpyridine, 5-pentylpyridine, 6-pentylpyridine, 2,6-dipentylpyridine, 2,4,6-tripentylpyridine, 2-hexylpyridine, 3-hexylpyridine, 4-hexylpyridine, 5-hexylpyridine, 6-hexylpyridine 2-heptylpyridine, 3-heptylpyridine, 4-heptylpyridine, 5-heptylpyridine, 6-heptylpyridine, 2-octylpyridine, 3-octylpyridine, 4-octylpyridine, 5-octylpyridine, 6-octylpyridine, 2-nonylpyridine, 3-nonylpyridine, 4-nonylpyridine, 5-nonylpyridine, 6-nonylpyridine, 2-decylpyridine, 3-decylpyridine, 4-decylpyridine, 5-decylpyridine, 6-decylpyridine, 4-undecylpyridine, 4-dodecylpyridine, 4-triadecylpyridine, 4-tetradecylpyridine, 4-pentadecylpyridine, 4-hexadecylpyridine, 4-heptadecylpyridine 4-Octadecylpyridine, 4-nineteenth alkyl pyridine, 4-twentieth alkyl pyridine, 2-hydroxypyridine, 3-hydroxypyridine, 4-hydroxypyridine, 5-hydroxypyridine, 6-hydroxypyridine, 2,6-dihydroxypyridine, 2,4,6-trihydroxypyridine, 2-fluoropyridine, 3-fluoropyridine, 4-fluoropyridine, 5-fluoropyridine, 6-fluoropyridine, 2-chloropyridine, 3-chloropyridine, 4-chloropyridine, 5-chloropyridine, 6-chloropyridine, 2,3-dichloropyridine, 2,3,6-trichloropyridine, 2,6-diamino-3,5-dinitropyridine, 2,6-diaminopyridine, 2,4,6-triaminopyridine, 2,4,6-trinitropyridine, 2,4,6-trichloropyridine, and 2,4,6-tribromopyridine; the present invention prefers 4-alkylpyridine.

In a specific embodiment of the present invention, at least one of a tertiary amine compound, a tertiary phosphine compound, an imidazole compound, and a pyridine compound is dissolved in an organic solvent halogenated alkane, the mixture is added to a halogenated polymer solution, and subjected to an ionization reaction in the presence of a protective gas, the reaction temperature is within the range of 20-150°C, preferably 40-120°C; and the reaction time is within the range of 1-24h, preferably 2-20h.

According to the present invention, the molar ratio of at least one of the tertiary amine compound, the tertiary phosphine compound, the imidazole compound, and the pyridine compound to the halogen is (0.8-1.5): 1, preferably (0.9-1.2): 1.

In the present invention, after the ionization reaction reaches a certain degree, the solid insoluble substances are precipitated from the organic solvent, the solvent is filtered and separated after the reaction is finished, and the insoluble ionic polymer is washed with hexane for 1-2 times and then subjected to vacuum drying to prepare the isobutylene-based cationic salt ionic polymer according to the first aspect of the present invention.

### Specific embodiment I

In a specific embodiment of the present invention, the isobutylene-based cationic salt ionic polymer is an isobutylene-based quaternary ammonium salt ionic polymer, wherein the method for preparing the isobutylene-based quaternary ammonium salt ionic polymer comprising:
(1) dissolving the polymer in an organic solvent to obtain a polymer solution, adding a halogen to the polymer solution to carry out a halogenation reaction to obtain a halogenated polymer solution;
(2) adding a tertiary amine to the halogenated polymer solution to perform an ionization reaction to obtain the isobutylene-based quaternary ammonium salt ionic polymer;

the polymer is a random copolymer of isobutylene and alkyl styrene;
the halogenation reaction is carried out under irradiation of a visible light, the visible light has a pulsed type light emission mode.

Further, the present invention triggers a halogenation reaction by using a visible light within a specific wavelength range, so that the halogenation reaction is characterized by a highly controllable, low side-reaction and high selectivity, in particular, the visible light within a specific wavelength refers to the light wave within the yellow to red wave range (i.e., the light length is from 560 to 630nm), preferably a LED (light-emitting diode) light source. In the present invention, the light source has an output power of 10-200W.

In the present invention, the pulsed type light emission refers to that the light source emits light waves and stops emitting of light waves are implemented with an equal time differences and alternately performed, in particular, the pulsed type light emission has a pulse time within the range of 5-40s, preferably 10-30s.

In the present invention, a use of the light irradiation and halogenation method of the present invention can achieve a halogenation reaction efficiency over 80%, preferably over 90%.

In the present invention, halogenation reaction efficiency refers to that for a halogenation substitution reaction carried out according to a free radical mechanism, theoretically when 100% of halogen undergoes hydrogen substitution reaction, 50% of the halogen is substituted on the polymer, the ratio of the actually measured halogen content in the polymer to the theoretical halogen content is the halogenation reaction efficiency.

According to the present invention, the content of structural unit provided by alkyl styrene is within the range of 3-25mol%, and the content of structural unit provided by isobutylene is within the range of 75-97mol%, based on the total molar amount of the polymer.

Preferably, the content of structural unit provided by alkyl styrene is within the range of 5-20mol%, and the content of structural unit provided by isobutylene is within the range of 80-95mol%, based on the total molar amount of the polymer.

According to the present invention, the polymer has a weight average molecular weight Mw within the range of 1×10⁴g/mol-1×10⁵g/mol, and a molecular weight distribution coefficient within the range of 2-3.5.

Preferably, the polymer has a weight average molecular weight Mw within the range of 2×10⁴g/mol-8×10⁴g/mol; and a molecular weight distribution coefficient within the range of 2.2-3.

According to the present invention, a content of aluminum ions in said polymer is less than 10ppm, preferably less than 5ppm.

In the present invention, the kind of the organic solvent is not particularly limited, it may be the commonly used organic solvent in the art, preferably at least one of C₆-C₁₀ straight chain alkyl, C₆-C₁₀ cycloalkyl, C₁-C₄ halogenated alkane; wherein the straight-chain alkane comprises at least one of n-hexane, n-heptane, n-octane, n-nonane, and n-decane; the cycloalkane includes cyclohexane; and the halogenated alkane comprises at least one of dichloromethane, trichloromethane, and tetrachloromethane.

According to the present invention, the molar ratio of the polymer to the halogen is 1: (0.5-2), preferably 1: (0.8-1.5), based on the molar content of the structural unit provided by alkyl styrene.

In the present invention, preferably, the halogen is used after being diluted with an organic solvent halogenated alkane, and there is no particular limited on the dilution concentration, as long as it facilitates the control of the halogenation reaction.

In the present invention, the halogenation reaction is carried out in an environment away from light, and the temperature of halogenation reaction is not particularly required, for example room temperature.

According to the present invention, the halogen is preferably mixed with an organic solvent to obtain a halogen solution, and the halogen solution is dropwise added to the polymer solution for carrying out a halogenation reaction, so as to control selectivity of the halogenation reaction.

In a preferred embodiment of the present invention, the dropwise addition rate of the halogen solution is controlled such that the halogenation reaction time is within the range of 30-180 minutes.

In a specific embodiment of the present invention, a halogen solution is slowly and dropwise added to a polymer solution, and a photohalogenation reaction is performed under the pulsed type light emission with a wavelength range of 560nm-630nm by an LED light source, a halogenated polymer solution is obtained. To neutralize the hydrogen halide generated during the halogenation reaction process, a certain amount of an alkaline compound (e.g., sodium carbonate, sodium bicarbonate, calcium carbonate, magnesium carbonate, calcium oxide, magnesium oxide) may be added to the polymer solution. The halogenated polymer solution is centrifuged or filtered to remove the solid halogenated salt compound and then be used for an ionization reaction.

According to the present invention, the halogen is liquid bromine.

According to the present invention, the tertiary amine compound has a structure represented by formula (6); 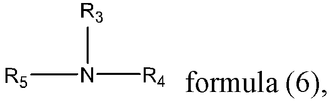 wherein R₃, R₄, and R₅ are each independently C₁-C₂₀ straight chain alkyl, C₁-C₂₀ branched chain alkyl, or C₆-C₂₀ aryl.

Preferably, R₃, R₄, and R₅ are each independently C₁-C₁₈ straight chain alkyl, or C₆-C₉ aryl.

More preferably, R₃ and R₄ are methyl, and R5 is C₈-C₁₆ straight-chain alkyl, or phenyl.

In the present invention, the tertiary amine includes, but is not limited to, at least one selected from the group consisting of trimethylamine, triethylamine, tripropylamine, tributylamine, tripentylamine, trihexylamine, triheptylamine, trioctylamine, trinnonylamine, tridecylamine, tris (undecyl) amine, tris (dodecyl) amine, tris (tetradecyl) amine, tris (pentadecyl) amine, tris (hexadecyl) amine, tris (heptadecyl) amine, tris (octadecyl) amine, tris (decadecyl) amine, tris (eicosyl) amine, triphenylamine, N,N-dimethylethylamine, N,N-dimethylpropylamine, N,N-dimethylpropylamine, N,N-dimethylpropylamine Methylbutylamine, N,N-dimethylpentylamine, N,N-dimethylhexylamine, N,N-dimethylheptylamine, N,N-dimethyloctylamine, N,N-dimethylnonylamine, N,N-dimethyldecylamine, N,N-dimethyldecaalkylamine, N,N-dimethylundecylamine, N,N-dimethyldodecylamine N,N-dimethylundecylamine, N,N-dimethyltetradecylamine, N,N-dimethylpentadecylamine, N,N-dimethylhexadecylamine, N,N-dimethylheptadecylamine, N,N-dimethyloctadecylamine, N,N-dimethylundecylamine, N,N-dimethyleicosylamine, N,N-dimethylphenylamine. Preferably, the tertiary amine is N,N-dimethylalkylamine, especially at least one of N,N-dimethyl C₈-C₁₆ alkylamines, such as N,N-dimethyldecaalkylamine, N,N-dimethyldodecylamine, and N,N-dimethyltetradecylamine or a combination thereof.

In a specific embodiment of the present invention, the tertiary amine is dissolved in an organic solvent halogenated alkane, the mixture is added to a halogenated polymer solution, and subjected to an ionization reaction in the presence of a protective gas, the reaction temperature is within the range of 20-100°C, preferably 40-80°C; and the reaction time is within the range of 1-10h, preferably 2-8h.

According to the present invention, the molar ratio of the tertiary amine to the halogen is (0.8-1.5): 1, preferably (0.9-1.2): 1.

In the present invention, after the ionization reaction reaches a certain degree, the solid insoluble substances are precipitated from the organic solvent, the solvent is filtered and separated after the reaction is finished, and the insoluble ionic polymer is washed with hexane for 1-2 times and then subjected to vacuum drying to prepare the isobutylene-based quaternary ammonium salt ionic polymer.

### Specific embodiment II

In a specific embodiment of the present invention, the isobutylene-based cationic salt ionic polymer is an isobutylene-based quaternary phosphonium salt ionic polymer, wherein the method for preparing the isobutylene-based quaternary phosphonium salt ionic polymer comprising:
(1) dissolving the polymer in an organic solvent to obtain a polymer solution, adding a halogen to the polymer solution to carry out a halogenation reaction to obtain a halogenated polymer solution;
(2) adding a tertiary phosphine to the halogenated polymer solution and perform an ionization reaction to prepare the isobutylene-based quaternary phosphonium salt ionic polymer;
the polymer is a random copolymer of isobutylene and alkyl styrene; the halogenation reaction is carried out under irradiation of a visible light, the visible light has a pulsed type light emission mode.

Further, the present invention triggers a halogenation reaction by using a visible light within a specific wavelength range, so that the halogenation reaction is characterized by a highly controllable, low side-reaction and high selectivity, in particular, the visible light within a specific wavelength refers to the light wave within the yellow to red wave range (i.e., the light length is from 560 to 630nm), preferably a LED (light-emitting diode) light source. In the present invention, the light source has an output power of 10-200W.

In the present invention, the pulsed type light emission refers to that the light source emits light waves and stops emitting light waves alternately with an equal time difference, in particular, the pulsed type light emission has a pulse time within the range of 5-40s, preferably 10-30s.

In the present invention, a use of the light irradiation and halogenation method of the present invention can achieve a halogenation reaction efficiency over 80%, preferably over 90%.

In the present invention, halogenation reaction efficiency refers to that for a halogenation substitution reaction carried out according to a free radical mechanism, theoretically when 100% of halogen undergoes hydrogen substitution reaction, 50% of the halogen is substituted on the polymer, the ratio of the actually measured halogen content in the polymer to the theoretical halogen content is the halogenation reaction efficiency.

According to the present invention, the molar ratio of the polymer to the halogen is 1: (0.5-2), preferably 1: (0.8-1.5), based on the molar content of the structural unit provided by alkyl styrene.

According to the present invention, the halogen is liquid bromine.

In the present invention, the halogenation reaction is carried out in an environment away from light, and the temperature of halogenation reaction is not particularly required, for example room temperature.

According to the present invention, the halogen is preferably mixed with an organic solvent to obtain a halogen solution, and the halogen solution is dropwise added to the polymer solution for carrying out a halogenation reaction, so as to control selectivity of the halogenation reaction.

In the present invention, the concentration of the halogen solution is not particularly limited, as long as it facilitates control of the halogenation reaction.

In a preferred embodiment of the present invention, the dropwise addition rate of the halogen solution is controlled such that the halogenation reaction time is within the range of 30-180 minutes.

In a specific embodiment of the present invention, a halogen solution is slowly and dropwise added to a polymer solution, and a photohalogenation reaction is performed under the pulsed type light emission with a wavelength range of 560nm-630nm by an LED light source, a halogenated polymer solution is obtained. To neutralize the hydrogen halide generated during the halogenation reaction process, a certain amount of an alkaline compound (e.g., sodium carbonate, sodium bicarbonate, calcium carbonate, magnesium carbonate, calcium oxide, magnesium oxide) may be added to the polymer solution. The halogenated polymer solution is centrifuged or filtered to remove the solid halogenated salt compound and then be used for an ionization reaction.

According to the present invention, the content of structural unit provided by alkyl styrene is within the range of 3-25mol%, and the content of structural unit provided by isobutylene is within the range of 75-97mol%, based on the total molar amount of the polymer.

Preferably, the content of structural unit provided by alkyl styrene is within the range of 5-20mol%, and the content of structural unit provided by isobutylene is within the range of 80-95mol%, based on the total molar amount of the polymer.

According to the present invention, the polymer has a weight average molecular weight Mw within the range of 1×10⁴g/mol-1×10⁵g/mol, and a molecular weight distribution coefficient within the range of 2-3.5.

Preferably, the polymer has a weight average molecular weight Mw within the range of 2×10⁴g/mol-8×10⁴g/mol; and a molecular weight distribution coefficient within the range of 2.2-3.

According to the present invention, a content of aluminum ions in said polymer is less than 10ppm, preferably less than 5ppm.

In the present invention, the kind of the organic solvent is not particularly limited, it may be the commonly used organic solvent in the art, preferably at least one of C₆-C₁₀ straight chain alkyl, C₆-C₁₀ cycloalkyl, and C₁-C₄ halogenated alkane; wherein the straight-chain alkane comprises at least one of n-hexane, n-heptane, n-octane, n-nonane, and n-decane; the cycloalkane includes cyclohexane; and the halogenated alkane comprises at least one of dichloromethane, trichloromethane, and tetrachloromethane.

According to the present invention, the tertiary phosphine has a structure represented by formula (7); 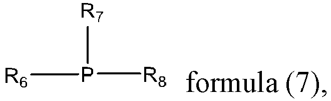 wherein R₆, R₇, and R₈ are each independently C₁-C₁₀ straight chain alkyl, C₁-C₁₀ branched chain alkyl, C₃-C₁₀ cycloalkyl, or C₆-C₁₀ aryl.

Preferably, R₆, R₇, and R₈ are each independently C₁-C₈ straight chain alkyl, C₅-C₈ cycloalkyl, or C₆-C₈ aryl.

Further preferably, R₆, R₇, and R₈ are each independently C₁-C₈ straight chain alkyl, cyclopentyl, cyclohexyl, or phenyl.

In the present invention, the tertiary phosphine includes, but is not limited to, at least one selected from the group consisting of trimethylphosphine, triethylphosphine, tripropylphosphine, tributylphosphine, tripentylphosphine, tricyclopentylphosphine, trihexylphosphine, tricyclohexylphosphine, triheptylphosphine, trioctylphosphine, trinonylphosphine, tridecylphosphine, triphenylphosphine, dimethylphenyl phosphine, dimethylethyl phosphine, dimethylpropylphosphine, dimethylbutyl phosphine, dimethylpentylphosphine, dimethylhexylphosphine, dimethylheptylphosphine, dimethyloctylphosphine, dimethylnonylphosphine, dimethyldecylphosphine, methyl ethyl phenyl phosphine, methyl ethyl propyl phosphine, methyl ethyl butyl phosphine, methyl ethyl pentyl phosphine, methyl ethyl hexyl phosphine, methyl ethyl heptylphosphine, methyl ethyl octyl phosphine, methyl ethyl nonyl phosphine, methyl ethyl decyl phosphine, methyl ethyl phenyl phosphine, diethyl phenyl phosphine, diethyl methyl phosphine, diethyl propylphosphine, diethyl butyl phosphine diethylpentylphosphine, diethylhexylphosphine, diethylheptylphosphine, diethyloctylphosphine, diethylnonylphosphine, diethyldecylphosphine, ethylpropylphenyl phosphine, ethylpropylbutyl phosphine, ethylpropylpentylphosphine, ethylpropylhexylphosphine, ethylpropylheptylphosphine, ethylpropyloctylphosphine, ethylpropylnonylphosphine, ethylpropyldecylphosphine, dipropylphenyl phosphine, dipropylmethylphosphine, dipropylethyl phosphine, dipropylbutyl phosphine, dipropylpentylphosphine, dipropyl phosphine dihexylphosphine, dipropylcyclohexylphosphine, dipropylheptylphosphine, dipropyloctylphosphine, dipropylnonylphosphine, dipropyldecylphosphine, propylbutylphenylphosphine, propylbutylpentylphosphine, propylbutylpentylphosphine, propylbutylpentylphosphine, propylbutylpentylphosphine, propylbutylpentylphosphine, propylbutylpentylphosphine, propylbutylpentylphosphine, and dibutylphenylphosphine dibutylmethylphosphine, dibutylpropylphosphine, dibutylpentylphosphine, dibutylpentylphosphine, dibutylhexylphosphine, dibutylcyclohexylphosphine, dibutylhentylphosphine, dibutylphenylphosphine, dibutylmethylphosphine, dibutylmethylphosphine, dibutylpropylphosphine, dibutylbutylphosphine, dibutylhexylphosphine, dibutylhexylphosphine, dibutylcyclohexylphosphine, dibutylhentylphosphine, dibutylhentylphosphine, dibutylpentylphosphine, and dibutylphenylphosphine. phosphine, dipentyl decyl phosphine, dihexyl phenyl phosphine, dihexyl methyl phosphine, dihexyl ethyl phosphine, dihexyl propylphosphine, dihexyl butyl phosphine, dihexyl pentyl phosphine, dihexyl heptylphosphine, dihexyl octyl phosphine, dihexyl nonyl phosphine, dihexyl decyl phosphine, dicyclohexyl phenyl phosphine, dicyclohexyl methyl phosphine, and dicyclohexyl ethyl phosphine Dicyclohexylpropylphosphine, dicyclohexylbutyl phosphine, dicyclohexylpentylphosphine, dicyclohexylheptylphosphine, dicyclohexyloctylphosphine, dicyclohexylnonylphosphine, dicyclohexyldecylphosphine, diheptylphenyl phosphine, diheptylmethylphosphine, diheptylethylphosphine, diheptylpropylphosphine, diheptylbutyl phosphine, diheptylpentylphosphine, diheptylhexylphosphine, diheptyloctylphosphine, diheptylnonylphosphine, diheptyldecane basic phosphine, dioctylphenyl phosphine, dioctylmethyl phosphine, dioctylethyl phosphine, dioctylpropylphosphine, dioctylbutyl phosphine, dioctylpentyl phosphine, dioctylhexyl phosphine, dioctylheptylphosphine, dioctylnonyl phosphine, dioctyldecyl phosphine, nonylphenyl phosphine, nonylmethyl phosphine, nonylethyl phosphine, nonylpropylphosphine, nonylbutyl phosphine, nonylpentyl phosphine, nonylhexyl phosphine, dinylcyclohexylphosphine, dinylheptylphosphine, dinyloctylphosphine, dinyldecyl phosphine, dinylphenyl phosphine, dinylmethyl phosphine, dinylethyl phosphine, dinylpropylphosphine, dinylbutyl phosphine, dinylpentylphosphine, dinylhexylphosphine, dinylheptylphosphine, dinyloctylphosphine, and dinylnonylphosphine; the present invention prefers tricyclohexylphosphine and triphenylphosphine.

In a specific embodiment of the present invention, the tertiary phosphine is dissolved in an organic solvent halogenated alkane, the mixture is added to a halogenated polymer solution, and subjected to an ionization reaction in the presence of a protective gas, the reaction temperature is within the range of 60-150°C, and preferably 80-120°C; the reaction time is within the range of 4-24h, preferably 6-20h.

According to the present invention, the molar ratio of the tertiary phosphine to the halogen is (0.8-1.5): 1, preferably (0.9-1.2): 1.

In the present invention, after the ionization reaction reaches a certain degree, the solid insoluble substances are precipitated from the organic solvent, the solvent is filtered and separated after the reaction is finished, and the insoluble ionic polymer is washed with hexane for 1-2 times and then subjected to vacuum drying to prepare the isobutylene-based quaternary phosphonium salt ionic polymer.

### Specific embodiment III

In a specific embodiment of the present invention, the isobutenyl-based cationic polymer is an isobutenyl-based imidazolium salt ionic polymer, wherein the method for preparing the isobutenyl-based imidazolium salt ionic polymer comprising:
(1) dissolving the polymer in an organic solvent to obtain a polymer solution, adding a halogen to the polymer solution to carry out a halogenation reaction to obtain a halogenated polymer solution;
(2) ddding an imidazole to the halogenated polymer solution and perform an ionization reaction to prepare the isobutylene-based quaternary imidazolium salt ionic polymer;
the polymer is a random copolymer of isobutylene and alkyl styrene; the halogenation reaction is carried out under irradiation of a visible light, the visible light has a pulsed type light emission mode.

Further, the present invention triggers a halogenation reaction by using a visible light within a specific wavelength range, so that the halogenation reaction is characterized by a highly controllable, low side-reaction and high selectivity, in particular, the visible light within a specific wavelength refers to the light wave within the yellow to red wave range (i.e., the light length is from 560 to 630nm), preferably a LED (light-emitting diode) light source. In the present invention, the light source has an output power of 10-200W.

In the present invention, the pulsed type light emission refers to that the light source emits light waves and stops emitting of light waves alternately with an equal time difference, in particular, the pulsed type light emission has a pulse time within the range of 5-40s, preferably 10-30s.

According to the present invention, the molar ratio of the polymer to the halogen is 1: (0.5-2), preferably 1: (0.8-1.5), based on the molar content of the structural unit provided by alkyl styrene.

In the present invention, the halogenation reaction efficiency can be 80% or more, preferably 90% or more, by controlling the molar ratio of the halogen to the polymer to fall into the above range under the irradiation with visible light.

In the present invention, halogenation reaction efficiency refers to that for a halogenation substitution reaction carried out according to a free radical mechanism, theoretically when 100% of halogen undergoes hydrogen substitution reaction, 50% of the halogen is substituted on the polymer, the ratio of the actually measured halogen content in the polymer to the theoretical halogen content is the halogenation reaction efficiency.

In the present invention, the halogen is preferably used after being diluted with an organic solvent, and the diluted concentration is not particularly limited, as long as it facilitate control of the halogenation reaction. The kind of the organic solvent is not particularly limited, it may be a commonly used organic solvent in the art, such as halogenated alkane and/or alkane.

In the present invention, the halogenation reaction is carried out in an environment away from light, and the temperature of halogenation reaction is not particularly required, for example room temperature.

According to the present invention, the halogen is preferably mixed with an organic solvent to obtain a halogen solution, and the halogen solution is dropwise added to the polymer solution for carrying out a halogenation reaction, so as to control selectivity of the halogenation reaction.

In a preferred embodiment of the present invention, the dropwise addition rate of the halogen solution is controlled such that the halogenation reaction time is within the range of 30-180 minutes.

In a specific embodiment of the present invention, a halogen solution is slowly and dropwise added to a polymer solution, and a photohalogenation reaction is performed under the pulsed type light emission with a wavelength range of 560nm-630nm by an LED light source, a halogenated polymer solution is obtained. To neutralize the hydrogen halide generated during the halogenation reaction process, a certain amount of an alkaline compound (e.g., sodium carbonate, sodium bicarbonate, calcium carbonate, magnesium carbonate, calcium oxide, magnesium oxide) may be added to the polymer solution.

The halogenated polymer solution is centrifuged or filtered to remove the solid halogenated salt compound and then be used for an ionization reaction.

According to the present invention, the halogen is liquid bromine.

According to the present invention, the content of structural unit provided by alkyl styrene is within the range of 3-25mol%, and the content of structural unit provided by isobutylene is within the range of 75-97mol%, based on the total molar amount of the polymer.

Preferably, the content of structural unit provided by alkyl styrene is within the range of 5-20mol%, and the content of structural unit provided by isobutylene is within the range of 80-95mol%, based on the total molar amount of the polymer.

According to the present invention, the polymer has a weight average molecular weight Mw within the range of 1×10⁴g/mol-1×10⁵g/mol, and a molecular weight distribution coefficient within the range of 2-3.5.

Preferably, the polymer has a weight average molecular weight Mw within the range of 2×10⁴g/mol-8×10⁴g/mol; and a molecular weight distribution coefficient within the range of 2.2-3.

According to the present invention, a content of aluminum ions in said polymer is less than 10ppm, preferably less than 5ppm.

In the present invention, the kind of the organic solvent is not particularly limited, it may be the commonly used organic solvent in the art, preferably at least one of C₆-C₁₀ straight chain alkyl, C₆-C₁₀ cycloalkyl, and C₁-C₄ halogenated alkane; wherein the straight-chain alkane comprises at least one of n-hexane, n-heptane, n-octane, n-nonane, and n-decane; the cycloalkane includes cyclohexane; and the halogenated alkane comprises at least one of dichloromethane, trichloromethane, and tetrachloromethane.

According to the present invention, the imidazole has a structure represented by formula (8); 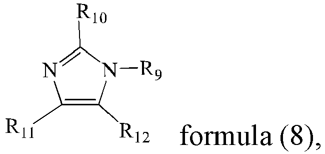 wherein R₉ is hydrogen, C₁-C₂₀ straight chain alkyl, R₁₀, R₁₁, and R₁₂ are each independently hydrogen, halogen atoms, C₁-C₁₀ straight chain alkyl, C₁-C₁₀ branched chain alkyl, hydroxyl, nitro, -(CH₂)ₙ-NH₂, cyano group, or C₆-C₁₀ aryl, n is an integer between 0 and 5.

Preferably, R₉ is hydrogen, C₁-C₁₈ straight chain alkyl, R₁₀, R₁₁, and R₁₂ are each independently hydrogen, halogen atoms, C₁-C₅ straight chain alkyl, C₁-C₅ branched chain alkyl, hydroxyl, nitro, -(CH₂)ₙ-NH₂, cyano group, or C₆-C₈ aryl, n is an integer between 0 and 3.

Further preferably, R₉ is hydrogen, C₁-C₁₆ straight chain alkyl, R₁₀, R₁₁, and R₁₂ are each independently hydrogen, halogen atoms, C₁-C₄ straight chain alkyl, hydroxyl, nitro, cyano group, amino group, or phenyl.

In the present invention, the imidazole compound includes, but is not limited to, at least one selected from the group consisting of imidazole, 1-methylimidazole, 1-ethylimidazole, 1-propylimidazole, 1-butylimidazole, 1-pentylimidazole, 1-hexylimidazole, 1-heptanylimidazole, 1-octylimidazole, 1-nonylimidazole, 1-decylimidazole, 1-undecylimidazole, 1-dodecylimidazole, 1-dodecylimidazole, 1-decadecylimidazole, 1-pentadecylimidazole, 1-hexadecylimidazole, 1-heptadecylimidazole, 1-octadecylimidazole, 1,2-dimethylimidazole, 1,2-diethylimidazole, 1,2-dipropylimidazole, 1,2-dibutyl imidazole, 1-methyl-2-ethyl imidazole, 1-methyl-2-propylimidazole, 1-methyl-2-butyl imidazole, 2-methylimidazole, 2-ethylimidazole, 2-propylimidazole, 2-butyl imidazole, 2-pentyl imidazole, 2-hexyl imidazole, 2-heptanyl imidazole, 2-octyl imidazole, 2-nonyl imidazole, 2-decyl imidazole, 2-nitroimidazole, 4-nitroimidazole 5-nitroimidazole, 1-methyl-4-nitroimidazole, 1-methyl-5-nitrimidazole, 1-ethyl-4-nitroimidazole, 1-ethyl-5-nitrimidazole, 1-propyl-4-nitroimidazole, 1-propyl-5-nitrimidazole, 1-butyl-4-nitroimidazole, 1-butyl-5-nitroimidazole, 2-methyl-5-nitrimidazole, 1-butyl-2-methyl-4-nitroimidazole, 1,2-dimethyl-5-nitrimidazole, 2-chloro-4-nitroimidazole, 2-chloro-5-nitrimidazole, 2-ethyl-4-methylimidazole, 2-phenylimidazole, 1-benzyl-2-methylimidazole, 1-cyanoethyl-2-ethyl-4-methylimidazole At least one of imidazole, 1-cyanoethyl-2-undecylimidazole, methylbenzimidazole, benzimidazole, and 2-aminobenzimidazole; The present invention prefers 1-alkylimidazole (N-alkylimidazole).

In a specific embodiment of the present invention, the imidazole compound is dissolved in an organic solvent halogenated alkane, the mixture is added to a halogenated polymer solution, and subjected to an ionization reaction in the presence of a protective gas, the reaction temperature is within the range of 60-120°C, preferably 70-100°C; and the reaction time is within the range of 6-20h, preferably 8-16h.

According to the present invention, the molar ratio of the imidazole to the halogen is (0.8-1.5): 1, preferably (0.9-1.2): 1.

In the present invention, after the ionization reaction reaches a certain degree, the solid insoluble substances are precipitated from the organic solvent, the solvent is filtered and separated after the reaction is finished, and the insoluble ionic polymer is washed with hexane for 1-2 times and then subjected to vacuum drying to prepare the isobutylene-based quaternary imidazolium salt ionic polymer.

### Specific embodiment IV

In a specific embodiment of the present invention, the isobutenyl-based cationic polymer is an isobutenyl-based pyridinium salt ionic polymer, wherein the method for preparing the isobutenyl-based pyridinium salt ionic polymer comprising:
(1) dissolving the polymer in an organic solvent to obtain a polymer solution, adding a halogen to the polymer solution to carry out a halogenation reaction to obtain a halogenated polymer solution;
(2) adding a pyridine to the halogenated polymer solution and perform an ionization reaction to prepare the isobutylene-based quaternary pyridinium salt ionic polymer;

the polymer is a random copolymer of isobutylene and alkyl styrene;
the halogenation reaction is carried out under irradiation of a visible light, the visible light has a pulsed type light emission mode.

Further, the present invention triggers a halogenation reaction by using a visible light within a specific wavelength range, so that the halogenation reaction is characterized by a highly controllable, low side-reaction and high selectivity, in particular, the visible light within a specific wavelength refers to the light wave within the yellow to red wave range (i.e., the light length is from 560 to 630nm), preferably a LED (light-emitting diode) light source. In the present invention, the light source has an output power of 10-200W.

In the present invention, the pulsed type light emission refers to that the light source emits light waves and stops emitting light waves alternately with an equal time difference, in particular, the pulsed type light emission has a pulse time within the range of 5-40s, preferably 10-30s.

In the present invention, a use of the light irradiation and halogenation method of the present invention can achieve a halogenation reaction efficiency over 80%, preferably over 90%.

In the present invention, halogenation reaction efficiency refers to that for a halogenation substitution reaction carried out according to a free radical mechanism, theoretically when 100% of halogen undergoes hydrogen substitution reaction, 50% of the halogen is substituted on the polymer, the ratio of the actually measured halogen content in the polymer to the theoretical halogen content is the halogenation reaction efficiency.

According to the present invention, the molar ratio of the polymer to the halogen is 1: (0.5-2), preferably 1: (0.8-1.5), based on the molar content of the structural unit provided by alkyl styrene.

According to the present invention, the halogen is liquid bromine.

In the present invention, the halogenation reaction is carried out in an environment away from light, and the temperature of halogenation reaction is not particularly required, for example room temperature.

In the present invention, the halogen is preferably used after being diluted with an organic solvent, and the concentration of the dilution is not particularly limited, as long as it facilitates control of the halogenation reaction.

According to the present invention, the halogen is preferably mixed with an organic solvent to obtain a halogen solution, and the halogen solution is dropwise added to the polymer solution for carrying out a halogenation reaction, so as to control selectivity of the halogenation reaction.

In the present invention, the concentration of the halogen solution is not particularly limited, as long as it facilitates control of the halogenation reaction.

In a preferred embodiment of the present invention, the dropwise addition rate of the halogen solution is controlled such that the halogenation reaction time is within the range of 30-180 minutes.

In a specific embodiment of the present invention, a halogen solution is slowly and dropwise added to a polymer solution, and a photohalogenation reaction is performed under the pulsed type light emission with a wavelength range of 560nm-630nm by an LED light source, a halogenated polymer solution is obtained. To neutralize the hydrogen halide generated during the halogenation reaction process, a certain amount of an alkaline compound (e.g., sodium carbonate, sodium bicarbonate, calcium carbonate, magnesium carbonate, calcium oxide, magnesium oxide) may be added to the polymer solution.

According to the present invention, the content of structural unit provided by alkyl styrene is within the range of 3-25mol%, and the content of structural unit provided by isobutylene is within the range of 75-97mol%, based on the total molar amount of the polymer.

Preferably, the content of structural unit provided by alkyl styrene is within the range of 5-20mol%, and the content of structural unit provided by isobutylene is within the range of 80-95mol%, based on the total molar amount of the polymer.

According to the present invention, the polymer has a weight average molecular weight Mw within the range of 1×10⁴g/mol-1×10⁵g/mol, and a molecular weight distribution coefficient within the range of 2-3.5.

Preferably, the polymer has a weight average molecular weight Mw within the range of 2×10⁴g/mol-8×10⁴g/mol; and a molecular weight distribution coefficient within the range of 2.2-3.

According to the present invention, the content of aluminum ions in said polymer is less than 10ppm, preferably less than 5ppm.

In the present invention, the kind of the organic solvent is not particularly limited, it may be the commonly used organic solvent in the art, preferably at least one of C₆-C₁₀ straight chain alkyl, C₆-C₁₀ cycloalkyl, and C₁-C₄ halogenated alkane; wherein the straight-chain alkane comprises at least one of n-hexane, n-heptane, n-octane, n-nonane, and n-decane; the cycloalkane includes cyclohexane; and the halogenated alkane comprises at least one of dichloromethane, trichloromethane, and tetrachloromethane.

According to the present invention, the pyridine compound has a structure represented by formula (9); 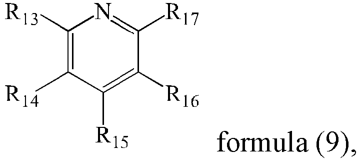 wherein R₁₃, R₁₄, R₁₅, R₁₆, and R₁₇ are each independently hydrogen, halogen atom, C₁-C₂₀ straight chain alkyl, C₁-C₂₀ branched chain alkyl, nitro, amino, or cyano group.

Preferable, R₁₃, R₁₄, R₁₅, R₁₆, and R₁₇ are each independently hydrogen, halogen, C₁-C₁₅ straight chain alkyl, C₁-C₁₅ branched chain alkyl, nitro, amino, or cyano group.

Further preferably, R₁₃, R₁₄, R₁₅, R₁₆, and R₁₇ are each independently hydrogen, halogen, C₁-C₁₀ straight chain alkyl, amino, or cyano group.

In the present invention, the pyridine includes, but is not limited to, at least one selected from the group consisting of pyridine, 2-methylpyridine, 3-methylpyridine, 4-methylpyridine, 5-methylpyridine, 6-methylpyridine, 2,6-dimethylpyridine, 2,4,6-trimethylpyridine, 2-ethylpyridine, 3-ethylpyridine, 4-ethylpyridine, 5-ethylpyridine, 6-ethylpyridine, 2,6-diethylpyridine, 2,4,6-triethylpyridine, 2-propylpyridine, 3-propylpyridine, 4-propylpyridine, 5-propylpyridine, 6-propylpyridine, 2,6-dipropylpyridine, 2,4,6-tripropylpyridine, 2-butyl pyridine, 3-butyl pyridine, 4-butyl pyridine, 5-butyl pyridine, 6-butyl pyridine, 2,6-dibutyl pyridine, 2,4,6-tributyl pyridine, 2-pentylpyridine 3-pentylpyridine, 4-pentylpyridine, 5-pentylpyridine, 6-pentylpyridine, 2,6-dipentylpyridine, 2,4,6-tripentylpyridine, 2-hexylpyridine, 3-hexylpyridine, 4-hexylpyridine, 5-hexylpyridine, 6-hexylpyridine 2-heptylpyridine, 3-heptylpyridine, 4-heptylpyridine, 5-heptylpyridine, 6-heptylpyridine, 2-octylpyridine, 3-octylpyridine, 4-octylpyridine, 5-octylpyridine, 6-octylpyridine, 2-nonylpyridine, 3-nonylpyridine, 4-nonylpyridine, 5-nonylpyridine, 6-nonylpyridine, 2-decylpyridine, 3-decylpyridine, 4-decylpyridine, 5-decylpyridine, 6-decylpyridine, 4-undecylpyridine, 4-dodecylpyridine, 4-triadecylpyridine, 4-tetradecylpyridine, 4-pentadecylpyridine, 4-hexadecylpyridine, 4-heptadecylpyridine 4-Octadecylpyridine, 4-nineteenth alkyl pyridine, 4-twentieth alkyl pyridine, 2-hydroxypyridine, 3-hydroxypyridine, 4-hydroxypyridine, 5-hydroxypyridine, 6-hydroxypyridine, 2,6-dihydroxypyridine, 2,4,6-trihydroxypyridine, 2-fluoropyridine, 3-fluoropyridine, 4-fluoropyridine At least one of 5-fluoropyridine, 6-fluoropyridine, 2-chloropyridine, 3-chloropyridine, 4-chloropyridine, 5-chloropyridine, 6-chloropyridine, 2,3-dichloropyridine, 2,3,6-trichloropyridine, 2,6-diamino-3,5-dinitropyridine, 2,6-diaminopyridine, 2,4,6-triaminopyridine, 2,4,6-trinitropyridine, 2,4,6-trichloropyridine, and 2,4,6-tribromopyridine; the present invention prefers 4-alkylpyridine.

In an embodiment of the present invention, the pyridine is dissolved in an organic solvent halogenated alkane (e.g., tetrachloromethane), the mixture is dropwise added to a halogenated polymer solution, and subjected to an ionization reaction in the presence of a protective gas, the reaction temperature is within the range of 60-150°C, and preferably 80-120°C; the reaction time is within the range of 4-20h, preferably 6-16h.

According to the present invention, the molar ratio of the imidazole to the halogen is (0.8-1.5): 1, preferably (0.9-1.2): 1.

In the present invention, after the ionization reaction reaches a certain degree, the solid insoluble substances are precipitated from the organic solvent, the solvent is filtered and separated after the reaction is finished, and the insoluble ionic polymer is washed with hexane for 1-2 times and then subjected to vacuum drying to prepare the isobutylene-based quaternary pyridinium salt ionic polymer.

The third aspect of the present invention discloses an isobutylene-based cationic salt ionic polymer prepared with the aforementioned method.

In the present invention, depending on the kind of the cationic salt-containing compound, the isobutylene-based cationic polymer is an isobutylene-based quaternary ammonium salt ionic polymer, an isobutylene-based quaternary phosphonium salt ionic polymer, an isobutylene-based imidazolium salt ionic polymer, or an isobutylene-based pyridinium salt ionic polymer.

The fourth aspect of the present invention discloses a use of the aforementioned isobutylene-based cationic salt ionic polymer as an antibacterial agent.

The fifth aspect of the present invention discloses the aforementioned isobutylene-based cationic salt ionic polymer used for inhibiting and killing at least one of bacteria, fungi, and viruses.

In the present invention, the species of bacteria, fungi or viruses that are effectively inhibited or killed by the isobutenyl-based cationic salt ionic polymer are different, according to the various kinds of cationic salts in the isobutenyl-based cationic salt ionic polymer.

In a specific embodiment of the present invention, the isobutenyl-based cationic salt ionic polymer is an isobutenyl-based quaternary ammonium salt ionic polymer, and the isobutenyl-based quaternary ammonium salt ionic polymer can be used for inhibiting and killing bacteria.

In particular, the bacteria are selected from gram-negative bacteria and/or gram-positive bacteria.

In a specific embodiment of the present invention, the isobutenyl-based cationic salt ionic polymer is an isobutenyl-based quaternary phosphonium salt ionic polymer, and the isobutenyl-based quaternary phosphonium salt ionic polymer can be used for inhibiting and killing at least one of bacteria, fungi, and viruses.

In a specific embodiment of the present invention, the isobutenyl-based cationic salt ionic polymer is an isobutenyl-based imidazolium salt ionic polymer, and the isobutenyl-based imidazolium salt ionic polymer can be used for inhibiting and killing bacteria and/or fungi.

Specifically, the bacteria are anaerobes; the fungus is a mould.

In a specific embodiment of the present invention, the isobutenyl-based cationic salt ionic polymer is an isobutenyl-based pyridinium salt ionic polymer, and the isobutenyl-based pyridinium salt ionic polymer can be used for inhibiting and killing at least one of bacteria, fungi and viruses.

The sixth aspect of the present invention discloses an antibacterial polymer material comprising the aforementioned isobutylene-based cationic salt ionic polymer.

In the present invention, the thermal weight loss temperature T_{5wt%} of the isobutylene-based cationic salt ionic polymer is more than 170°C, meets the thermal processing requirement of the ordinary polymer materials, and can be used as an antibiotic agent for preparing antibiotic polymer materials.

According to the present invention, the isobutylene-based cationic salt ionic polymer is used in an amount of 1-10 parts, more preferably 2-7 parts, relative to 100 parts of the polymer material.

In the present invention, the isobutenyl-based cationic salt ionic polymer is used for preparing the antibacterial polymer materials, and the antibacterial agent will not migrate and release, thereby keeping the efficient, stable, low-toxicity, safe, and durable antibacterial and bacteriostatic effects.

According to the present invention, the polymer material is at least one selected from the group consisting of plastics, rubber, fibers, and coatings.

In a specific embodiment of the present invention, when the isobutylene-based cationic salt ionic polymer is an isobutylene-based quaternary ammonium salt ionic polymer, the isobutylene-based quaternary ammonium salt ionic polymer is used in an amount of 1-10 parts, preferably 5-7 parts, relative to 100 parts of the polymer material.

In a specific embodiment of the present invention, when the isobutylene-based cationic salt ionic polymer is an isobutylene-based quaternary phosphonium salt ionic polymer, the isobutylene-based quaternary phosphonium salt ionic polymer is used in an amount of 1-8 parts, preferably 2-6 parts, relative to 100 parts of the polymer material.

In a specific embodiment of the present invention, when the isobutylene-based cationic salt ionic polymer is an isobutylene-based imidazolium salt ionic polymer; the isobutylene-based imidazolium salt ionic polymer is used in an amount of 1-10 parts, preferably 3-7 parts, relative to 100 parts of the polymer material

In a specific embodiment of the present invention, when the isobutylene-based cationic salt ionic polymer is an isobutylene-based pyridinium salt ionic polymer, the isobutylene-based pyridinium salt ionic polymer is used in an amount of 1-10 parts, preferably 3-7 parts, relative to 100 parts of the polymer material.

The present invention will be described in detail below with reference to examples.

The content of structural units, the content of benzyl bromide, and the content of cationic salt (quaternary ammonium salt, quaternary phosphonium salt, imidazolium salt, and pyridinium salt) in the polymer were measured by using an AVANCE400 nuclear magnetic resonance instrument manufactured by Bruker AG in the Switzerland, the magnetic field strength was 9.40 Tesla, the deuterated chloroform (CDCL₃) or deuterated dimethyl sulfoxide (DMSO) was used as a solvent, Tetramethylsilane (TMS) was used as an internal standard, and the measurement was carried out at room temperature.

The molecular weight and the distribution of the polymer were measured by the LC-20A type Gel Permeation Chromatography (GPC) manufactured by Shimadzu Corporation in the Japan, 2 columns of a TSKgel GMH HR-H (30) type chromatographic column manufactured by TOSOH Corporation in the Japan were connected in series, and the calibration curve adopted the polystyrene as a standard sample.

The content of metal elements in the polymer was measured by inductively coupled plasma - atomic emission spectrometry (ICP-OES) according to the China Standard JYT 015-1996.

The thermal decomposition temperature and the thermal weight loss of the polymer were measured by using an METTLER TGA/DSC1 type instrument, the measurement temperature range was 25-600°C, the temperature rise rate was 10°C /min, and the flow rate of nitrogen atmosphere was 50 mL/min.

### Specific embodiment I

The physicochemical parameters of the isobutylene p-methylstyrene random copolymer used in the following Examples and Comparative Examples were shown in Table I-1, and its preparation method can be referenced to the patent document CN104558357B.

**Table I-1**

| Samples | *M*_{W} | *M*ₙ | *M*_{w}/*M*ₙ | P-methylstyrene /mol% | Aluminum ion /ppm |
|---|---|---|---|---|---|
| P-I-1 | 38450 | 14870 | 2.59 | 15.9 | 2.67 |
| P-I-2 | 73400 | 28900 | 2.54 | 12.2 | 1.84 |
| P-I-3 | 46300 | 16000 | 2.88 | 9.2 | 1.69 |
| P-I-4 | 85640 | 28360 | 3.02 | 7 | 2.44 |

The other raw materials used in the following Examples and Comparative Examples were commercially available.

### Example I-1

### (1) Photobromination reaction

In a 1,000mL three-necked flask equipped with a magnetic stirrer, 32g of polymer P-I-1 (wherein the content of p-methylstyrene structural units was 0.077 mol) was dissolved in a mixed solvent of n-hexane (80mL) and tetrachloromethane (80mL), and 6.5g of sodium bicarbonate powder was added. The molar ratio of the polymer to liquid bromine was 1:1 based on the molar content of the structural units provided by p-methylstyrene. The bromination reaction was carried out in a lucifugal laboratory. A pipette was used for drawing 4mL of liquid bromine and adding into a constant pressure dropping funnel (protected from light) containing 30mL of tetrachloromethane. An LED light source with the wavelength of 595nm was adopted for irradiation to carry out the photobromination reaction, the power of the light source was 80W, and the pulse time was 10s. The light source was switched on to perform the bromination reaction, the liquid bromine was dropwise added at a slow speed, and the bromination reaction was carried out under the irradiation of a pulse light source until the liquid bromine was dropwise added completely, the reaction was continuously kept for 3-5min, when the color of the liquid bromine became light yellow, the light source was switched off and the reaction was stopped, the bromination reaction time was about 120min, a brominated polymer solution XP-I-1 was obtained.

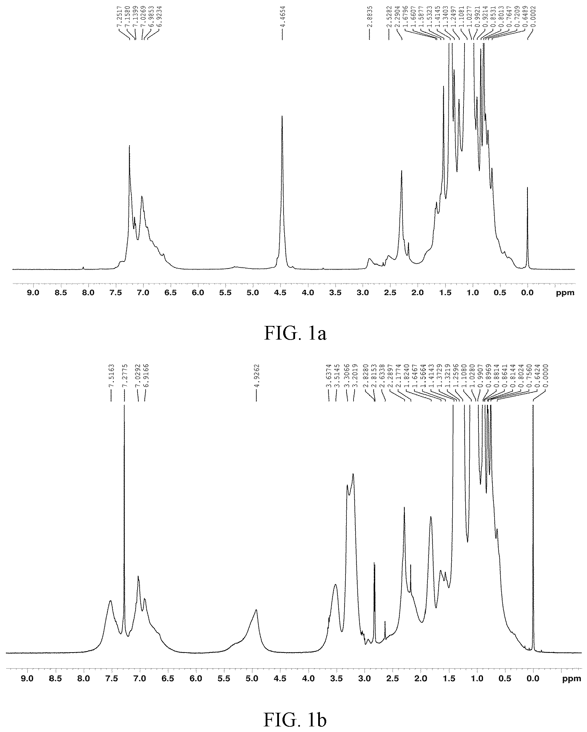

10 ml of the above brominated reactant solution was subjected to a centrifugal treatment to separate insoluble precipitates contained therein, the clear solution was dried under vacuum at 40°C to a constant weight, and the concentration of the glue solution was measured to be 14.3 wt%. The content of side group benzyl bromide in the reactant was 11.4 mol% (the benzyl bromination rate was 71.7%) by measuring with a nuclear magnetic hydrogen spectrometry, the main chain tertiary carbon hydrogen was converted into tertiary carbon bromine through bromine substitution reaction, there was no characteristic peak of tertiary carbon hydrogen in the nuclear magnetic hydrogen spectrum. The nuclear magnetic hydrogen spectrogram was shown in FIG. 1a, wherein the characteristic peak of chemical shift at 4.4654ppm was the side group benzyl bromide characteristic peak.

### (2) Ionization reaction

After removing insoluble solids from the brominated polymer solution XP-I-1 by centrifugation, 50g of clear solution was taken and added into a 250mL three-necked bottle equipped with a magnetic stirrer, and the three-necked bottle was placed in a constant temperature oil bath. 4mL of N,N-dimethyltetradecylamine (dissolved with 5mL of dichloromethane) (in formula 6, R₃ and R₄ were methyl, and R₅ was C₁₄ straight chain alkyl) was added, the molar ratio of the tertiary amine to liquid bromine was 1.1:1, the reaction was performed at 60°C for 4 hours under protection of nitrogen gas. The brominated polymer gradually precipitated from the solvent during the ionization reaction process to form a blocky micelle cluster. After the reaction was finished, the blocky micelle cluster was separated from the solvent, and then pressed and washed in hexane for 2 times, the washed blocky micelle cluster was taken out, and subjected to vacuum drying at 40°C to a constant weight, the isobutenylene-based quaternary ammonium salt ionic polymer A-I-1 was prepared.

The quaternary ammonium salt content was measured by nuclear magnetic hydrogen spectroscopy, the result was shown in FIG. 1b. The result indicated that the signal peak (4.4654ppm) of side group benzyl bromide disappeared, all the side group benzyl bromide was converted into benzyl quaternary ammonium salt, and the main chain tertiary carbon quaternary ammonium salt content can be calculated through integration of the peak area of methyl in N,N-dimethyl tetradecylamine. The total quaternary ammonium salt group content was measured to be 15.3 mol%, the side group benzyl quaternary ammonium salt group content was determined to be 11.4 mol%, thus the main chain tertiary carbon quaternary ammonium salt group content was calculated to be 3.9 mol%. The nuclear magnetic hydrogen spectrogram was shown in FIG. 1b, wherein the characteristic peak with a chemical shift of 3-4ppm was the signal characteristic peak of methyl in quaternary ammonium salt group, and the characteristic peak with a chemical shift of 4.5-5.5ppm was the signal characteristic peak of methylene in benzyl quaternary ammonium salt group.

Through test, analysis, and calculation, the isobutylene-based quaternary ammonium salt ionic polymer A-I-1 was composed of 12.6mol% of structural unit A, 3.3mol% of structural unit B, and 84.1mol% of structural unit C.

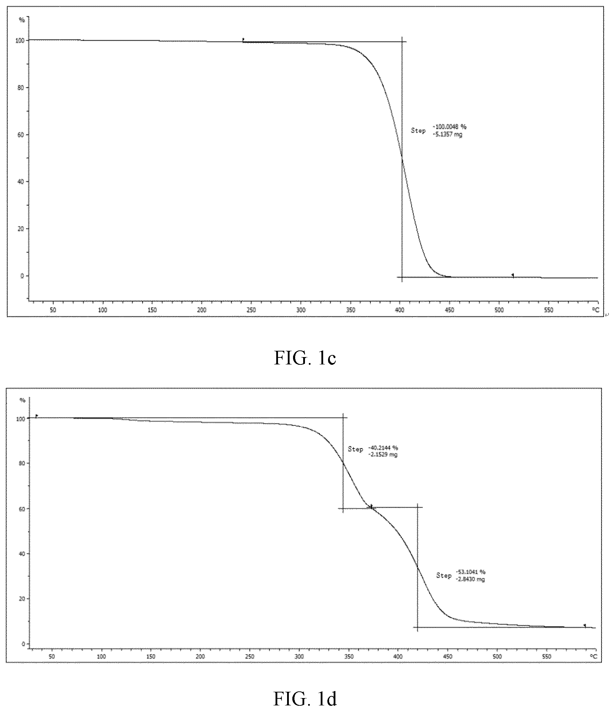

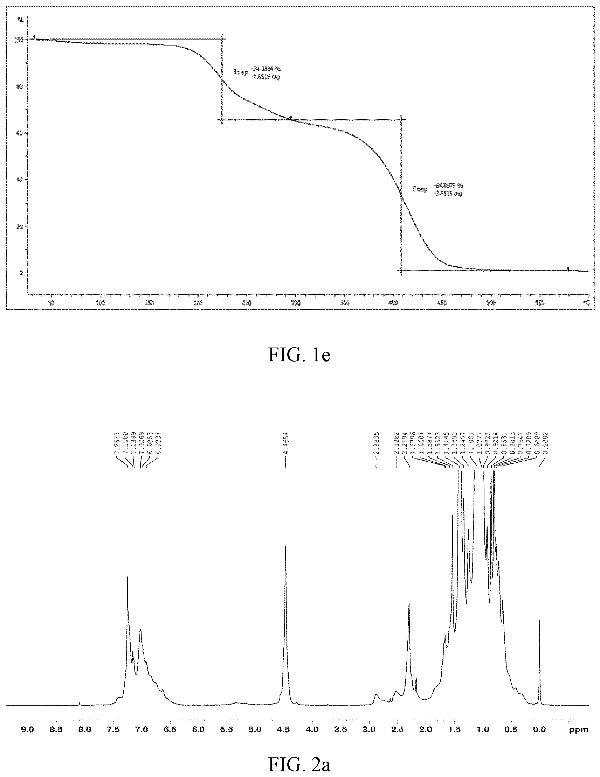

The thermal weight loss analysis data of the isobutylene-p-methylstyrene copolymer P-I-1, the brominated isobutylene-p-methylstyrene copolymer XP-I-1, and the isobutenyl-based quaternary ammonium salt ionic polymer A-I-1 was shown in Table I-2, and the thermal weight loss curve graphs were shown in FIG. 1c, FIG. 1d, and FIG. 1e respectively.

As illustrated by FIG. 1c, the isobutylene-p-methylstyrene copolymer P-I-1 only had an one-stage thermal weight loss (1 step), the thermal weight loss temperature was about 402.3°C, and the weight loss rate was 100 wt%.

As shown by FIG. 1d, the brominated isobutylene-p-methylstyrene copolymer XP-I-1 had two-stage thermal weight loss (2 steps), the first stage was concentrated at about 342.2°C, the weight loss rate was 40.2wt%, wherein the thermal decomposition was carried out on the carbon bromine group; the second stage was concentrated at about 420.2°C, the weight loss rate was 53.1wt%, wherein the thermal decomposition was performed on the polymer main chain structure, which was consistent with the isobutylene-p-methylstyrene copolymer P-I-1.

As can be seen from FIG. 1e, the isobutylene-based quaternary ammonium salt ionic polymer A-I-1 had two-stage thermal weight loss (2 steps), the first stage was concentrated at about 219.8°C, the weight loss rate was 34.4wt%, wherein the thermal decomposition was carried out on the quaternary ammonium salt group; the second stage was concentrated at about 408.6°C, the weight loss rate was 64.6wt%, wherein the thermal decomposition was performed on the polymer main chain structure, which was consistent with the isobutylene-p-methylstyrene copolymer P-I-1, the thermal decomposition stage of the carbon bromine group in the XP-I-1 did not exist, it demonstrated that the carbon bromine groups were completely ionized by the quaternary ammonium salt, and the temperature for 5wt% thermal weight loss of the isobutelene-based quaternary ammonium salt ionic polymer A-I-1 was 191.3°C.

**Table I-2**

| Samples | Segment 1 weight loss temperature (°C) | Segment 1 weight loss ratio (wt%) | Segment 2 weight loss temperature (°C) | Segment 2 weight loss ratio (wt%) | T_{5wt}% (°C) |
|---|---|---|---|---|---|
| P-I-1 | 402.3 | 100 | / | / | 358.2 |
| XP-I-1 | 342.2 | 40.2 | 420.3 | 53.1 | 306.4 |
| A-I-1 | 219.8 | 34.4 | 408.6 | 64.6 | 191.3 |

### Example I-2

An isobutenylene-based quaternary ammonium salt ionic polymer was prepared according to the same method in Example I-1, except that:
In step (2), 2mL of N,N-dimethyltetradecylamine (in formula 6, R₃ and R₄ were methyl, and R₅ was C₁₄ straight chain alkyl) and 2mL of N,N-dimethyldecylamine (in formula 6, R₃ and R₄ were methyl, and R₅ was C₁₀ straight chain alkyl) (dissolved with 5mL of dichloromethane) were added, the molar ratio of the tertiary amine to liquid bromine was 1.1: 1, the reaction was performed at 60°C for 4 hours under protection of nitrogen gas. The composite type isobutenylene-based quaternary ammonium salt ionic polymer A-I-2 was obtained.

Through test, the total quaternary ammonium salt group content in the isobutenyl-based quaternary ammonium salt ionic polymer A-I-2 was measured to be 15.3 mol%, the side group benzyl quaternary ammonium salt group content was determined to be 11.4 mol%, thus the main chain tertiary carbon quaternary ammonium salt group content was calculated to be 3.9 mol%.

Through test, analysis, and calculation, the isobutylene-based quaternary ammonium salt ionic polymer A-I-2 was composed of 12.6mol% of structural unit A, 3.3mol% of structural unit B, and 84.1mol% of structural unit C.

### Example I-3

### (1) Photobromination reaction

In a 1,000mL three-necked flask equipped with a magnetic stirrer, 32g of polymer P-1-1 (wherein the content of p-methylstyrene structural units was 0.077 mol) was dissolved in a mixed solvent of n-hexane (60mL) and dichloromethane (100mL), and 10g of sodium bicarbonate powder was added. The molar ratio of the polymer to liquid bromine was 1:1.5 based on the molar content of the structural units provided by p-methylstyrene. The bromination reaction was carried out in a lucifugal laboratory. A pipette was used for drawing 6mL of liquid bromine and adding into a constant pressure dropping funnel (protected from light) containing 40mL of dichlorohexane mixed solvent. An LED light source with the wavelength of 630nm was adopted for irradiation to carry out the photobromination reaction, the power of the light source was 60W, and the pulse time was 15 s. The light source was switched on to perform the bromination reaction, the liquid bromine was dropwise added at a slow speed, and the bromination reaction was carried out under the irradiation of a pulse light source until the liquid bromine was dropwise added completely, the reaction was continuously kept for 3-5min, when the color of the liquid bromine became light yellow, the light source was switched off and the reaction was stopped, the bromination reaction time was about 180min, a brominated polymer solution XP-I-2 was obtained.

10 ml of the above brominated reactant solution was subjected to a centrifugal treatment to separate insoluble precipitates contained therein, the clear solution was dried under vacuum at 40°C to a constant weight, and the concentration of the glue solution was measured to be 15.3 wt%. The content of side group benzyl bromide in the reactant was 13.6 mol% (the benzyl bromination rate was 85.8%) by measuring with a nuclear magnetic hydrogen spectrometry.

### (2) Ionization reaction

After removing insoluble solids from the brominated polymer solution XP-I-2 by centrifugation, 50g of clear solution was taken and added into a 250mL three-necked bottle equipped with a magnetic stirrer, and the three-necked bottle was placed in a constant temperature oil bath. 4.5mL of triethylamine (dissolved with 5mL of dichloromethane) (in formula 6, R₃, R₄ and R₅ were ethyl respectively) was added, the molar ratio of the tertiary amine to liquid bromine was 1.5: 1, the reaction was performed at 60°C for 5 hours under protection of nitrogen gas. The brominated polymer gradually precipitated from the solvent during the ionization reaction process to form a blocky micelle cluster. After the reaction was finished, the blocky micelle cluster was separated from the solvent, and then pressed and washed in hexane for 2 times, the washed blocky micelle cluster was taken out, and subjected to vacuum drying at 40°C to a constant weight, the isobutenylene-based quaternary ammonium salt ionic polymer A-I-3 was prepared.

Through test, the total quaternary ammonium salt group content in the isobutenyl-based quaternary ammonium salt ionic polymer A-I-3 was measured to be 22.4 mol%, the side group benzyl quaternary ammonium salt group content was determined to be 13.6 mol%, thus the main chain tertiary carbon quaternary ammonium salt group content was calculated to be 8.8 mol%.

Through test, analysis, and calculation, the isobutylene-based quaternary ammonium salt ionic polymer A-I-3 was composed of 14.7mol% of structural unit A, 1.2mol% of structural unit B, and 84.1mol% of structural unit C.

### Example I-4

### (1) Photobromination reaction

In a 1,000mL three-necked flask equipped with a magnetic stirrer, 35g of polymer P-1-2 (wherein the content of p-methylstyrene structural units was 0.067 mol) was dissolved in a mixed solvent of n-hexane (60mL) and dichloromethane (100mL), and 7g of solid sodium bicarbonate powder was added. The molar ratio of the polymer to liquid bromine was 1:1.2 based on the molar content of the structural units provided by p-methylstyrene. The bromination reaction was carried out in a lucifugal laboratory. A pipette was used for drawing 4mL of liquid bromine and adding into a constant pressure dropping funnel (protected from light) containing 40mL of dichloromethane solvent. The bromination method was adopted according to that in ExampleI-1, except that the light source power was 60W, the pulse time was 15s, and the bromination reaction time was about 140min, a brominated polymer solution XP-I-3 was obtained.

10 ml of the above brominated reactant solution was subjected to a centrifugal treatment to separate insoluble precipitates contained therein, the clear solution was dried under vacuum at 40°C to a constant weight, and the concentration of the glue solution was measured to be 16.1 wt%. The content of side group benzyl bromide in the reactant was 10.1 mol% (the benzyl bromination rate was 82.8%) by measuring with a nuclear magnetic hydrogen spectrometry.

### (2) Ionization reaction

After removing insoluble solids from the brominated polymer solution XP-I-3 by centrifugation, 50g of clear solution was taken and added into a 250mL three-necked bottle equipped with a magnetic stirrer, and the three-necked bottle was placed in a constant temperature oil bath. 3mL of N,N-dimethyloctylamine (dissolved with 5mL of dichloromethane) (in formula 6, R₃ and R₄ were methyl, and R₅ was C₈ straight chain alkyl) was added, the molar ratio of the tertiary amine to liquid bromine was 1: 1, the reaction was performed at 60°C for 4 hours under protection of nitrogen gas. The brominated polymer gradually precipitated from the solvent during the ionization reaction process to form a blocky micelle cluster. After the reaction was finished, the blocky micelle cluster was separated from the solvent, and then pressed and washed in hexane for 2 times, the washed blocky micelle cluster was taken out, and subjected to vacuum drying at 40°C to a constant weight, the isobutenylene-based quaternary ammonium salt ionic polymer A-I-4 was prepared.

Through test, the total quaternary ammonium salt group content in the isobutenyl-based quaternary ammonium salt ionic polymer A-I-4 was measured to be 13.5 mol%, the side group benzyl quaternary ammonium salt group content was determined to be 10.1 mol%, thus the main chain tertiary carbon quaternary ammonium salt group content was calculated to be 3.4 mol%.

Through test, analysis, and calculation, the isobutylene-based quaternary ammonium salt ionic polymer A-I-4 was composed of 11.8mol% of structural unit A, 0.4mol% of structural unit B, and 87.8mol% of structural unit C.

### Example I-5

### (1) Photobromination reaction

In a 1,000mL three-necked flask equipped with a magnetic stirrer, 35g of polymer P-1-3 (wherein the content of p-methylstyrene structural units was 0.052 mol) was dissolved in a mixed solvent of n-hexane (80mL) and dichloromethane (100mL), and 5.8g of solid sodium bicarbonate powder was added. The molar ratio of the polymer to liquid bromine was 1:1.3 based on the molar content of the structural units provided by p-methylstyrene. The bromination reaction was carried out in a lucifugal laboratory. A pipette was used for drawing 3.5mL of liquid bromine and adding into a constant pressure dropping funnel (protected from light) containing 20mL of dichlorohexane solvent. The bromination method was adopted according to that in Example I-1, except that the bromination reaction time was about 100min, a brominated polymer solution XP-I-4 was obtained.

10 ml of the above brominated reactant solution was subjected to a centrifugal treatment to separate insoluble precipitates contained therein, the clear solution was dried under vacuum at 40°C to a constant weight, and the concentration of the glue solution was measured to be 16.7 wt%. The content of side group benzyl bromide in the reactant was 8.3 mol% (the benzyl bromination rate was 90.2%) by measuring with a nuclear magnetic hydrogen spectrometry.

### (2) Ionization reaction

After removing insoluble solids from the brominated polymer solution XP-I-4 by centrifugation, 50g of clear solution was taken and added into a 250mL three-necked bottle equipped with a magnetic stirrer, and the three-necked bottle was placed in a constant temperature oil bath. 3.7mL of tributylamine (dissolved with 5mL of dichloromethane) (in formula 6, R₃, R₄ and R₅ were n-butyl) was added, the molar ratio of the tertiary amine to liquid bromine was 1.1: 1, the reaction was performed at 60°C for 4 hours under protection of nitrogen gas. The brominated polymer gradually precipitated from the solvent during the ionization reaction process to form a blocky micelle cluster. After the reaction was finished, the blocky micelle cluster was separated from the solvent, and then pressed and washed in hexane for 2 times, the micelle was taken out, and subjected to vacuum drying at 40°C to a constant weight, the isobutenylene-based quaternary ammonium salt ionic polymer A-I-5 was prepared.

Through test, the total quaternary ammonium salt group content in the isobutenyl-based quaternary ammonium salt ionic polymer A-I-5 was measured to be 11.1 mol%, the side group benzyl quaternary ammonium salt group content was determined to be 8.3 mol%, thus the main chain tertiary carbon quaternary ammonium salt group content was calculated to be 2.8 mol%.

Through test, analysis, and calculation, the isobutylene-based quaternary ammonium salt ionic polymer A-I-5 was composed of 8.7mol% of structural unit A, 0.5mol% of structural unit B, and 90.8mol% of structural unit C.

### Example I-6

### (1) Photobromination reaction

In a 1,000mL three-necked flask equipped with a magnetic stirrer, 35g of polymer P-1-3 (wherein the content of p-methylstyrene structural units was 0.052 mol) was dissolved in a mixed solvent of cyclohexane (80mL) and tetrachloromethane (80mL), and 3.6g of solid sodium bicarbonate powder was added. The molar ratio of the polymer to liquid bromine was 1:0.8 based on the molar content of the structural units provided by p-methylstyrene. The bromination reaction was carried out in a lucifugal laboratory. A pipette was used for drawing 2.4mL of liquid bromine and adding into a constant pressure dropping funnel (protected from light) containing 20mL of tetrachloromethane solvent. The bromination method was adopted according to that in Example I-1, except that the light source power was 50W, and the bromination reaction time was about 80min, a brominated polymer solution XP-I-5 was obtained.

10 ml of the above brominated reactant solution was subjected to a centrifugal treatment to separate insoluble precipitates contained therein, the clear solution was dried under vacuum at 40°C to a constant weight, and the concentration of the glue solution was measured to be 14.8 wt%. The content of side group benzyl bromide in the reactant was 5.1 mol% (the benzyl bromination rate was 55.4%) by measuring with a nuclear magnetic hydrogen spectrometry.

### (2) Ionization reaction

After removing insoluble solids from the brominated polymer solution XP-I-5 by centrifugation, 50g of clear solution was taken and added into a 250mL three-necked bottle equipped with a magnetic stirrer, and the three-necked bottle was placed in a constant temperature oil bath. 1.3mL of N,N-dimethylphenylamine (dissolved with 5mL of tetrachloromethane) (in formula 6, R₃ and R₄ were methyl, and R₅ was phenyl) was added, the molar ratio of the tertiary amine to liquid bromine was 1.1: 1, the reflux reaction was performed at 80°C for 8 hours under protection of nitrogen gas. The brominated polymer gradually precipitated from the solvent during the ionization reaction process to form insoluble colloidal particles. After the reaction was finished, the colloidal particles were separated from the solvent, and then pressed and washed in hexane for 2 times, the micelle was taken out, and subjected to vacuum drying at 40°C to a constant weight, the isobutenylene-based quaternary ammonium salt ionic polymer A-I-6 was prepared.

Through test, the total quaternary ammonium salt group content in the isobutenyl-based quaternary ammonium salt ionic polymer A-I-6 was measured to be 6.5 mol%, the side group benzyl quaternary ammonium salt group content was determined to be 5.1 mol%, thus the main chain tertiary carbon quaternary ammonium salt group content was calculated to be 1.4 mol%.

Through test, analysis, and calculation, the isobutylene-based quaternary ammonium salt ionic polymer A-I-6 was composed of 5.7mol% of structural unit A, 3.5mol% of structural unit B, and 90.8mol% of structural unit C.

### Example I-7

### (1) Photobromination reaction

In a 1,000mL three-necked flask equipped with a magnetic stirrer, 35g of polymer P-1-4 (wherein the content of p-methylstyrene structural units was 0.041 mol) was dissolved in a mixed organic solvent of cyclohexane (80mL) and tetrachloromethane (80mL), and 5.2g of solid sodium bicarbonate powder was added. The molar ratio of the polymer to liquid bromine was 1:1.5 based on the molar content of the structural units provided by p-methylstyrene. A pipette was used for drawing 3.2mL of liquid bromine and adding into a constant pressure dropping funnel (protected from light) containing 30mL of tetrachloromethane solvent. An LED light source with the wavelength of 630nm was adopted for irradiation to carry out the photobromination reaction, the power of the light source was 40W, and the pulse time was 20 s. The light source was switched on to perform the bromination reaction, the liquid bromine was dropwise added at a slow speed, and the bromination reaction was carried out under the irradiation of a pulse light source until the liquid bromine was dropwise added completely, the light source was switched off and the reaction was stopped, the bromination reaction time was about 140min, a brominated polymer solution XP-I-6 was obtained.

10 ml of the above brominated reactant solution was subjected to a centrifugal treatment to separate insoluble precipitates contained therein, the clear solution was dried under vacuum at 40°C to a constant weight, and the concentration of the glue solution was measured to be 14.1 wt%. The content of side group benzyl bromide in the reactant was 5.2 mol% (the benzyl bromination rate was 74.2%) by measuring with a nuclear magnetic hydrogen spectrometry.

### (2) Ionization reaction

After removing insoluble solids from the brominated polymer solution XP-I-6 by centrifugation, 50g of clear solution was taken and added into a 250mL three-necked bottle equipped with a magnetic stirrer, and the three-necked bottle was placed in a constant temperature oil bath. 1.5mL of N,N-dimethylphenylamine (dissolved with 5mL of tetrachloromethane) was added, the molar ratio of the tertiary amine to liquid bromine was 1.1: 1, the reaction was performed at 80°C for 8 hours under protection of nitrogen gas. The brominated polymer gradually precipitated from the solvent during the ionization reaction process to form insoluble colloidal particles. After the reaction was finished, the colloidal particles were separated from the solvent, and then pressed and washed in hexane for 2 times, the micelle was taken out, and subjected to vacuum drying at 40°C to a constant weight, the isobutenylene-based quaternary ammonium salt ionic polymer A-I-7 was prepared.

The content of quaternary ammonium salt was determined by adopting nuclear magnetic hydrogen spectrometry, the benzyl bromide was partially converted into quaternary ammonium salt, the total quaternary ammonium salt content was 8.7mol%, the side group benzyl quaternary ammonium salt content was 5.2mol%, and the main chain tertiary carbon quaternary ammonium salt content was 3.5 mol%.

The isobutylene-based quaternary ammonium salt ionic polymer A-I-7 was composed of 6.5mol% of structural unit A, 0.5mol% of structural unit B, and 93mol% of structural unit C.

### Comparative Example I-1

### (1) Photobromination reaction

In a 1,000mL three-necked flask equipped with a magnetic stirrer, 32g of polymer P-I-1 (wherein the content of p-methylstyrene structural units was 0.077 mol) was dissolved in a mixed solvent of n-hexane (80mL) and tetrachloromethane (80mL), and 4.1g of sodium bicarbonate powder was added. The molar ratio of the polymer to liquid bromine was 1:1 based on the molar content of the structural units provided by p-methylstyrene. A pipette was used for drawing 4mL of liquid bromine in two times, that is, drawing 2mL of liquid bromine and adding into a constant pressure dropping funnel (protected from light) containing 15mL of tetrachloromethane for each time. An LED light source with the wavelength of 595nm was adopted for irradiation to carry out the photobromination reaction, the power of the light source was 80W. The liquid bromine solution in the constant-pressure dropping funnel was added into the polymer solution at an one-off manner, the light source was switched on to perform the bromination reaction, the bromination reaction with violent smoking was taken place, a large amount of generated HBr cannot be neutralized, the bromination reaction time was 10min, a colloidal solution system was subjected to color fading, the light source was switched off, and the reaction was stopped. HBr was neutralized by adding 100mL of aqueous NaOH solution having a concentration of 0.1wt%, a brominated polymer solution XDP-I-1 was obtained.

5ml of the above brominated reactant solution was dried under vacuum at 40°C to a constant weight,, and the content of benzyl bromide was only 1.1mol% (the benzyl bromination rate was 6.9%) measuring with a nuclear magnetic hydrogen spectrometry, the bromination rate was extremely low, and a large amount of brominated n-hexane was contained in the brominated polymer solution.

### (2) Ionization reaction

50g of the above-mentioned clear solution of brominated polymer solution XDP-I-1 was added into a 250mL three-necked bottle equipped with a magnetic stirrer, and the three-necked bottle was placed in a constant temperature oil bath. 4mL of N,N-dimethyltetradecylamine (dissolved with SmL of dichloromethane) (in formula 6, R₃ and R₄ were methyl, and R₅ was C₁₄ straight chain alkyl) was added, the molar ratio of the tertiary amine to liquid bromine was 1.1:1, the reaction was performed at 60°C for 4 hours under protection of nitrogen gas. After the reaction was finished, the insoluble micelle and the solvent were filtered and separated, then washed in acetone and filtered for 2 times, the solid matter was taken out, and subjected to vacuum drying at 40°C to a constant weight, the isobutenylene-based quaternary ammonium salt ionic polymer D-I-1 was prepared.

The quaternary ammonium salt content was measured by nuclear magnetic hydrogen spectroscopy, the benzyl bromide was completely converted into quaternary ammonium salt, the total content of quaternary ammonium salt was 1.1mol%, the content of side group benzyl quaternary ammonium salt group was 1.1mol%, and main chain did not contain tertiary carbon quaternary ammonium group.

Through test, analysis, and calculation, the isobutylene-based quaternary ammonium salt ionic polymer D-I-1 was composed of 1.1mol% of structural unit A, 14.8mol% of structural unit B, and 84.1mol% of structural unit C.

### Test Example I

The isobutylene-based quaternary ammonium salt polymer prepared in Example I-1 and LDPE were blended to prepare the anti-bacterial plastics, *Escherichia coli* and *Staphylococcus aureus* were used as gram-negative bacteria and gram-positive bacteria, respectively, the antibacterial performance test was performed on the anti-bacterial plastics.

The isobutylylene-based quaternary ammonium salt polymer and LDPE resin were mixed in a mass ratio of 2:8 by adopting a Polylab OS PTW 16/40 type twin-screw extruder, the melt extrusion and granulation were implemented at the temperature of 135°C to prepare an antibacterial master batch containing 20% isobutylylene-based quaternary ammonium salt polymer, the antibacterial master batch and the LDPE resin were then mixed according to different proportions respectively, and the mixer was subjected to the melt extrusion and granulation by using the twin-screw extruder, the antibacterial plastics having the mass contents of 1%, 3%, 5%, 7%, and 10% of the isobutylylene-based quaternary ammonium salt polymer were produced.

The anti-bacterial plastic pellets were subjected to the compression molding by using a tablet press at the temperature of 130°C and the pressure of 20 MPa for 3min respectively; then subjected to a cold pressing under the pressure of 15MPa for 10min to obtain an experimental sheet with the thickness of 1mm, which was placed for 24h and then cut into the test sample piece having the dimensions of 20mm×20 mm.
(1) The test sample piece was placed in a six-well cell culture plate and sterilized by UV irradiation for 30min on both sides. 30µL of bacterial suspension with the concentration of 1×10⁶CFU/mL was dropwise added on the surface of each sample piece, and the bacterial solution was covered by a sterilized round cover glass, such that the bacterial solution was tiled on the sample piece surface. The six-well cell culture plate was put into a constant-temperature incubator at 37°C for culture, and the relative humidity was kept to be more than 90%. After 24h, a pipette was used for adding 2mL of normal saline to each well of the six-well cell culture plate to wash the sample piece surface, and the six-well cell culture plate was subjected to ultrasonic treatment for Imin to disperse the bacteria. A pipette was used for sucking 100µL of flushing fluid, which was subjected to a gradient dilution by using the normal saline, a diluent with a proper dilution multiple was selected for coating on a nutrient agar plate, which was cultured for 24h in a constant-temperature incubator at 37°C, a plate with the bacterial colony number of 30-300 was selected for counting, the number of viable bacteria on the sample piece surface was counted, and the antibacterial rate R was calculated. The results were shown in Table I-3.

*R* = [(A-B)/A] × 100%, wherein A was the number of viable bacteria on the surface of a plastic sample piece without adding the antibacterial agent, and B was the number of viable bacteria on the surface of the antibacterial plastic sample piece.

**Table I-3**

| Samples | Escherichia coli | | Staphylococcus aureus | |
|---|---|---|---|---|
| | Bacterial number CFU/mL | Antibacterial rate % | Bacterial number CFU/mL | Antibacterial rate % |
| LDPE | 7.12×10⁸ | 0 | 1.17×10⁹ | 0 |
| 1%-LDPE | 5.88×10⁸ | 17.42 | 8.22×10⁸ | 29.77 |
| 3%-LDPE | 3.64×10⁸ | 48.94 | 4.58×10⁸ | 60.84 |
| 5%-LDPE | 2.18×10⁸ | 69.42 | 4.19×10⁷ | 96.42 |
| 7%-LDPE | 5.03×10⁷ | 92.94 | 0 | 100 |
| 10%-LDPE | 1.29×10⁴ | >99.99 | 0 | 100 |

(2) 6 anti-bacterial plastics sample pieces were weighed, and put into a conical flask, the deionized water was added in a proportion of 0.1g/mL according to the requirement of China national standard GB/T16886.12-2005, the sample pieces were placed in a constant-temperature water bath oscillator at 37°C, and vibrated at a rotating speed of 150 r/min and soaked, the antibacterial properties of the sample pieces after 15 days and 30 days of soaking were tested respectively, wherein the testing method was the same as that mentioned above, the results of antibacterial properties after 15 days of soaking were shown in Table I-4, and the results of antibacterial properties after 30 days of soaking were shown in Table I-5.

**Table I-4**

| Samples | Escherichia coli | | Staphylococcus aureus | |
|---|---|---|---|---|
| | Bacterial number CFU/mL | Antibacterial rate % | Bacterial number CFU/mL | Antibacterial rate % |
| LDPE | 5.47×10⁸ | 0 | 7.77× 10⁸ | 0 |
| 1%-LDPE | 4.08×10⁸ | 25.43 | 4.31×10⁸ | 44.53 |
| 3%-LDPE | 2.43×10⁸ | 55.57 | 1.68×10⁸ | 78.37 |
| 5%-LDPE | 1.19×10⁸ | 78.23 | 0 | 100 |
| 7%-LDPE | 2.63×10⁶ | 99.52 | 0 | 100 |
| 10%-LDPE | 4.62×10³ | >99.99 | 0 | 100 |

**Table I-5**

| Samples | Escherichia coli | | Staphylococcus aureus | |
|---|---|---|---|---|
| | Bacterial number CFU/mL | Antibacterial rate % | Bacterial number CFU/mL | Antibacterial rate % |
| LDPE | 5.88×10⁸ | 0 | 9.26×10⁸ | 0 |
| 1%-LDPE | 4.48×10⁸ | 23.88 | 5.42×10⁸ | 41.43 |
| 3%-LDPE | 2.63×10⁸ | 55.33 | 2.55×10⁸ | 72.44 |
| 5%-LDPE | 1.40×10⁸ | 76.24 | 0 | 100 |
| 7%-LDPE | 1.91× 10⁷ | 96.76 | 0 | 100 |
| 10%-LDPE | 6.44×10³ | >99.99 | 0 | 100 |

As can be seen from the above results, the antibacterial plastics were produced by blending LDPE with the isobutylene-based quaternary ammonium salt ionic polymer prepared in Example I-1, which was regarded as the antibacterial agent, when the dosage of the antibacterial agent was more than 5 parts, the antibacterial agent showed desirable antibacterial effect, the antibacterial rate for gram-negative bacteria and gram-positive bacteria in 24 hours was more than 70%, and the antibacterial effect was still good when the antibacterial plastics were soaked in water for 15-30 days.

### Specific embodiment II

The physicochemical parameters of the isobutylene p-methylstyrene random copolymer used in the following Examples and Comparative Examples were shown in Table II-1, and its preparation method can be referenced to the patent document CN104558357B.

**Table II-1**

| Samples | *M*_{w} | *M*ₙ | *M*_{w}/*M*ₙ | P-methylstyrene /mol% | Aluminum ion /ppm |
|---|---|---|---|---|---|
| P-II-1 | 38450 | 14870 | 2.59 | 15.9 | 2.67 |
| P-II-2 | 55300 | 20300 | 2.72 | 11.4 | 2.46 |
| P-II-3 | 26300 | 9670 | 2.72 | 8.6 | 1.79 |
| P-II-4 | 85640 | 28360 | 3.02 | 7 | 2.44 |

The other raw materials used in the following Examples and Comparative Examples were commercially available.

### Example II-1

### (1) Photobromination reaction

In a 1,000mL three-necked flask equipped with a magnetic stirrer, 32g of polymer P-II-1 (wherein the content of p-methylstyrene structural units was 0.077 mol) was dissolved in a mixed solvent of n-hexane (80mL) and tetrachloromethane (80mL), and 6.5g of sodium bicarbonate powder was added. The molar ratio of the polymer to liquid bromine was 1:1 based on the molar content of the structural units provided by p-methylstyrene. The bromination reaction was carried out in a lucifugal laboratory. A pipette was used for drawing 4mL of liquid bromine and adding into a constant pressure dropping funnel (protected from light) containing 30mL of tetrachloromethane. An LED light source with the wavelength of 595nm was adopted for irradiation to carry out the photobromination reaction, the power of the light source was 80W, and the pulse time was 10s. The light source was switched on to perform the bromination reaction, the liquid bromine was dropwise added at a slow speed, and the bromination reaction was carried out under the irradiation of a pulse light source until the liquid bromine was dropwise added completely, the reaction was continuously kept for 3-5min, when the color of the liquid bromine became light yellow, the light source was switched off and the reaction was stopped, the bromination reaction time was about 120min, a brominated polymer solution XP-II-1 was obtained.

10 ml of the above brominated reactant solution was subjected to a centrifugal treatment to separate insoluble precipitates contained therein, the clear solution was dried under vacuum at 40°C to a constant weight, and the concentration of the glue solution was measured to be 14.3 wt%. The content of side group benzyl bromide in the reactant was 11.4 mol% (the benzyl bromination rate was 71.7%) by measuring with a nuclear magnetic hydrogen spectrometry, the main chain tertiary carbon hydrogen was converted into tertiary carbon bromine through bromine substitution reaction, there was no characteristic peak of tertiary carbon hydrogen in the nuclear magnetic hydrogen spectrum. The nuclear magnetic hydrogen spectrogram was shown in FIG. 2a, wherein the characteristic peak of chemical shift at 4.4654ppm was the side group benzyl bromide characteristic peak.

### (2) Ionization reaction

After removing insoluble solids from the brominated polymer solution XP-II-1 by centrifugation, 50g of clear solution was taken and added into a 250mL three-necked bottle equipped with a magnetic stirrer, and the three-necked bottle was placed in a constant temperature oil bath. 3.8g of triphenylphosphine (dissolved with 10mL of dichloromethane) (in formula 7, R₆, R₇, and R₈ were phenyl) was added, the molar ratio of the tertiary phosphine to liquid bromine was 1:1, the reflux reaction was performed at 80°C for 16 hours under protection of nitrogen gas. The brominated polymer gradually precipitated from the solvent during the ionization reaction process to form a slurry state of solid particles. After the reaction was finished, the solid particles were separated from the solvent, and then pressed and washed in hexane for 2 times, the washed solid particles were taken out, and subjected to vacuum drying at 40°C to a constant weight, the isobutenylene-based quaternary phosphonium salt ionic polymer A-II-1 was prepared.

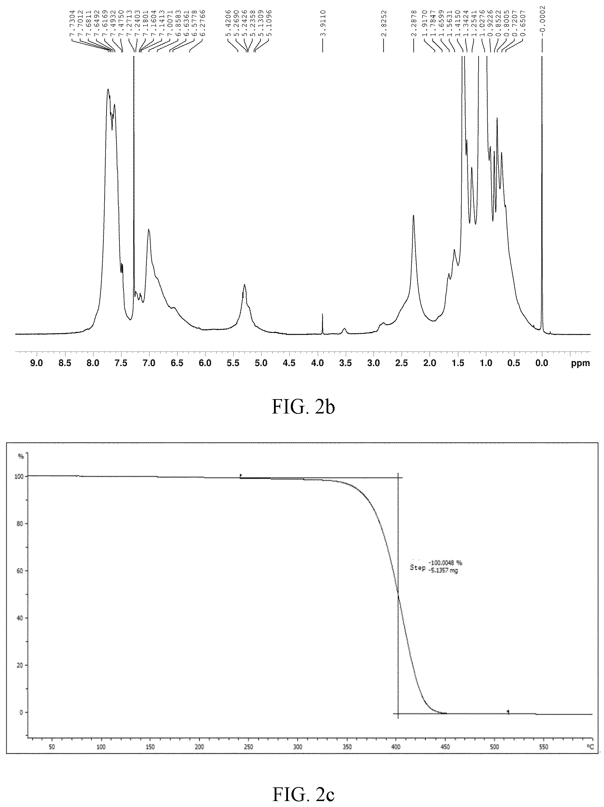

The quaternary phosphonium salt content was measured by nuclear magnetic hydrogen spectroscopy, the result was shown in FIG. 2b. as illustrated by FIG. 2b, the signal peak (4.4-4.6ppm) of side group benzyl bromide disappeared, all the side group benzyl bromide was converted into benzyl quaternary phosphonium salt, the total quaternary phosphonium salt content was calculated by deducting the main chain benzene ring content of the polymer from the integration of benzene ring peak areas, the total quaternary phosphonium salt content was 15.2mol%, the side group benzyl quaternary phosphonium salt group content was 11.4 mol%, thus the main chain tertiary carbon quaternary phosphonium salt group content was calculated to be 3.8 mol%. The the characteristic peak with a chemical shift of 4.7-5.7ppm was the signal characteristic peak of methylene in the side group benzyl quaternary phosphonium salt group, and the characteristic peak with a chemical shift of 7.3-8.3ppm was the signal characteristic peak of benzene ring in the quaternary phosphonium salt group.

The isobutylene-based quaternary phosphonium salt ionic polymer A-II-1 was composed of 12.6mol% of structural unit A, 3.3mol% of structural unit B, and 84.1mol% of structural unit C.

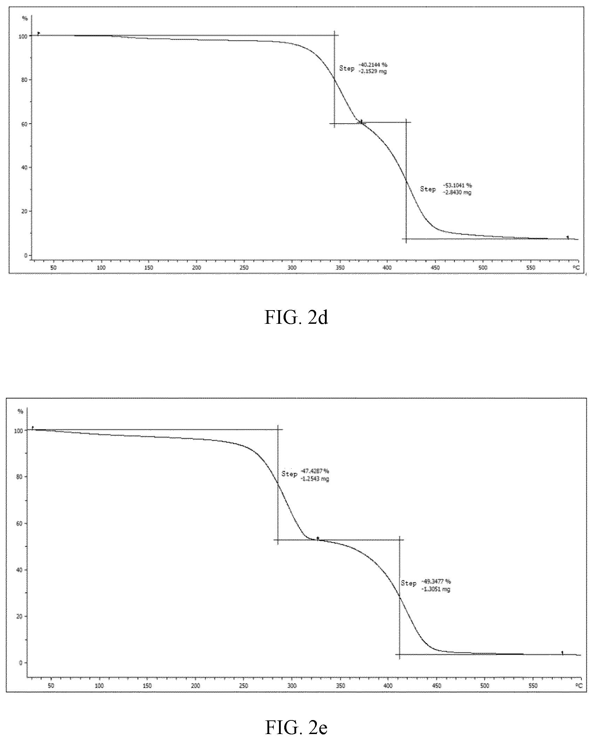

The thermal weight loss analysis data of the isobutylene-p-methylstyrene copolymer P-II-1, the brominated isobutylene-p-methylstyrene copolymer XP-II-1, and the isobutenyl-based quaternary ammonium salt ionic polymer A-II-1 was shown in Table II-2, and the thermal weight loss curve graphs were shown in FIG. 2c, FIG. 2d, and FIG. 2e respectively.

As illustrated by FIG. 2c, the isobutylene-p-methylstyrene copolymer P-II-1 only had an one-stage thermal weight loss (1 step), the thermal weight loss temperature was about 402.3°C, and the weight loss rate was 100 wt%.

As shown by FIG. 2d, the brominated isobutylene-p-methylstyrene copolymer XP-II-1 had two-stage thermal weight loss (2 steps), the first stage was concentrated at about 342.2°C, the weight loss rate was 40.2wt%, wherein the thermal decomposition was carried out on the carbon bromine group; the second stage was concentrated at about 420.2°C, the weight loss rate was 53.1wt%, wherein the thermal decomposition was performed on the polymer main chain structure, which was consistent with the isobutylene-p-methylstyrene copolymer P-II-1.

As can be seen from FIG. 2e, the isobutylene-based quaternary ammonium salt ionic polymer A-II-1 had two-stage thermal weight loss (2 steps), the first stage was concentrated at about 281.7°C, the weight loss rate was 47.4wt%, wherein the thermal decomposition was carried out on the quaternary ammonium salt group; the second stage was concentrated at about 412.2°C, the weight loss rate was 49.3wt%, wherein the thermal decomposition was performed on the polymer main chain structure, which was consistent with the isobutylene-p-methylstyrene copolymer P-II-1, the thermal decomposition stage of the carbon bromine group in the XP-II-1 did not exist, it demonstrated that the carbon bromine groups were completely ionized by the quaternary phosphonium salt, and the temperature for 5wt% thermal weight loss of the isobutelene-based quaternary phosphonium salt ionic polymer A-II-1 was 232.2°C.

**Table II-2**

| Samples | Segment 1 weight loss temperature (°C) | Segment 1 weight loss ratio (wt%) | Segment 2 weight loss temperature (°C) | Segment 2 weight loss ratio (wt%) | T_{5wt%}(°C) |
|---|---|---|---|---|---|
| P-II-1 | 402.3 | 100 | / | / | 358.2 |
| XP-II-1 | 342.2 | 40.2 | 420.3 | 53.1 | 306.4 |
| A-II-1 | 281.7 | 47.4 | 412.2 | 49.3 | 232.2 |

### Example II-2

### (1) Photobromination reaction

In a 1,000mL three-necked flask equipped with a magnetic stirrer, 35g of polymer P-II-2 (wherein the content of p-methylstyrene structural units was 0.062 mol) was dissolved in a mixed solvent of cyclohexane (60mL) and tetrachloromethane (65mL), and 6.5g of sodium bicarbonate powder was added. The molar ratio of the polymer to liquid bromine was 1:1.2 based on the molar content of the structural units provided by p-methylstyrene. The bromination reaction was carried out in a lucifugal laboratory. A pipette was used for drawing 3.8mL of liquid bromine and adding into a constant pressure dropping funnel (protected from light) containing 40mL of tetrachloromethane. An LED light source with the wavelength of 595nm was adopted for irradiation to carry out the photobromination reaction, the power of the light source was 50W, and the pulse time was 15s. The light source was switched on to perform the bromination reaction, the liquid bromine was dropwise added at a slow speed, and the bromination reaction was carried out under the irradiation of a pulse light source until the liquid bromine was dropwise added completely, the bromination reaction time was about 130min, a brominated polymer solution XP-II-2 was obtained.

10 ml of the above brominated reactant solution was subjected to a centrifugal treatment to separate insoluble precipitates contained therein, the clear solution was dried under vacuum at 40°C to a constant weight, and the concentration of the glue solution was measured to be 16.7 wt%. The content of side group benzyl bromide in the reactant was 9.4 mol% (the benzyl bromination rate was 82.5%) by measuring with a nuclear magnetic hydrogen spectrometry.

### (2) Ionization reaction

After removing insoluble solids from the brominated polymer solution XP-II-2 by centrifugation, 40g of clear solution was taken and added into a 250mL three-necked bottle equipped with a magnetic stirrer, and the three-necked bottle was placed in a constant temperature oil bath. 3.6g of triphenylphosphine (dissolved with 10mL of dichloromethane) (in formula 7, R₆, R₇, and R₈ were phenyl) was added, the molar ratio of the tertiary phosphine to liquid bromine was 1.1:1, the reflux reaction was performed at 80°C for 12 hours under protection of nitrogen gas. The brominated polymer gradually precipitated from the solvent during the ionization reaction process to form a slurry state of solid particles. After the reaction was finished, the solid particles were separated from the solvent, and then pressed and washed in hexane for 2 times, the washed solid particles were taken out, and subjected to vacuum drying at 40°C to a constant weight, the isobutenylene-based quaternary phosphonium salt ionic polymer A-II-2 was prepared.

The quaternary phosphonium salt content was measured by nuclear magnetic hydrogen spectroscopy, the benzyl bromide was completely converted into quaternary phosphonium salt, the total content of quaternary phosphonium salt was 12.4mol%, the content of side group benzyl quaternary phosphonium salt group was 9.4mol%, and the content of main chain tertiary carbon quaternary phosphonium salt group was 3mol%.

Through test, analysis, and calculation, the isobutylene-based quaternary phosphonium salt ionic polymer A-II-2 was composed of 9.7mol% of structural unit A, 1.7mol% of structural unit B, and 88.6mol% of structural unit C.

### Example II-3

The isobutylene-based quaternary phosphonium salt ionic polymer was prepared according to the method in Example II-2, except that:

After removing insoluble solids from the brominated polymer solution XP-II-2 by centrifugation, 40g of clear solution was taken and added into a 250mL three-necked bottle equipped with a magnetic stirrer, and the three-necked bottle was placed in a constant temperature oil bath. 4g of tricyclohexylphosphine (dissolved with 10mL of dichloromethane) (in formula 7, R₆, R₇, and R₈ were cyclohexyl) was added, the molar ratio of the tertiary phosphine to liquid bromine was 1.2:1, the reflux reaction was performed at 80°C for 16 hours under protection of nitrogen gas. The brominated polymer gradually precipitated from the solvent during the ionization reaction process to form a blocky micelle cluster. After the reaction was finished, the blocky micelle cluster was separated from the solvent, and then pressed and washed in hexane for 2 times, the washed micelle was taken out, and subjected to vacuum drying at 40°C to a constant weight, the isobutenylene-based quaternary phosphonium salt ionic polymer A-II-3 was prepared.

The quaternary phosphonium salt content was measured by nuclear magnetic hydrogen spectroscopy, the benzyl bromide was completely converted into quaternary phosphonium salt, the total content of quaternary phosphonium salt was 12.4mol%, the content of side group benzyl quaternary phosphonium salt group was 9.4mol%, and the content of main chain tertiary carbon quaternary phosphonium salt group was 3mol%.

Through test, analysis, and calculation, the isobutylene-based quaternary phosphonium salt ionic polymer A-II-3 was composed of 9.7mol% of structural unit A, 1.7mol% of structural unit B, and 88.6mol% of structural unit C.

### Example II-4

### (1) Photobromination reaction

In a 500mL three-necked flask equipped with a magnetic stirrer, 25g of polymer P-II-3 (wherein the content of p-methylstyrene structural units was 0.035 mol) was dissolved in a mixed solvent of cyclohexane (60mL) and tetrachloromethane (60mL), and 4g of sodium bicarbonate powder was added. The molar ratio of the polymer to liquid bromine was 1:1.3 based on the molar content of the structural units provided by p-methylstyrene. The bromination reaction was carried out in a lucifugal laboratory. A pipette was used for drawing 2.4mL of liquid bromine and adding into a constant pressure dropping funnel (protected from light) containing 15mL of tetrachloromethane. The bromination process was carried out with the method in Example II-1, the bromination reaction process was about 90min, the brominated polymer solution XP-II-3 was obtained.

10 ml of the above brominated reactant solution was subjected to a centrifugal treatment to separate insoluble precipitates contained therein, the clear solution was dried under vacuum at 40°C to a constant weight, and the concentration of the glue solution was measured to be 14.6 wt%. The content of side group benzyl bromide in the reactant was 7.8 mol% (the benzyl bromination rate was 90.7%) by measuring with a nuclear magnetic hydrogen spectrometry.

### (2) Ionization reaction

After removing insoluble solids from the brominated polymer solution XP-II-3 by centrifugation, 40g of clear solution was taken and added into a 250mL three-necked bottle equipped with a magnetic stirrer, and the three-necked bottle was placed in a constant temperature oil bath. 2.7g of triphenylphosphine (dissolved with 10mL of dichloromethane) (in formula 7, R₆, R₇, and R₈ were phenyl) was added, the molar ratio of the tertiary phosphine to liquid bromine was 1.1:1, the reflux reaction was performed at 80°C for 12 hours under protection of nitrogen gas. The brominated polymer gradually precipitated from the solvent during the ionization reaction process to form a slurry state of solid particles. After the reaction was finished, the solid particles were separated from the solvent, and then pressed and washed in hexane for 2 times, the washed solid particles were taken out, and subjected to vacuum drying at 40°C to a constant weight, the isobutenylene-based quaternary phosphonium salt ionic polymer A-II-4 was prepared.

The quaternary phosphonium salt content was measured by nuclear magnetic hydrogen spectroscopy, the benzyl bromide was completely converted into quaternary phosphonium salt, the total content of quaternary phosphonium salt was 10.6mol%, the content of side group benzyl quaternary phosphonium salt group was 7.8mol%, and the content of main chain tertiary carbon quaternary phosphonium salt group was 2.8mol%.

The isobutylene-based quaternary phosphonium salt ionic polymer A-II-4 was composed of 8mol% of structural unit A, 0.6mol% of structural unit B, and 91.4mol% of structural unit C.

### Examples II-5

The isobutylene-based quaternary phosphonium salt ionic polymer was prepared according to the method in Example II-4, except that:

After removing insoluble solids from the brominated polymer solution XP-II-3 by centrifugation, 40g of clear solution was taken and added into a 250mL three-necked bottle equipped with a magnetic stirrer, and the three-necked bottle was placed in a constant temperature oil bath. 3mL of tributylphosphine (dissolved with 10mL of dichloromethane) (in formula 7, R₆, R₇, and R₈ were butyl) was added, the molar ratio of the tertiary phosphine to liquid bromine was 1.2:1, the reflux reaction was performed at 60°C for 10 hours under protection of nitrogen gas. The brominated polymer gradually precipitated from the solvent during the ionization reaction process to form a blocky micelle cluster. After the reaction was finished, the blocky micelle cluster was separated from the solvent, and then pressed and washed in hexane for 2 times, the washed micelle was taken out, and subjected to vacuum drying at 40°C to a constant weight, the isobutenylene-based quaternary phosphonium salt ionic polymer A-II-5 was prepared.

The quaternary phosphonium salt content was measured by nuclear magnetic hydrogen spectroscopy, the benzyl bromide was completely converted into quaternary phosphonium salt, the total content of quaternary phosphonium salt was 10.6mol%, the content of side group benzyl quaternary phosphonium salt group was 7.8mol%, and the content of main chain tertiary carbon quaternary phosphonium salt group was 2.8mol%.

The isobutylene-based quaternary phosphonium salt ionic polymer A-II-5 was composed of 8mol% of structural unit A, 0.6mol% of structural unit B, and 91.4mol% of structural unit C.

### Example II-6

### (1) Photobromination reaction

In a 500mL three-necked flask equipped with a magnetic stirrer, 25g of polymer P-II-3 (wherein the content of p-methylstyrene structural units was 0.035 mol) was dissolved in a mixed solvent of n-heptane (62mL) and tetrachloromethane (62mL), and 2.4g of sodium bicarbonate powder was added. The molar ratio of the polymer to liquid bromine was 1:0.8 based on the molar content of the structural units provided by p-methylstyrene. The bromination reaction was carried out in a lucifugal laboratory. A pipette was used for drawing 1.4mL of liquid bromine and adding into a constant pressure dropping funnel (protected from light) containing 15mL of tetrachloromethane. The bromination process was carried out with the method in Example II-2, the bromination reaction process was about 60min, the brominated polymer solution XP-II-4 was obtained.

10 ml of the above brominated reactant solution was subjected to a centrifugal treatment to separate insoluble precipitates contained therein, the clear solution was dried under vacuum at 40°C to a constant weight, and the concentration of the glue solution was measured to be 14.1 wt%. The content of side group benzyl bromide in the reactant was 4.3 mol% (the benzyl bromination rate was 50%) by measuring with a nuclear magnetic hydrogen spectrometry.

### (2) Ionization reaction

After removing insoluble solids from the brominated polymer solution XP-II-4 by centrifugation, 40g of clear solution was taken and added into a 250mL three-necked bottle equipped with a magnetic stirrer, and the three-necked bottle was placed in a constant temperature oil bath. 1.8g of triphenylphosphine (dissolved with 5mL of dichloromethane) (in formula 7, R₆, R₇, and R₈ were phenyl) was added, the molar ratio of the tertiary phosphine to liquid bromine was 1.2:1, the reflux reaction was performed at 80°C for 10 hours under protection of nitrogen gas. The brominated polymer gradually precipitated from the solvent during the ionization reaction process to form a slurry state of solid particles. After the reaction was finished, the solid particles were separated from the solvent, and then pressed and washed in hexane for 2 times, the washed solid particles were taken out, and subjected to vacuum drying at 40°C to a constant weight, the isobutenylene-based quaternary phosphonium salt ionic polymer A-II-6 was prepared.

The quaternary phosphonium salt content was measured by nuclear magnetic hydrogen spectroscopy, the benzyl bromide was completely converted into quaternary phosphonium salt, the total content of quaternary phosphonium salt was 5.7mol%, the content of side group benzyl quaternary phosphonium salt group was 4.3mol%, and the content of main chain tertiary carbon quaternary phosphonium salt group was 1.4mol%.

The isobutylene-based quaternary phosphonium salt ionic polymer A-II-6 was composed of 4.8mol% of structural unit A, 3.8mol% of structural unit B, and 91.4mol% of structural unit C.

### Example II-7

### (1) Photobromination reaction

In a 1,000mL three-necked flask equipped with a magnetic stirrer, 50g of polymer P-II-4 (wherein the content of p-methylstyrene structural units was 0.058 mol) was dissolved in a mixed solvent of cyclohexane (120mL) and tetrachloromethane (120mL), and 7.6g of sodium bicarbonate powder was added. The molar ratio of the polymer to liquid bromine was 1:1.5 based on the molar content of the structural units provided by p-methylstyrene. The bromination reaction was carried out in a lucifugal laboratory. A pipette was used for drawing 4.5mL of liquid bromine and adding into a constant pressure dropping funnel (protected from light) containing 50mL of tetrachloromethane. An LED light source with the wavelength of 630nm was adopted for irradiation to carry out the photobromination reaction, the power of the light source was 40W, and the pulse time was 20s. The light source was switched on to perform the bromination reaction, the liquid bromine was dropwise added at a slow speed, and the bromination reaction was carried out under the irradiation of a pulse light source until the liquid bromine was dropwise added completely, the light source was switched off, and the reaction was stopped, the bromination reaction time was about 160min, a brominated polymer solution XP-II-5 was obtained.

10 ml of the above brominated reactant solution was subjected to a centrifugal treatment to separate insoluble precipitates contained therein, the clear solution was dried under vacuum at 40°C to a constant weight, and the concentration of the glue solution was measured to be 13.6 wt%. The content of side group benzyl bromide in the reactant was 5.1 mol% (the benzyl bromination rate was 72.8%) by measuring with a nuclear magnetic hydrogen spectrometry.

### (2) Ionization reaction

After removing insoluble solids from the brominated polymer solution XP-II-5 by centrifugation, 40g of clear solution was taken and added into a 250mL three-necked bottle equipped with a magnetic stirrer, and the three-necked bottle was placed in a constant temperature oil bath. 2.2g of triphenylphosphine (dissolved with 5mL of dichloromethane) (in formula 7, R₆, R₇, and R₈ were phenyl) was added, the molar ratio of the tertiary phosphine to liquid bromine was 1:1, the reflux reaction was performed at 80°C for 12 hours under protection of nitrogen gas. The brominated polymer gradually precipitated from the solvent during the ionization reaction process to form a slurry state of solid particles. After the reaction was finished, the solid particles were separated from the solvent, and then pressed and washed in hexane for 2 times, the washed solid particles were taken out, and subjected to vacuum drying at 40°C to a constant weight, the isobutenylene-based quaternary phosphonium salt ionic polymer A-II-7 was prepared.

The quaternary phosphonium salt content was measured by nuclear magnetic hydrogen spectroscopy, most of the benzyl bromide was converted into quaternary phosphonium salt, the total content of quaternary phosphonium salt was 8.8mol%, the content of side group benzyl quaternary phosphonium salt group was 5.1mol%, and the content of main chain tertiary carbon quaternary phosphonium salt group was 3.7mol%.

The isobutylene-based quaternary phosphonium salt ionic polymer A-II-7 was composed of 6.5mol% of structural unit A, 0.5mol% of structural unit B, and 93mol% of structural unit C.

### Comparative Example II-1

### (1) Photobromination reaction

In a 1,000mL three-necked flask equipped with a magnetic stirrer, 32g of polymer P-II-1 (wherein the content of p-methylstyrene structural units was 0.077 mol) was dissolved in a mixed solvent of n-hexane (80mL) and tetrachloromethane (80mL), and 4.1g of sodium bicarbonate powder was added. The molar ratio of the polymer to liquid bromine was 1:1 based on the molar content of the structural units provided by p-methylstyrene. A pipette was used for drawing 4mL of liquid bromine in two times, that is, drawing 2mL of liquid bromine and adding into a constant pressure dropping funnel (protected from light) containing 15mL of tetrachloromethane for each time. An LED light source with the wavelength of 595nm was adopted for irradiation to carry out the photobromination reaction, the power of the light source was 80W. The liquid bromine solution in the constant-pressure dropping funnel was added into the polymer solution at an one-off manner, the light source was switched on to perform the bromination reaction, the bromination reaction with violent smoking was taken place, a large amount of generated HBr cannot be neutralized, the bromination reaction time was 10min, a colloidal solution system was subjected to color fading, the light source was switched off, and the reaction was stopped. HBr was neutralized by adding 100mL of aqueous NaOH solution having a concentration of 0.1wt%, a brominated polymer solution XDP-II-1 was obtained.

5ml of the above brominated reactant solution was dried under vacuum at 40°C to a constant weight, and the content of benzyl bromide was only 0.98mol% (the benzyl bromination rate was 6.2%) measuring with a nuclear magnetic hydrogen spectrometry, the bromination rate was extremely low, and a large amount of brominated n-hexane was contained in the brominated polymer solution.

### (2) Ionization reaction

50g of the above-mentioned clear solution of brominated polymer solution XDP-II-1 was added into a 250mL three-necked bottle equipped with a magnetic stirrer, and the three-necked bottle was placed in a constant temperature oil bath. 4mL of triphenylphosphine (dissolved with 10mL of dichloromethane) (in formula 7, R₆, R₇, and R₈ were phenyl) was added, the molar ratio of the tertiary phosphine to liquid bromine was 1:1, the reflux reaction was performed at 80°C for 6 hours under protection of nitrogen gas. After the reaction was finished, the insoluble micelle was separated from the solvent, and then washed and filtered in acetone for 2 times, the solid matter was taken out, and subjected to vacuum drying at 40°C to a constant weight, the isobutenylene-based quaternary phosphonium salt ionic polymer D-II-1 was prepared.

The quaternary phosphonium salt content was measured by nuclear magnetic hydrogen spectroscopy, the benzyl bromide was completely converted into quaternary phosphonium salt, the total content of quaternary phosphonium salt was 1mol%, the content of side group benzyl quaternary phosphonium salt group was 1mol%, and the main chain did not contain tertiary carbon quaternary phosphonium group.

Through test, analysis, and calculation, the isobutylene-based quaternary phosphonium salt ionic polymer D-II-1 was composed of 1mol% of structural unit A, 14.9mol% of structural unit B, and 84.1mol% of structural unit C.

### Test Example II

The isobutylene-based quaternary phosphonium salt polymer prepared in Example II-1 and the ABS resin were blended to prepare the anti-bacterial plastics, *Escherichia coli* and *Staphylococcus aureus* were used as gram-negative bacteria and gram-positive bacteria, respectively, the antibacterial performance test was carried out on the anti-bacterial plastics.

The isobutylylene-based quaternary phosphonium salt polymer and the ABS resin were mixed in a mass ratio of 2:8 by adopting a Polylab OS PTW 16/40 type twin-screw extruder, the melt extrusion and granulation were implemented at the temperature of 190°C to prepare an antibacterial master batch containing 20wt% isobutylylene-based quaternary phosphonium salt polymer, the antibacterial master batch and the ABS resin were then mixed according to different proportions respectively, and the mixer was subjected to the melt extrusion and granulation by using the twin-screw extruder, the antibacterial plastics having the mass contents of 1%, 2%, 4%, 6%, and 8% of the isobutylylene-based quaternary phosphonium salt polymer were produced.

The anti-bacterial plastic pellets were subjected to the compression molding by using a tablet press at the temperature of 200°C and the pressure of 20 MPa for 3min respectively; then subjected to a cold pressing under the pressure of 15MPa for 10min to obtain an experimental sheet with the thickness of 1mm, which was placed for 24h and then cut into the test sample piece having the dimensions of 20mm×20mm.
(1) The test sample piece was placed in a six-well cell culture plate and sterilized by UV irradiation for 30min on both sides. 30µL of bacterial suspension with the concentration of 1×10⁶CFU/mL was dropwise added on the surface of each sample piece, and the bacterial solution was covered by a sterilized round cover glass, such that the bacterial solution was tiled on the sample piece surface. The six-well cell culture plate was put into a constant-temperature incubator at 37°C for culture, and the relative humidity was kept to be more than 90%. After 24h, a pipette was used for adding 2mL of normal saline to each well of the six-well cell culture plate to wash the sample piece surface, and the six-well cell culture plate was subjected to ultrasonic treatment for Imin to disperse the bacteria. A pipette was used for sucking 100µL of flushing fluid, which was subjected to a gradient dilution by using the normal saline, a diluent with a proper dilution multiple was selected for coating on a nutrient agar plate, which was cultured for 24h in a constant-temperature incubator at 37°C, a plate with the bacterial colony number of 30-300 was selected for counting, the number of viable bacteria on the sample piece surface was counted, and the antibacterial rate R was calculated. The results were shown in Table II-3.

*R* = [(A-B)/A] × 100%, wherein A was the number of viable bacteria on the surface of a plastic sample piece without adding the antibacterial agent, and B was the number of viable bacteria on the surface of the antibacterial plastic sample piece.

**Table II-3**

| Samples | Escherichia coli | | Staphylococcus aureus | |
|---|---|---|---|---|
| | Bacterial number CFU/mL | Antibacterial rate % | Bacterial number CFU/mL | Antibacterial rate % |
| ABS | 5.67×10⁸ | 0 | 8.23×10⁹ | 0 |
| 1wt%-ABS | 2.25×10⁸ | 60.37 | 4.34×10⁸ | 47.28 |
| 2wt%-ABS | 1.11×10⁸ | 80.43 | 2.26×10⁸ | 72.57 |
| 4wt%-ABS | 1.94×10⁷ | 96.58 | 0 | 100 |
| 6wt%-ABS | 1.83×10³ | >99.99 | 0 | 100 |
| 8wt%-ABS | 0 | 100 | 0 | 100 |

(2) 6 anti-bacterial plastics sample pieces were weighed, and put into a conical flask, the deionized water was added in a proportion of 0.1g/mL according to the requirement of China national standard GB/T16886.12-2005, the sample pieces were placed in a constant-temperature water bath oscillator at 37°C, and vibrated at a rotating speed of 150 r/min and soaked, the antibacterial properties of the sample pieces after 15 days and 30 days of soaking were tested respectively, wherein the testing method was the same as that mentioned above, the results of antibacterial properties after 15 days of soaking were shown in Table II-4, and the results of antibacterial properties after 30 days of soaking were shown in Table II-5.

**Table II-4**

| Samples | Escherichia coli | | Staphylococcus aureus | |
|---|---|---|---|---|
| | Bacterial number CFU/mL | Antibacterial rate % | Bacterial number CFU/mL | Antibacterial rate % |
| ABS | 4.88×10⁸ | 0 | 9.36×10⁸ | 0 |
| 1wt%-ABS | 1.58×10⁸ | 67.59 | 2.93×10⁸ | 68.72 |
| 2wt%-ABS | 5.63×10⁷ | 88.45 | 8.92×10⁷ | 90.47 |
| 4wt%-ABS | 1.22×10⁴ | >99.99 | 0 | 100 |
| 6wt%-ABS | 1.39×10³ | >99.99 | 0 | 100 |
| 8wt%-ABS | 0 | 100 | 0 | 100 |

**Table II-5**

| Samples | Escherichia coli | | Staphylococcus aureus | |
|---|---|---|---|---|
| | Bacterial number CFU/mL | Antibacterial rate % | Bacterial number CFU/mL | Antibacterial rate % |
| ABS | 4.02×10⁸ | 0 | 7.94×10⁸ | 0 |
| 1wt%-ABS | 1.37×10⁸ | 65.89 | 3.20×10⁸ | 59.73 |
| 2wt%-ABS | 7.01×10⁷ | 82.57 | 1.09×10⁸ | 86.24 |
| 4wt%-ABS | 6.44×10³ | >99.99 | 0 | 100 |
| 6wt%-ABS | 1.77×10³ | >99.99 | 0 | 100 |
| 8wt%-ABS | 0 | 100 | 0 | 100 |

As can be seen from the results in Table II-3, Table II-4 and Table II-5, the antibacterial plastics were produced by blending the ABS resin with the isobutylene-based quaternary phosphonium salt ionic polymer in the present invention, when the addition amount of the isobutylene-based quaternary phosphonium salt ionic polymer was more than 2 parts, it showed efficient bactericidal and bacteriostatic properties, the bactericidal and bacteriostatic properties were kept good even after 15-30 days of soaking in water, and the antibacterial effectiveness for a given time period was excellent.

### Specific embodiment III

The physicochemical parameters of the isobutylene p-methylstyrene random copolymer used in the following Examples and Comparative Examples were shown in Table III-1, and its preparation method can be referenced to the patent document CN104558357B.

**Table III-1**

| Samples | *M*_{w} | *M*ₙ | *M*_{w}/*M*ₙ | P-methylstyrene /mol% | Aluminum ion /ppm |
|---|---|---|---|---|---|
| P-III-1 | 48960 | 18480 | 2.65 | 16.2 | 1.95 |
| P-III-2 | 66450 | 25960 | 2.56 | 12.3 | 2.22 |
| P-III-3 | 23880 | 9630 | 2.48 | 9.1 | 1.24 |
| P-III-4 | 83500 | 28020 | 2.98 | 6.6 | 1.88 |

The other raw materials used in the following Examples and Comparative Examples were commercially available.

### Example III-1

### (1) Photobromination reaction

In a 1,000mL three-necked flask equipped with a magnetic stirrer, 30g of polymer P-III-1 (wherein the content of p-methylstyrene structural units was 0.074 mol) was dissolved in a mixed solvent of n-hexane (80mL) and tetrachloromethane (80mL), and 6.4g of sodium bicarbonate powder was added. The molar ratio of the polymer to liquid bromine was 1:1.1 based on the molar content of the structural units provided by p-methylstyrene. The bromination reaction was carried out in a lucifugal laboratory. A pipette was used for drawing 4.2mL of liquid bromine and adding into a constant pressure dropping funnel (protected from light) containing 30mL of tetrachloromethane. An LED light source with the wavelength of 595nm was adopted for irradiation to carry out the photobromination reaction, the power of the light source was 80W, and the pulse time was 10s. The light source was switched on to perform the bromination reaction, the liquid bromine was dropwise added at a slow speed, and the bromination reaction was carried out under the irradiation of a pulse light source until the liquid bromine was dropwise added completely, the light source was switched off and the reaction was stopped, the bromination reaction time was about 120min, a brominated polymer solution XP-III-1 was obtained.

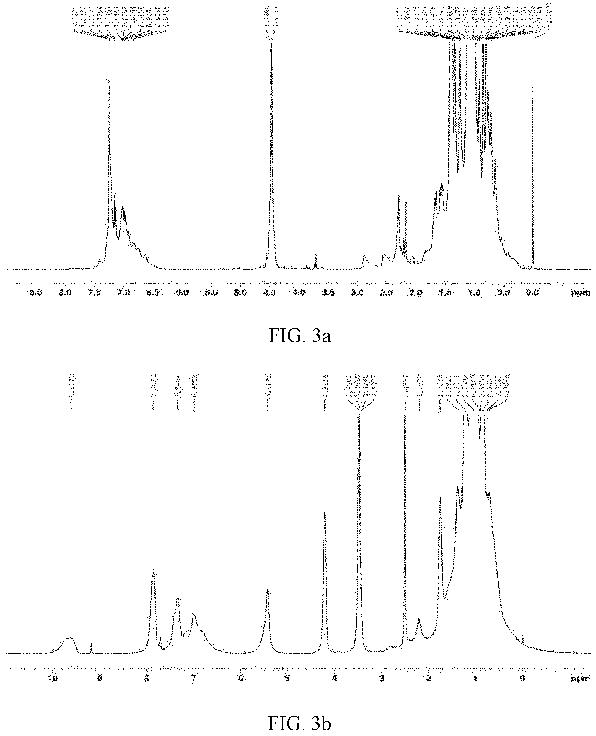

10 ml of the above brominated reactant solution was subjected to a centrifugal treatment to separate insoluble precipitates contained therein, the clear solution was dried under vacuum at 40°C to a constant weight, and the concentration of the glue solution was measured to be 13.5 wt%. The content of side group benzyl bromide in the reactant was 12.3 mol% (the benzyl bromination rate was 75.9%) by measuring with a nuclear magnetic hydrogen spectrometry, the main chain tertiary carbon hydrogen was converted into tertiary carbon bromine through bromine substitution reaction, there was no characteristic peak of tertiary carbon hydrogen in the nuclear magnetic hydrogen spectrum. The nuclear magnetic hydrogen spectrogram was shown in FIG. 3a, as illustrated in FIG. 3a, the characteristic peak of chemical shift at 4.4654ppm was the side group benzyl bromide characteristic peak.

### (2) Ionization reaction

After removing insoluble solids from the brominated polymer solution XP-III-1 by centrifugation, 50g of clear solution was taken and added into a 250mL three-necked bottle equipped with a magnetic stirrer, and the three-necked bottle was placed in a constant temperature oil bath. 2mL of 1-butylimidazole (dissolved with 5mL of tetrachloromethane) was added, the molar ratio of the imidazole to liquid bromine was 1.1:1, the reflux reaction was performed at 80°C for 8 hours under protection of nitrogen gas. The brominated polymer gradually precipitated from the solvent during the ionization reaction process to form an insoluble micelle. After the reaction was finished, the micelle was separated from the solvent, and then washed in hexane for 2 times, the washed micelle was taken out, and subjected to vacuum drying at 40°C to a constant weight, the isobutenylene-based imidazolium salt ionic polymer A-III-1 was prepared.

The imidazolium salt content was measured by nuclear magnetic hydrogen spectroscopy, the result was shown in FIG. 3b. As illustrated by FIG. 3b, the signal peak (4.4-4.6ppm) of side group benzyl bromide disappeared, all the side group benzyl bromide was converted into imidazolium salt, the total imidazolium salt content was calculated based on the integration of areas of the nitrogen ring signal peak (characteristic peak with chemical shift between 7.6-10.1 ppm), the total imidazolium salt content was 16.4mol%, the side group benzyl imidazolium salt (characteristic peak with chemical shift between 5.1-5.9 ppm) content was 12.3 mol%, the main chain tertiary carbon imidazolium salt content was 4.1 mol%.

The isobutylene-based imidazolium salt ionic polymer A-III-1 was composed of 13.4mol% of structural unit A, 2.8mol% of structural unit B, and 83.8mol% of structural unit C.

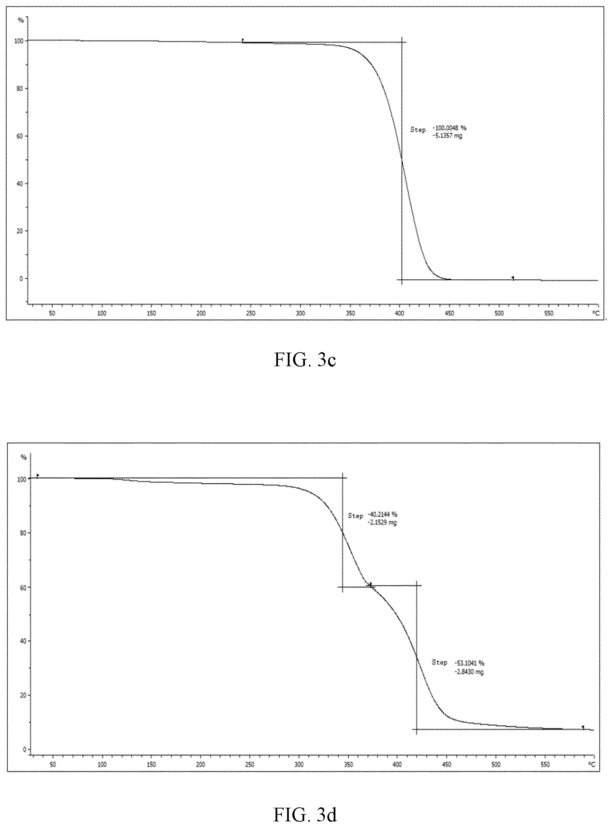

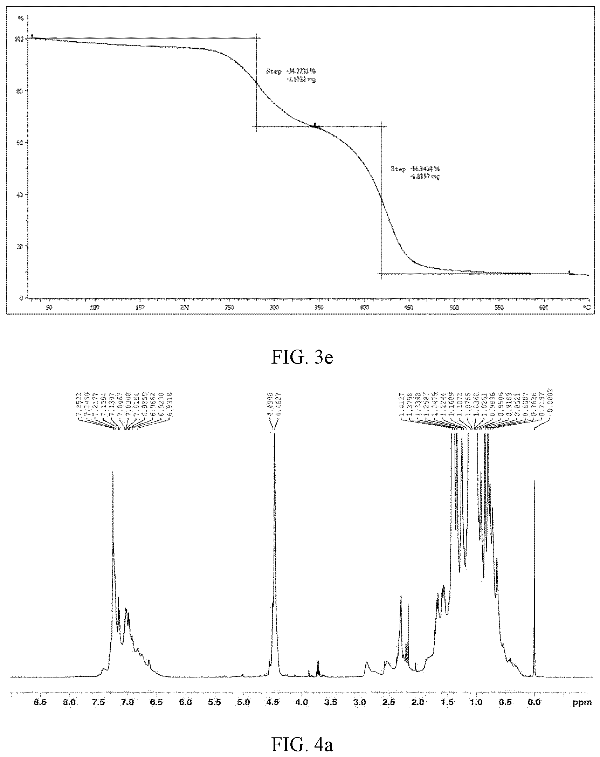

The thermal weight loss analysis data of the isobutylene-p-methylstyrene copolymer P-III-1, the brominated isobutylene-p-methylstyrene copolymer XP-III-1, and the isobutenyl-based imidazolium salt ionic polymer A-III-1 was shown in Table III-2, and the thermal weight loss curve graphs were shown in FIG. 3c, FIG. 3d, and FIG. 3e respectively.

As illustrated by FIG. 3c, the isobutylene-p-methylstyrene copolymer P-III-1 only had an one-stage thermal weight loss (1 step), the thermal weight loss temperature was about 402.3°C, and the weight loss rate was 100 wt%.

As shown by FIG. 3d, the brominated isobutylene-p-methylstyrene copolymer XP-III-1 had two-stage concentrated thermal weight loss (2 steps), the first stage was concentrated at about 342.2°C, the weight loss rate was 40.2wt%, wherein the thermal decomposition was carried out on the carbon bromine group; the second stage was concentrated at about 420.2°C, the weight loss rate was 53.1wt%, wherein the thermal decomposition was performed on the polymer main chain structure, which was consistent with the isobutylene-p-methylstyrene copolymer P-III-1.

As can be seen from FIG. 3e, the isobutylene-based imidazolium salt ionic polymer A-III-1 had two-stage concentrated thermal weight loss (2 steps), the first stage was concentrated at about 280.2°C, the weight loss rate was 34.2wt%, wherein the thermal decomposition was carried out on the imidazolium salt group; the second stage was concentrated at about 419.6°C, the weight loss rate was 56.9wt%, wherein the thermal decomposition was performed on the polymer main chain structure, which was consistent with the isobutylene-p-methylstyrene copolymer P-III-1, the thermal decomposition stage of the carbon bromine group in the XP-III-1 did not exist, it demonstrated that the carbon bromine groups were completely ionized by the imidazolium salt, and the temperature for 5wt% thermal weight loss of the isobutelene-based imidazolium salt ionic polymer A-II-1 was 233.7°C.

**Table III-2**

| Samples | Segment 1 weight loss temperature (°C) | Segment 1 weight loss ratio (wt%) | Segment 2 weight loss temperature (°C) | Segment 2 weight loss ratio (wt%) | T_{5wt%} (°C) |
|---|---|---|---|---|---|
| P-III-1 | 402.3 | 100 | / | / | 358.2 |
| XP-III-1 | 342.2 | 40.2 | 420.3 | 53.1 | 306.4 |
| A-III-1 | 280.2 | 34.2 | 419.6 | 56.9 | 233.7 |

### Example III-2

### (1) Ionization reaction

The isobutylene-based imidazolium salt ionic polymer was prepared according to the method in Example III-1, except that:
After removing insoluble solids from the brominated polymer solution XP-III-1 by centrifugation, 50g of clear solution was taken and added into a 250mL three-necked bottle equipped with a magnetic stirrer, and the three-necked bottle was placed in a constant temperature oil bath. 1.6mL of 1,2-dimethyl-5-nitroimidazole (dissolved with 5mL of dichloromethane) was added, the molar ratio of the imidazole to liquid bromine was 1.1:1, the reflux reaction was performed at 80°C for 8 hours under protection of nitrogen gas. The brominated polymer gradually precipitated from the solvent during the ionization reaction process to form a blocky micelle cluster. After the reaction was finished, the blocky micelle cluster was separated from the solvent, and then pressed and washed in hexane for 2 times, the washed micelle cluster was taken out, and subjected to vacuum drying at 40°C to a constant weight, the isobutenylene-based imidazolium salt ionic polymer A-III-2 was prepared.

Through testing, the total imidazolium salt content of the isobutylene-based imidazolium salt ionic polymer A-III-2 was 16.4mol%, the side group benzyl imidazolium salt content was 12.3 mol%, thus the main chain imidazolium salt group content was calculated to be 4.1 mol%.

Through test, analysis, and calculation, the isobutylene-based imidazolium salt ionic polymer A-III-2 was composed of 13.4mol% of structural unit A, 2.8mol% of structural unit B, and 83.8mol% of structural unit C.

### Example III-3

### (1) Photobromination reaction

In a 1,000mL three-necked flask equipped with a magnetic stirrer, 30g of polymer P-III-2 (wherein the content of p-methylstyrene structural units was 0.058 mol) was dissolved in a mixed solvent of cyclohexane (80mL) and tetrachloromethane (80mL), and 7g of solid sodium bicarbonate powder was added. The molar ratio of the polymer to liquid bromine was 1:1.4 based on the molar content of the structural units provided by p-methylstyrene. A pipette was used for drawing 4.2mL of liquid bromine and adding into a constant pressure dropping funnel (protected from light) containing 30mL of tetrachloromethane. An LED light source with the wavelength of 630nm was adopted for irradiation to carry out the photobromination reaction, the power of the light source was 60W, and the pulse time was 20s. The light source was switched on to perform the bromination reaction, the liquid bromine was dropwise added at a slow speed, and the bromination reaction was carried out under the irradiation of a pulse light source until the liquid bromine was dropwise added completely, the light source was switched off and the reaction was stopped, the bromination reaction time was about 130min, a brominated polymer solution XP-III-2 was obtained.

10 ml of the above brominated reactant solution was subjected to a centrifugal treatment to separate insoluble solid precipitates contained therein, the clear solution was dried under vacuum at 40°C to a constant weight, and the concentration of the glue solution was measured to be 13.2 wt%. The content of side group benzyl bromide in the reactant was 9.7 mol% (the benzyl bromination rate was 78.9%) by measuring with a nuclear magnetic hydrogen spectrometry.

### (2) Ionization reaction

After removing insoluble solids from the brominated polymer solution XP-III-2 by centrifugation, 50g of clear solution was taken and added into a 250mL three-necked bottle equipped with a magnetic stirrer, and the three-necked bottle was placed in a constant temperature oil bath. 2.3mL of 1-butylimidazole (dissolved with 5mL of tetrachloromethane) was added, the molar ratio of the imidazole to liquid bromine was 1.2:1, the reaction was performed at 80°C for 12 hours under protection of nitrogen gas. The brominated polymer gradually precipitated from the solvent during the ionization reaction process to form an insoluble micelle. After the reaction was finished, the micelle was separated from the solvent, and then washed and filtered in hexane for 2 times, the micelle was subjected to vacuum drying at 40°C to a constant weight, the isobutenylene-based imidazolium salt ionic polymer A-III-3 was prepared.

The imidazolium salt content was measured by nuclear magnetic hydrogen spectroscopy, the benzyl bromide was partially converted to imidazolium salt, the total imidazolium content was 15.9mol%, the side group benzyl imidazolium salt content was 9.7mol%, and the main chain tertiary carbon imidazolium salt content was 6.2mol%.

The isobutylene-based imidazolium salt ionic polymer A-III-3 was composed of 10.6mol% of structural unit A, 1.7mol% of structural unit B, and 87.7mol% of structural unit C.

### Example III-4

### (1) Photobromination reaction

In a 1,000mL three-necked flask equipped with a magnetic stirrer, 35g of polymer P-III-3 (wherein the content of p-methylstyrene structural units was 0.052 mol) was dissolved in a mixed solvent of cyclohexane (80mL) and tetrachloromethane (100mL), and 7g of solid sodium bicarbonate powder was added. The molar ratio of the polymer to liquid bromine was 1:1.6 based on the molar content of the structural units provided by p-methylstyrene. A pipette was used for drawing 4.3mL of liquid bromine and adding into a constant pressure dropping funnel (protected from light) containing 30mL of tetrachloromethane. An LED light source with the wavelength of 630nm was adopted for irradiation to carry out the photobromination reaction, the power of the light source was 60W, and the pulse time was 15s. The light source was switched on to perform the bromination reaction, the liquid bromine was dropwise added at a slow speed, and the bromination reaction was carried out under the irradiation of a pulse light source until the liquid bromine was dropwise added completely, the light source was switched off and the reaction was stopped, the bromination reaction time was about 120min, a brominated polymer solution XP-III-3 was obtained.

10 ml of the above brominated reactant solution was subjected to a centrifugal treatment to separate insoluble solid precipitates contained therein, the clear solution was dried under vacuum at 40°C to a constant weight, and the concentration of the glue solution was measured to be 13.3 wt%. The content of side group benzyl bromide in the reactant was 8.1 mol% (the benzyl bromination rate was 89%) by measuring with a nuclear magnetic hydrogen spectrometry.

### (2) Ionization reaction

After removing insoluble solids from the brominated polymer solution XP-III-3 by centrifugation, 50g of clear solution was taken and added into a 250mL three-necked bottle equipped with a magnetic stirrer, and the three-necked bottle was placed in a constant temperature oil bath. 3.9mL of 1-dodecylimidazole (dissolved with 5mL of tetrachloromethane) was added, the molar ratio of the imidazole to liquid bromine was 1.1:1, the reaction was performed at 80°C for 10 hours under protection of nitrogen gas. The brominated polymer gradually precipitated from the solvent during the ionization reaction process to form an insoluble micelle. After the reaction was finished, the micelle was separated from the solvent, and then washed and filtered in hexane for 2 times, the micelle was subjected to vacuum drying at 40°C to a constant weight, the isobutenylene-based imidazolium salt ionic polymer A-III-4 was prepared.

The imidazolium salt content was measured by nuclear magnetic hydrogen spectroscopy, the benzyl bromide was completely converted to imidazolium salt, the total imidazolium content was 13.9mol%, the side group benzyl imidazolium salt content was 8.1mol%, and the main chain tertiary carbon imidazolium salt content was 5.8mol%.

The isobutylene-based imidazolium salt ionic polymer A-III-4 was composed of 8.7mol% of structural unit A, 0.4mol% of structural unit B, and 90.9mol% of structural unit C.

### Example III-5

### (1) Photobromination reaction

In a 1,000mL three-necked flask equipped with a magnetic stirrer, 35g of polymer P-III-4 (wherein the content of p-methylstyrene structural units was 0.039 mol) was dissolved in a mixed solvent of n-hexane (80mL) and tetrachloromethane (80mL), and 2.4g of solid sodium bicarbonate powder was added. The molar ratio of the polymer to liquid bromine was 1:0.7 based on the molar content of the structural units provided by p-methylstyrene. A pipette was used for drawing 1.4mL of liquid bromine and adding into a constant pressure dropping funnel (protected from light) containing 15mL of tetrachloromethane. An LED light source with the wavelength of 595nm was adopted for irradiation to carry out the photobromination reaction, the power of the light source was 50W, and the pulse time was 15s. The light source was switched on to perform the bromination reaction, the liquid bromine was dropwise added at a slow speed, and the bromination reaction was carried out under the irradiation of a pulse light source until the liquid bromine was dropwise added completely, the light source was switched off and the reaction was stopped, the bromination reaction time was about 50min, a brominated polymer solution XP-III-4 was obtained.

10 ml of the above brominated reactant solution was subjected to a centrifugal treatment to separate insoluble solid precipitates contained therein, the clear solution was dried under vacuum at 40°C to a constant weight, and the concentration of the glue solution was measured to be 15.2 wt%. The content of side group benzyl bromide in the reactant was 3.2 mol% (the benzyl bromination rate was 48.5%) by measuring with a nuclear magnetic hydrogen spectrometry.

### (2) Ionization reaction

After removing insoluble solids from the brominated polymer solution XP-III-4 by centrifugation, 50g of clear solution was taken and added into a 250mL three-necked bottle equipped with a magnetic stirrer, and the three-necked bottle was placed in a constant temperature oil bath. 0.9mL of 1-butylimidazole (dissolved with 5mL of tetrachloromethane) was added, the molar ratio of the imidazole to liquid bromine was 1.2:1, the reaction was performed at 80°C for 10 hours under protection of nitrogen gas. The brominated polymer gradually precipitated from the solvent during the ionization reaction process to form an insoluble micelle. After the reaction was finished, the micelle was separated from the solvent, and then washed and filtered in hexane for 2 times, the micelle was subjected to vacuum drying at 40°C to a constant weight, the isobutenylene-based imidazolium salt ionic polymer A-III-5 was prepared.

The imidazolium salt content was measured by nuclear magnetic hydrogen spectroscopy, the benzyl bromide was completely converted to imidazolium salt, the total imidazolium content was 4.3mol%, the side group benzyl imidazolium salt content was 3.2mol%, and the main chain tertiary carbon imidazolium salt content was 1.1mol%.

The isobutylene-based imidazolium salt ionic polymer A-III-5 was composed of 3.8mol% of structural unit A, 2.8mol% of structural unit B, and 93.4mol% of structural unit C.

### Comparative Example III-1

### (1) Photobromination reaction

In a 1,000mL three-necked flask equipped with a magnetic stirrer, 30g of polymer P-III-1 (wherein the content of p-methylstyrene structural units was 0.074 mol) was dissolved in a mixed solvent of n-hexane (80mL) and tetrachloromethane (80mL), and 3.6g of sodium bicarbonate powder was added. The molar ratio of the polymer to liquid bromine was 1:1.1 based on the molar content of the structural units provided by p-methylstyrene. The bromination reaction was carried out in a lucifugal laboratory. A pipette was used for drawing 4.2mL of liquid bromine in two times, that is, drawing 2.1mL of liquid bromine and adding into a constant pressure dropping funnel (protected from light) containing 15mL of tetrachloromethane for each time. An LED light source with the wavelength of 595nm was adopted for irradiation to carry out the photobromination reaction, the power of the light source was 80W. The liquid bromine solution in the constant-pressure dropping funnel was added into the polymer solution at an one-off manner, the light source was switched on to perform the bromination reaction, the bromination reaction with violent smoking was taken place, a large amount of generated HBr cannot be neutralized, the bromination reaction time was 10min, a colloidal solution system was subjected to color fading, the light source was switched off, and the reaction was stopped. HBr was neutralized by adding 100mL of aqueous NaOH solution having a concentration of 0.1wt%, a brominated polymer solution XDP-III-1 was obtained.

5ml of the above brominated reactant solution was dried under vacuum at 40°C to a constant weight, and the content of benzyl bromide was only 0.88mol% (the benzyl bromination rate was 5.4%) measuring with a nuclear magnetic hydrogen spectrometry, the bromination rate was extremely low, and a large amount of brominated n-hexane was contained in the brominated polymer solution.

### (2) Ionization reaction

50g of clear solution of the brominated polymer solution XDP-III-1 was taken and added into a 250mL three-necked bottle equipped with a magnetic stirrer, and the three-necked bottle was placed in a constant temperature oil bath. 2mL of 1-butylimidazole (dissolved with 5mL of tetrachloromethane) was added, the molar ratio of the imidazole to liquid bromine was 1.1:1, the reaction was performed at 80°C for 10 hours under protection of nitrogen gas. After the reaction was finished, the insoluble micelle was filtered and separated from the solvent, and then washed and filtered in acetone for 2 times, the solid matter was taken out and subjected to vacuum drying at 40°C to a constant weight, the isobutenylene-based imidazolium salt ionic polymer D-III-1 was prepared.

The imidazolium salt content was measured by nuclear magnetic hydrogen spectroscopy, the benzyl bromide was completely converted to imidazolium salt, the total imidazolium salt content was 0.9mol%, the side group benzyl imidazolium salt content was 0.9mol%, thus the main chain did not contain the tertiary carbon imidazolium salt group.

Through test, analysis, and calculation, the isobutylene-based imidazolium salt ionic polymer D-III-1 was composed of 0.9mol% of structural unit A, 15.3mol% of structural unit B, and 83.8mol% of structural unit C.

### Test Example III

The isobutylene-based quaternary phosphonium salt polymer prepared in Example III-1 and the ABS resin were blended to prepare the anti-bacterial plastics, *Penicillium* and *Staphylococcus aureus* were used as fungi and bacteria, respectively, the antibacterial performance test was carried out on the anti-bacterial plastics.

The isobutylylene-based imidazolium salt polymer and the ABS resin were mixed in a mass ratio of 2:8 by adopting a Polylab OS PTW 16/40 type twin-screw extruder, the melt extrusion and granulation were implemented at the temperature of 200°C to prepare an antibacterial master batch containing 20% isobutylylene-based imidazolium salt polymer, the antibacterial master batch and the ABS resin were then mixed according to different proportions respectively, and the mixer was subjected to the melt extrusion and granulation by using the twin-screw extruder, the antibacterial plastics having the mass contents of 1%, 2%, 4%, 7%, and 10% of the isobutylylene-based imidazolium salt polymer were produced.

The anti-bacterial plastic pellets were subjected to the compression molding by using a tablet press at the temperature of 200°C and the pressure of 20 MPa for 3min respectively; then subjected to a cold pressing under the pressure of 15MPa for 10min to obtain an experimental sheet with the thickness of 1mm, which was placed for 24h and then cut into the test sample piece having the dimensions of 20mm×20mm.
(1) The test sample piece was placed in a six-well cell culture plate and sterilized by UV irradiation for 30min on both sides. 30µL of bacterial suspension with the concentration of 1×10⁶CFU/mL was dropwise added on the surface of each sample piece, and the bacterial solution was covered by a sterilized round cover glass, such that the bacterial solution was tiled on the sample piece surface. The six-well cell culture plate was put into a constant-temperature incubator at 37°C for culture, and the relative humidity was kept to be more than 90%. After 24h, a pipette was used for adding 2mL of normal saline to each well of the six-well cell culture plate to wash the sample piece surface, and the six-well cell culture plate was subjected to ultrasonic treatment for Imin to disperse the bacteria. A pipette was used for sucking 100µL of flushing fluid, which was subjected to a gradient dilution by using the normal saline, a diluent with a proper dilution multiple was selected for coating on a nutrient agar plate, which was cultured for 24h in a constant-temperature incubator at 37°C, a plate with the bacterial colony number of 30-300 was selected for counting, the number of viable bacteria on the sample piece surface was counted, and the antibacterial rate R was calculated. The results were shown in Table III-3.

R = [(A-B)/A] × 100%, wherein A was the number of viable bacteria on the surface of a plastic sample piece without adding the antibacterial agent, and B was the number of viable bacteria on the surface of the antibacterial plastic sample piece.

**Table III-3**

| Samples | Penicillium | | Staphylococcus aureus | |
|---|---|---|---|---|
| | Fungi number CFU/mL | Antibacterial rate % | Bacterial number CFU/mL | Antibacterial rate % |
| ABS | 1.54×10⁹ | 0 | 5.66×10⁹ | 0 |
| 1%-ABS | 9.22×10⁸ | 40.12 | 3.65×10⁹ | 35.44 |
| 2%-ABS | 2.58×10⁸ | 83.25 | 1.66×10⁹ | 70.68 |
| 4%-ABS | 1.39×10⁶ | 99.91 | 1.99×10⁸ | 96.47 |
| 6%-ABS | 0 | 100 | 0 | 100 |
| 8%-ABS | 0 | 100 | 0 | 100 |

(2) 6 anti-bacterial plastics sample pieces were weighed, and put into a conical flask, the deionized water was added in a proportion of 0.1g/mL according to the requirement of China national standard GB/T16886.12-2005, the sample pieces were placed in a constant-temperature water bath oscillator at 37°C, and vibrated at a rotating speed of 150 r/min and soaked, the antibacterial properties of the sample pieces after 15 days and 30 days of soaking were tested respectively, wherein the testing method was the same as that mentioned above, the results of antibacterial properties after 15 days of soaking were shown in Table III-4, and the results of antibacterial properties after 30 days of soaking were shown in Table III-5.

**Table III-4**

| Samples | Penicillium | | Staphylococcus aureus | |
|---|---|---|---|---|
| | Fungi number CFU/mL | Antibacterial rate % | Bacterial number CFU/mL | Antibacterial rate % |
| ABS | 7.58×10⁸ | 0 | 8.42×10⁸ | 0 |
| 1%-ABS | 4.71×10⁸ | 37.84 | 5.16×10⁸ | 38.66 |
| 2%-ABS | 1.12×10⁸ | 85.21 | 2.23×10⁸ | 73.51 |
| 4%-ABS | 1.55×10⁷ | 97.95 | 5.69×10⁷ | 93.24 |
| 6%-ABS | 0 | 100 | 0 | 100 |
| 8%-ABS | 0 | 100 | 0 | 100 |

**Table III-5**

| Samples | Penicillium | | Staphylococcus aureus | |
|---|---|---|---|---|
| | Fungi number CFU/mL | Antibacterial rate % | Bacterial number CFU/mL | Antibacterial rate % |
| ABS | 9.86×10⁸ | 0 | 6.42×10⁸ | 0 |
| 1%-ABS | 6.07×10⁸ | 38.42 | 4.27×10⁸ | 33.54 |
| 2%-ABS | 2.04×10⁸ | 79.27 | 1.94×10⁸ | 69.81 |
| 4%-ABS | 4.36×10⁷ | 95.58 | 5.94×10⁷ | 90.75 |
| 6%-ABS | 6.54×10⁴ | >99.99 | 0 | 100 |
| 8%-ABS | 0 | 100 | 0 | 100 |

As can be seen from the above results, the antibacterial plastics were produced by blending the ABS resin with the isobutylene-based imidazolium salt ionic polymer prepared in Example III-1, which was used an antibacterial agent, the antibacterial plastics showed desirable antibacterial properties when used in an amount of 4 parts or more, and when the antibacterial plastics were soaked in water for 15-30 days, the antibacterial plastics still maintained good antibacterial effect.

### Specific embodiment IV

The physicochemical parameters of the isobutylene p-methylstyrene random copolymer used in the following Examples and Comparative Examples were shown in Table IV-1, and its preparation method can be referenced to the patent document CN104558357B.

**Table IV-1**

| Samples | *M*_{w} | *M*ₙ | *M*_{w}/*M*ₙ | P-methylstyrene /mol% | Aluminum ion /ppm |
|---|---|---|---|---|---|
| P-IV-1 | 40840 | 15410 | 2.65 | 16.5 | 1.94 |
| P-IV-2 | 23560 | 9620 | 2.45 | 13.8 | 1.82 |
| P-IV-3 | 55350 | 21960 | 2.52 | 10.2 | 2.59 |
| P-IV-4 | 83320 | 27320 | 3.05 | 6.8 | 2.07 |

The other raw materials used in the following Examples and Comparative Examples were commercially available.

### Example IV-1

### (1) Photobromination reaction

In a 1,000mL three-necked flask equipped with a magnetic stirrer, 30g of polymer P-IV-1 (wherein the content of p-methylstyrene structural units was 0.075 mol) was dissolved in a mixed solvent of n-hexane (80mL) and tetrachloromethane (80mL), and 7g of sodium bicarbonate powder was added. The molar ratio of the polymer to liquid bromine was 1:1.1 based on the molar content of the structural units provided by p-methylstyrene. The bromination reaction was carried out in a lucifugal laboratory. A pipette was used for drawing 4.2mL of liquid bromine and adding into a constant pressure dropping funnel (protected from light) containing 30mL of tetrachloromethane. An LED light source with the wavelength of 595nm was adopted for irradiation to carry out the photobromination reaction, the power of the light source was 60W, and the pulse time was 10s. The light source was switched on to perform the bromination reaction, the liquid bromine was dropwise added at a slow speed, and the bromination reaction was carried out under the irradiation of a pulse light source until the liquid bromine was dropwise added completely, the light source was switched off and the reaction was stopped, the bromination reaction time was about 130min, a brominated polymer solution XP-IV-1 was obtained.

10 ml of the above brominated reactant solution was subjected to a centrifugal treatment to separate insoluble precipitates contained therein, the clear solution was dried under vacuum at 40°C to a constant weight, and the concentration of the glue solution was measured to be 13.4 wt%. The content of side group benzyl bromide in the reactant was 12.8 mol% (the benzyl bromination rate was 77.6%) by measuring with a nuclear magnetic hydrogen spectrometry, the main chain tertiary carbon hydrogen was converted into tertiary carbon bromine through bromine substitution reaction, there was no characteristic peak of tertiary carbon hydrogen in the nuclear magnetic hydrogen spectrum. The nuclear magnetic hydrogen spectrogram was shown in FIG. 4a, wherein the characteristic peak of chemical shift at 4.4654ppm was the side group benzyl bromide characteristic peak.

### (2) Ionization reaction

After removing insoluble solids from the brominated polymer solution XP-IV-1 by centrifugation, 50g of clear solution was taken and added into a 250mL three-necked bottle equipped with a magnetic stirrer, and the three-necked bottle was placed in a constant temperature oil bath. 1.9mL of 4-ethylpyridine (in formula 9, R₁₅ was ethyl, R₁₃, R₁₄, R₁₆, R₁₇ were hydrogen respectively) (dissolved with 5mL of tetrachloromethane) was added, the molar ratio of the pyridine to liquid bromine was 1.1:1, the reaction was performed at 80°C for 10 hours under protection of nitrogen gas. The brominated polymer gradually precipitated from the solvent during the ionization reaction process to form a blocky micelle cluster. After the reaction was finished, the blocky micelle cluster was separated from the solvent, and then pressed and washed in hexane for 2 times, the micelle was taken out, and subjected to vacuum drying at 40°C to a constant weight, the isobutenylene-based pyridinium salt ionic polymer A-IV-1 was prepared.

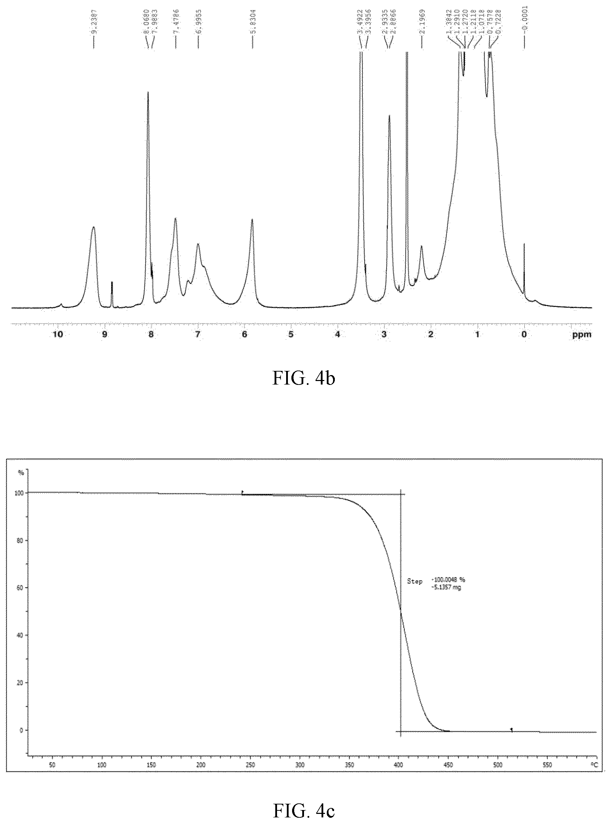

The pyridinium salt content was measured by nuclear magnetic hydrogen spectroscopy, the result was shown in FIG. 4b. The results indicated that the signal peak (4.4654ppm) of side group benzyl bromide disappeared, all the side group benzyl bromide was converted into the benzyl pyridinium salt, the total pyridinium salt content was calculated based on the integration of peak areas of hydrogen on the pyridine ring in the 4-ethylpyridine. The total pyridinium salt content was measured to be 17.5%, the side group benzyl pyridinium salt group content was 12.8 mol%, thus the main chain tertiary carbon pyridinium salt content was calculated to be 4.7 mol%. The nuclear magnetic hydrogen spectrogram was shown in FIG. 4b, wherein the characteristic peak of the chemical shift at 7.9-9.7ppm was the signal characteristic peak of the pyridine ring in the pyridinium salt group, and the characteristic peak of the chemical shift at 5.6-6.3ppm was the signal characteristic peak of the methylene in the benzyl pyridinium salt group.

Through test, analysis, and calculation, the isobutylene-based pyridinium salt ionic polymer A-IV-1 was composed of 14.3mol% of structural unit A, 2.2mol% of structural unit B, and 83.5mol% of structural unit C.

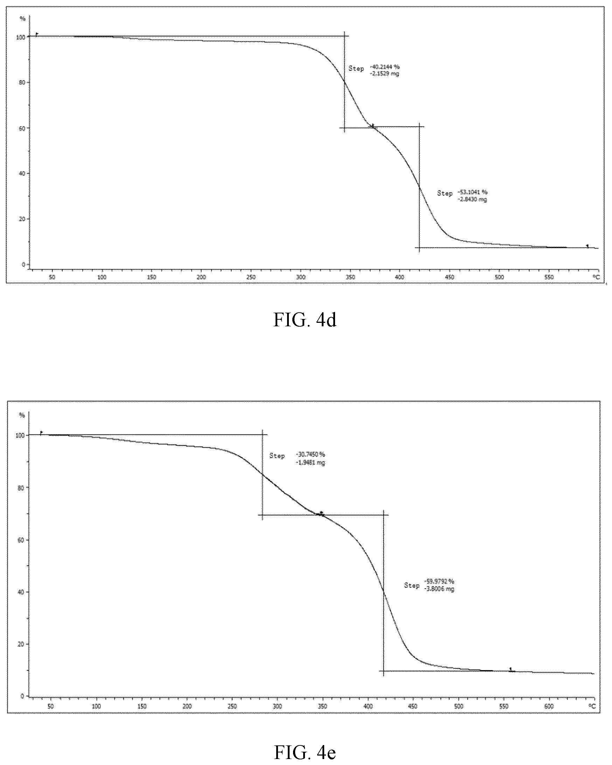

The thermal weight loss analysis data of the isobutylene-p-methylstyrene copolymer P-IV-1, the brominated isobutylene-p-methylstyrene copolymer XP-IV-1, and the isobutenyl-based imidazolium salt ionic polymer A-IV-1 was shown in Table IV-2, and the thermal weight loss curve graphs were shown in FIG. 4c, FIG. 4d, and FIG. 4e respectively.

As illustrated by FIG. 4c, the isobutylene-p-methylstyrene copolymer P-IV-1 only had an one-stage thermal weight loss (1 step), the thermal weight loss temperature was about 402.3°C, and the weight loss rate was 100 wt%.

As shown by FIG. 4d, the brominated isobutylene-p-methylstyrene copolymer XP-IV-1 had two-stage thermal weight loss (2 steps), the first stage was concentrated at about 342.2°C, the weight loss rate was 40.2wt%, wherein the thermal decomposition was carried out on the carbon bromine group; the second stage was concentrated at about 420.2°C, the weight loss rate was 53.1wt%, wherein the thermal decomposition was performed on the polymer main chain structure, which was consistent with the isobutylene-p-methylstyrene copolymer P-IV-1.

As can be seen from FIG. 4e, the isobutylene-based pyridinium salt ionic polymer A-IV-1 had two-stage thermal weight loss (2 steps), the first stage was concentrated at about 280.5°C, the weight loss rate was 30.7wt%, wherein the thermal decomposition was carried out on the pyridium salt group; the second stage was concentrated at about 416.2°C, the weight loss rate was 60.0wt%, wherein the thermal decomposition was performed on the polymer main chain structure, which was consistent with the isobutylene-p-methylstyrene copolymer P-IV-1, the thermal decomposition stage of the carbon bromine group in the XP-IV-1 did not exist, it demonstrated that the carbon bromine groups were completely ionized by the pyridinium salt, and the temperature for 5wt% thermal weight loss of the isobutelene-based pyridinium salt ionic polymer A-IV-1 was 211.3°C.

**Table IV-2**

| Samples | Segment 1 weight loss temperature (°C) | Segment 1 weight loss ratio (wt%) | Segment 2 weight loss temperature (°C) | Segment 2 weight loss ratio (wt%) | T_{5wt%} (°C) |
|---|---|---|---|---|---|
| P-IV-1 | 402.3 | 100 | / | / | 358.2 |
| XP-IV-1 | 342.2 | 40.2 | 420.3 | 53.1 | 306.4 |
| A-IV-1 | 280.5 | 30.7 | 416.2 | 60.0 | 211.3 |

### Example IV-2

### (2) Ionization reaction

The isobutylene-based pyridinium salt ionic polymer was prepared according to the method in Example IV-1, except that:
After removing insoluble solids from the brominated polymer solution XP-IV-1 by centrifugation, 50g of clear solution was taken and added into a 250mL three-necked bottle equipped with a magnetic stirrer, and the three-necked bottle was placed in a constant temperature oil bath. 1.6mL of 2-methylpyridine (in formula 9, R₁₅ was methyl, R₁₃, R₁₄, R₁₆, R₁₇ were hydrogen respectively) (dissolved with 5mL of tetrachloromethane) was added, the molar ratio of the pyridine to liquid bromine was 1.1:1, the reflux reaction was performed at 80°C for 10 hours under protection of nitrogen gas. The brominated polymer gradually precipitated from the solvent during the ionization reaction process to form a blocky micelle cluster. After the reaction was finished, the blocky micelle cluster was separated from the solvent, and then pressed and washed in hexane for 2 times, the micelle was taken out, and subjected to vacuum drying at 40°C to a constant weight, the isobutenylene-based pyridinium salt ionic polymer A-IV-2 was prepared.

Through testing, the total pyridinium salt content of the isobutylene-based pyridinium salt ionic polymer A-IV-2 was 17.5mol%, the side group benzyl pyridinium salt content was 12.8 mol%, thus the main chain pyridinium salt group content was calculated to be 4.7 mol%.

Through test, analysis, and calculation, the isobutylene-based pyridinium salt ionic polymer A-IV-2 was composed of 14.3mol% of structural unit A, 2.2mol% of structural unit B, and 83.5mol% of structural unit C.

### Example IV-3

### (1) Photobromination reaction

In a 1,000mL three-necked flask equipped with a magnetic stirrer, 35g of polymer P-IV-2 (wherein the content of p-methylstyrene structural units was 0.075 mol) was dissolved in a mixed solvent of cyclohexane (80mL) and tetrachloromethane (80mL), and 11g of sodium bicarbonate powder was added. The molar ratio of the polymer to liquid bromine was 1:1.7 based on the molar content of the structural units provided by p-methylstyrene. A pipette was used for drawing 6.5mL of liquid bromine and adding into a constant pressure dropping funnel (protected from light) containing 40mL of tetrachloromethane. An LED light source with the wavelength of 630nm was adopted for irradiation to carry out the photobromination reaction, the power of the light source was 50W, and the pulse time was 20s. The light source was switched on to perform the bromination reaction, the liquid bromine was dropwise added at a slow speed, and the bromination reaction was carried out under the irradiation of a pulse light source until the liquid bromine was dropwise added completely, the light source was switched off and the reaction was stopped, the bromination reaction time was about 160min, a brominated polymer solution XP-IV-2 was obtained.

10 ml of the above brominated reactant solution was subjected to a centrifugal treatment to separate insoluble solid precipitates contained therein, the clear solution was dried under vacuum at 40°C to a constant weight, and the concentration of the glue solution was measured to be 15.1 wt%. The content of side group benzyl bromide in the reactant was 12.4 mol% (the benzyl bromination rate was 73.8%) by measuring with a nuclear magnetic hydrogen spectrometry.

### (2) Ionization reaction

After removing insoluble solids from the brominated polymer solution XP-IV-2 by centrifugation, 50g of clear solution was taken and added into a 250mL three-necked bottle equipped with a magnetic stirrer, and the three-necked bottle was placed in a constant temperature oil bath. 2.5mL of pyridine (dissolved with 5mL of tetrachloromethane) was added, the molar ratio of the pyridine to liquid bromine was 1.3:1, the reaction was performed at 80°C for 12 hours under protection of nitrogen gas. The brominated polymer gradually precipitated from the solvent during the ionization reaction process to form an insoluble micelle. After the reaction was finished, the micelle was separated from the solvent, and then washed and filtered in hexane for 2 times, the micelle was taken out, and subjected to vacuum drying at 40°C to a constant weight, the isobutenylene-based pyridinium salt ionic polymer A-IV-3 was prepared.

The pyridinium salt content was measured by using the nuclear magnetic hydrogen spectroscopy, the benzyl bromide was partially converted to pyridinium salt, the total pyridinium salt content was 21.6mol%, the side group benzyl pyridinium salt content was 12.4mol%, and the main chain tertiary carbon pyridinium salt content was 9.2mol%.

The isobutylene-based pyridinium salt ionic polymer A-IV-3 was composed of 13.2mol% of structural unit A, 0.6mol% of structural unit B, and 86.2mol% of structural unit C.

### Example IV-4

### (1) Photobromination reaction

In a 1,000mL three-necked flask equipped with a magnetic stirrer, 35g of polymer P-IV-3 (wherein the content of p-methylstyrene structural units was 0.057 mol) was dissolved in a mixed solvent of n-hexane (80mL) and tetrachloromethane (80mL), and 4.8g of sodium bicarbonate powder was added. The molar ratio of the polymer to liquid bromine was 1:1 based on the molar content of the structural units provided by p-methylstyrene. The bromination reaction was carried out in a lucifugal laboratory. A pipette was used for drawing 3mL of liquid bromine and adding into a constant pressure dropping funnel (protected from light) containing 20mL of tetrachloromethane. The bromination reaction was carried out using the method in Example IV-1, the bromination reaction time was about 70min, a brominated polymer solution XP-IV-3 was obtained.

10 ml of the above brominated reactant solution was subjected to a centrifugal treatment to separate insoluble solid precipitates contained therein, the clear solution was dried under vacuum at 40°C to a constant weight, and the concentration of the glue solution was measured to be 15.4 wt%. The content of side group benzyl bromide in the reactant was 7.3 mol% (the benzyl bromination rate was 71.6%) by measuring with a nuclear magnetic hydrogen spectrometry.

### (2) Ionization reaction

After removing insoluble solids from the brominated polymer solution XP-IV-4 by centrifugation, 50g of clear solution was taken and added into a 250mL three-necked bottle equipped with a magnetic stirrer, and the three-necked bottle was placed in a constant temperature oil bath. 1.3mL of 2-aminomethylpyridine (dissolved with 5mL of tetrachloromethane) was added, the molar ratio of the pyridine to liquid bromine was 1.2:1, the reaction was performed at 80°C for 10 hours under protection of nitrogen gas. The brominated polymer gradually precipitated from the solvent during the ionization reaction process to form a blocky micelle cluster. After the reaction was finished, the blocky micelle cluster was separated from the solvent, and then pressed and washed in hexane for 2 times, the micelle was taken out, and subjected to vacuum drying at 40°C to a constant weight, the isobutenylene-based pyridinium salt ionic polymer A-IV-4 was prepared.

Through testing, the total pyridinium salt content of the isobutylene-based pyridinium salt ionic polymer A-IV-4 was 9.5%, the side group benzyl pyridinium salt content was 7.3 mol%, thus the main chain pyridinium salt group content was calculated to be 2.2 mol%.

Through test, analysis, and calculation, the isobutylene-based pyridinium salt ionic polymer A-IV-4 was composed of 8.4mol% of structural unit A, 1.8mol% of structural unit B, and 89.8mol% of structural unit C.

### Example IV-5

### (1) Photobromination reaction

The photobromination reaction was performed with the method in Example IV-4, except that the molar ratio of the polymer to liquid bromine was 1:0.7 based on the molar content of the structural units provided by p-methylstyrene. A pipette was used for drawing 2mL of liquid bromine and adding into a constant pressure dropping funnel (protected from light) containing 20mL of tetrachloromethane. The bromination reaction time was about 40min, a brominated polymer solution XP-IV-4 was obtained.

10 ml of the above brominated reactant solution was subjected to a centrifugal treatment to separate insoluble solid precipitates contained therein, the clear solution was dried under vacuum at 40°C to a constant weight, and the concentration of the glue solution was measured to be 15 wt%. The content of side group benzyl bromide in the reactant was 4.8 mol% (the benzyl bromination rate was 47.1 %) by measuring with a nuclear magnetic hydrogen spectrometry.

### (2) Ionization reaction

After removing insoluble solids from the brominated polymer solution XP-IV-4 by centrifugation, 50g of clear solution was taken and added into a 250mL three-necked bottle equipped with a magnetic stirrer, and the three-necked bottle was placed in a constant temperature oil bath. 1mL of 2,3-dichloropyridine (dissolved with 5mL of tetrachloromethane) was added, the molar ratio of the pyridine to liquid bromine was 1.4:1, the reaction was performed at 80°C for 10 hours under protection of nitrogen gas. The brominated polymer gradually precipitated from the solvent during the ionization reaction process to form a blocky micelle cluster. After the reaction was finished, the blocky micelle cluster was separated from the solvent, and then pressed and washed in hexane for 2 times, the micelle was taken out, and subjected to vacuum drying at 40°C to a constant weight, the isobutenylene-based pyridinium salt ionic polymer A-IV-5 was prepared.

Through testing, the total pyridinium salt content of the isobutylene-based pyridinium salt ionic polymer A-IV-5 was 6.2mol%, the side group benzyl pyridinium salt content was 4.8 mol%, thus the main chain pyridinium salt group content was calculated to be 1.4 mol%.

Through test, analysis, and calculation, the isobutylene-based pyridinium salt ionic polymer A-IV-5 was composed of 5.6mol% of structural unit A, 4.6mol% of structural unit B, and 89.8mol% of structural unit C.

### Example IV-6

### (1) Photobromination reaction

In a 1,000mL three-necked flask equipped with a magnetic stirrer, 40g of polymer P-IV-4 (wherein the content of p-methylstyrene structural units was 0.045 mol) was dissolved in a mixed solvent of n-hexane (100mL) and tetrachloromethane (100mL), and 4.6g of sodium bicarbonate powder was added. The molar ratio of the polymer to liquid bromine was 1:1.2 based on the molar content of the structural units provided by p-methylstyrene. The bromination reaction was carried out in a lucifugal laboratory. A pipette was used for drawing 2.8mL of liquid bromine and adding into a constant pressure dropping funnel (protected from light) containing 20mL of tetrachloromethane. An LED light source with the wavelength of 595nm was adopted for irradiation to carry out the photobromination reaction, the power of the light source was 50W, and the pulse time was 15s. The light source was switched on to perform the bromination reaction, the liquid bromine was dropwise added at a slow speed, and the bromination reaction was carried out under the irradiation of a pulse light source until the liquid bromine was dropwise added completely, the light source was switched off and the reaction was stopped, the bromination reaction time was about 100min, a brominated polymer solution XP-IV-5 was obtained.

10 ml of the above brominated reactant solution was subjected to a centrifugal treatment to separate insoluble solid precipitates contained therein, the clear solution was dried under vacuum at 40°C to a constant weight, and the concentration of the glue solution was measured to be 14.5 wt%. The content of side group benzyl bromide in the reactant was 5.2 mol% (the benzyl bromination rate was 76.5%) by measuring with a nuclear magnetic hydrogen spectrometry.

### (2) Ionization reaction

After removing insoluble solids from the brominated polymer solution XP-IV-5 by centrifugation, 50g of clear solution was taken and added into a 250mL three-necked bottle equipped with a magnetic stirrer, and the three-necked bottle was placed in a constant temperature oil bath. 1.6mL of 4-butylpyridine (dissolved with 5mL of tetrachloromethane) was added, the molar ratio of the pyridine to liquid bromine was 1.2:1, the reaction was performed at 80°C for 10 hours under protection of nitrogen gas. The brominated polymer gradually precipitated from the solvent during the ionization reaction process to form a blocky micelle cluster. After the reaction was finished, the blocky micelle cluster was separated from the solvent, and then pressed and washed in hexane for 2 times, the micelle was taken out, and subjected to vacuum drying at 40°C to a constant weight, the isobutenylene-based pyridinium salt ionic polymer A-IV-6 was prepared.

Upon testing, the total pyridinium salt content of the isobutylene-based pyridinium salt ionic polymer A-IV-6 was 7.1mol%, the side group benzyl pyridinium salt content was 5.2 mol%, thus the main chain pyridinium salt group content was calculated to be 1.9 mol%.

Through test, analysis, and calculation, the isobutylene-based pyridinium salt ionic polymer A-IV-6 was composed of 6.2mol% of structural unit A, 0.6mol% of structural unit B, and 93.2mol% of structural unit C.

### Example IV-7

The brominated polymer solution XP-IV-5 prepared in Example IV-6 was used for carrying out the ionization reaction.

### (2) Ionization reaction

After removing insoluble solids from the brominated polymer solution XP-IV-5 by centrifugation, 50g of clear solution was taken and added into a 250mL three-necked bottle equipped with a magnetic stirrer, and the three-necked bottle was placed in a constant temperature oil bath. 2.1mL of 4-octylpyridine (dissolved with 5mL of tetrachloromethane) was added, the molar ratio of the pyridine to liquid bromine was 1.1:1, the reaction was performed at 80°C for 10 hours under protection of nitrogen gas. The brominated polymer gradually precipitated from the solvent during the ionization reaction process to form a blocky micelle cluster. After the reaction was finished, the blocky micelle cluster was separated from the solvent, and then pressed and washed in hexane for 2 times, the micelle was taken out, and subjected to vacuum drying at 40°C to a constant weight, the isobutenylene-based pyridinium salt ionic polymer A-IV-7 was prepared.

Through testing, the total pyridinium salt content of the isobutylene-based pyridinium salt ionic polymer A-IV-7 was 7.1mol%, the side group benzyl pyridinium salt content was 5.2 mol%, thus the main chain pyridinium salt group content was calculated to be 1.9 mol%.

Through test, analysis, and calculation, the isobutylene-based pyridinium salt ionic polymer A-IV-7 was composed of 6.2mol% of structural unit A, 0.6mol% of structural unit B, and 93.2mol% of structural unit C.

### Comparative Example IV-1

### (1) Photobromination reaction

In a 1,000mL three-necked flask equipped with a magnetic stirrer, 30g of polymer P-IV-1 (wherein the content of p-methylstyrene structural units was 0.075 mol) was dissolved in a mixed solvent of n-hexane (80mL) and tetrachloromethane (80mL), and 3.6g of sodium bicarbonate powder was added. The molar ratio of the polymer to liquid bromine was 1.1:1 based on the molar content of the structural units provided by p-methylstyrene. The bromination reaction was carried out in a lucifugal laboratory. A pipette was used for drawing 4.2mL of liquid bromine in two times, that is, drawing 2.1mL of liquid bromine and adding into a constant pressure dropping funnel (protected from light) containing 15mL of tetrachloromethane for each time. An LED light source with the wavelength of 595nm was adopted for irradiation to carry out the photobromination reaction, the power of the light source was 80W. The liquid bromine solution in the constant-pressure dropping funnel was added into the polymer solution at an one-off manner, the light source was switched on to perform the bromination reaction, the bromination reaction with violent smoking was taken place, a large amount of generated HBr cannot be neutralized, the bromination reaction time was 10min, a colloidal solution system was subjected to color fading, the light source was switched off, and the reaction was stopped. HBr was neutralized by adding 100mL of aqueous NaOH solution having a concentration of 0.1wt%, a brominated polymer solution XDP-IV-1 was obtained.

5ml of the above brominated reactant solution was dried under vacuum at 40°C to a constant weight, and the content of benzyl bromide was only 0.92mol% (the benzyl bromination rate was 5.6%) measuring with a nuclear magnetic hydrogen spectrometry, the bromination rate was extremely low, and a large amount of brominated n-hexane was contained in the brominated polymer solution.

### (2) Ionization reaction

50g of clear solution of the brominated polymer solution XDP-IV-1 was taken and added into a 250mL three-necked bottle equipped with a magnetic stirrer, and the three-necked bottle was placed in a constant temperature oil bath. 1.9mL of 4-ethylpyridine (dissolved with 5mL of tetrachloromethane) was added, the molar ratio of the pyridine to liquid bromine was 1.1:1, the reaction was performed at 80°C for 10 hours under protection of nitrogen gas. After the reaction was finished, the insoluble micelle was filtered and separated from the solvent, and then washed and filtered in acetone for 2 times, the solid matter was taken out and subjected to vacuum drying at 40°C to a constant weight, the isobutenylene-based pyridinium salt ionic polymer D-IV-1 was prepared.

The pyridinium salt content was measured by using the nuclear magnetic hydrogen spectroscopy, the benzyl bromide was completely converted to pyridinium salt, the total pyridinium salt content was 0.9mol%, the side group benzyl pyridinium salt content was 0.9mol%, thus the main chain did not contain the tertiary carbon pyridinium salt group.

Through test, analysis, and calculation, the isobutylene-based pyridinium salt ionic polymer D-IV-1 was composed of 0.9mol% of structural unit A, 15.6mol% of structural unit B, and 83.5mol% of structural unit C.

### Test Example IV

The isobutylene-based pyridinium salt polymer prepared in Example IV-1 and the PS resin were blended to prepare the anti-bacterial plastics, *Escherichia coli* and *Staphylococcus aureus* were used as gram-negative bacteria and gram-positive bacteria, respectively, the antibacterial performance test was carried out on the anti-bacterial plastics.

The isobutylylene-based pyridinium salt polymer and the PS resin were mixed in a mass ratio of 2:8 by adopting a Polylab OS PTW 16/40 type twin-screw extruder, the melt extrusion and granulation were implemented at the temperature of 150°C to prepare an antibacterial master batch containing 20% isobutylylene-based pyridinium salt polymer, the antibacterial master batch and the PS resin were then mixed according to different proportions respectively, and the mixer was subjected to the melt extrusion and granulation by using the twin-screw extruder, the antibacterial plastics having the mass contents of 1%, 3%, 5%, 7%, and 10% of the isobutylylene-based pyridinium salt polymer were produced.

The anti-bacterial plastic pellets were subjected to the compression molding by using a tablet press at the temperature of 150°C and the pressure of 20 MPa for 3min respectively; then subjected to a cold pressing under the pressure of 15MPa for 10min to obtain an experimental sheet with the thickness of 1mm, which was placed for 24h and then cut into the test sample piece having the dimensions of 20mm×20mm.
(1) The test sample piece was placed in a six-well cell culture plate and sterilized by UV irradiation for 30min on both sides. 30µL of bacterial suspension with the concentration of 1×10⁶CFU/mL was dropwise added on the surface of each sample piece, and the bacterial solution was covered by a sterilized round cover glass, such that the bacterial solution was tiled on the sample piece surface. The six-well cell culture plate was put into a constant-temperature incubator at 37°C for culture, and the relative humidity was kept to be more than 90%. After 24h, a pipette was used for adding 2mL of normal saline to each well of the six-well cell culture plate to wash the sample piece surface, and the six-well cell culture plate was subjected to ultrasonic treatment for 1min to disperse the bacteria. A pipette was used for sucking 100µL of flushing fluid, which was subjected to a gradient dilution by using the normal saline, a diluent with a proper dilution multiple was selected for coating on a nutrient agar plate, which was cultured for 24h in a constant-temperature incubator at 37°C, a plate with the bacterial colony number of 30-300 was selected for counting, the number of viable bacteria on the sample piece surface was counted, and the antibacterial rate R was calculated. The results were shown in Table IV-3.

*R* = [(A-B)/A] × 100%, wherein A was the number of viable bacteria on the surface of a plastic sample piece without adding the antibacterial agent, and B was the number of viable bacteria on the surface of the antibacterial plastic sample piece.

**Table IV-3**

| Samples | Escherichia coli | | Staphylococcus aureus | |
|---|---|---|---|---|
| | Bacterial number CFU/mL | Antibacterial rate % | Bacterial number CFU/mL | Antibacterial rate % |
| PS | 5.92×10⁸ | 0 | 8.64×10⁸ | 0 |
| 1%-PS | 3.52×10⁸ | 40.57 | 4.51×10⁸ | 47.84 |
| 3%-PS | 2.05×10⁸ | 65.42 | 2.13×10⁸ | 75.32 |
| 5%-PS | 5.72×10⁷ | 90.33 | 2.41×10⁷ | 97.21 |
| 7%-PS | 2.96×10⁵ | 99.95 | 0 | 100 |
| 10%-PS | 1.33×10³ | >99.99 | 0 | 100 |

(2) 6 anti-bacterial plastics sample pieces were weighed, and put into a conical flask, the deionized water was added in a proportion of 0.1g/mL according to the requirement of China national standard GB/T16886.12-2005, the sample pieces were placed in a constant-temperature water bath oscillator at 37°C, and vibrated at a rotating speed of 150 r/min and soaked, the antibacterial properties of the sample pieces after 15 days and 30 days of soaking were tested respectively, wherein the testing method was the same as that mentioned above, the results of antibacterial properties after 15 days of soaking were shown in Table IV-4, and the results of antibacterial properties after 30 days of soaking were shown in Table IV-5.

**Table IV-4**

| Samples | Escherichia coli | | Staphylococcus aureus | |
|---|---|---|---|---|
| | Bacterial number CFU/mL | Antibacterial rate % | Bacterial number CFU/mL | Antibacterial rate % |
| PS | 8.39×10⁸ | 0 | 1.02×10⁹ | 0 |
| 1%-PS | 4.85×10⁸ | 42.19 | 5.14×10⁸ | 49.64 |
| 3%-PS | 2.70×10⁸ | 67.83 | 2.41×10⁸ | 76.39 |
| 5%-PS | 6.34×10⁷ | 92.44 | 8.05×10⁶ | 99.21 |
| 7%-PS | 2.35×10⁶ | 99.72 | 0 | 100 |
| 10%-PS | 3.17×10³ | >99.99 | 0 | 100 |

**Table IV-5**

| Samples | Escherichia coli | | Staphylococcus aureus | |
|---|---|---|---|---|
| | Bacterial number CFU/mL | Antibacterial rate % | Bacterial number CFU/mL | Antibacterial rate % |
| PS | 6.34×10⁸ | 0 | 8.12×10⁸ | 0 |
| 1%-PS | 3.91×10⁸ | 38.52 | 4.35×10⁸ | 46.42 |
| 3%-PS | 2.34×10⁸ | 63.15 | 2.15×10⁸ | 73.51 |
| 5%-PS | 6.48×10⁷ | 89.77 | 6.93×10⁷ | 91.46 |
| 7%-PS | 2.25×10⁷ | 96.45 | 0 | 100 |
| 10%-PS | 1.38×10³ | >99.99 | 0 | 100 |

As can be seen from the above results, the antibacterial plastics were produced by blending the PS resin with the isobutylene-based pyridinium salt ionic polymer prepared in Example IV-1, when the addition amount of the isobutylene-based pyridinium salt ionic polymer was more than 5 parts, it showed desirable antibacterial effect, the antibacterial rate against the gram negative bacteria and the gram positive bacteria at 24h reached 90% or more; in addition, when the antibacterial plastics were soaked in water for 15-30 days, the antibacterial plastics still maintained good antibacterial effect.

## Claims

1. An isobutylene-based cationic salt ionic polymer comprising a structural unit A, a structural unit B, and a structural unit C;
the structural unit A has a structure represented by formula (2) and/or formula (3), and optionally a structure represented by formula (1); the structural unit B has a structure represented by formula (4); and the structural unit C has a structure represented by formula (5); 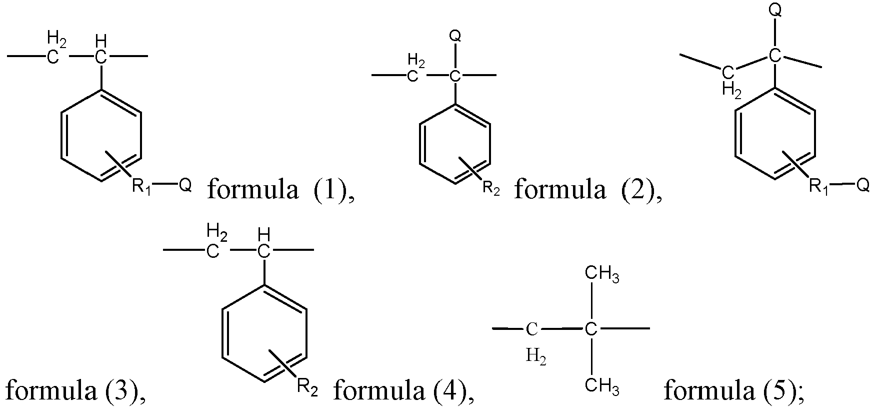
wherein R₁ is C₁-C₄ alkylene, and R₂ is C₁-C₄ alkyl;
Q is 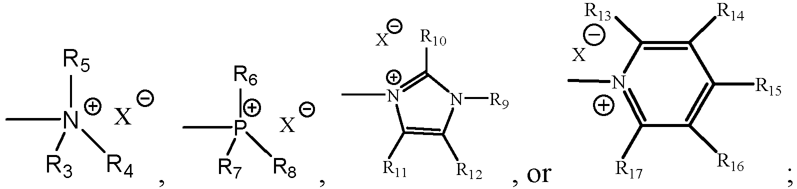
wherein R₃, R₄, and R₅ are each independently C₁-C₂₀ straight chain alkyl, C₁-C₂₀ branched chain alkyl, or C₆-C₂₀ aryl;
R₆, R₇, and R₈ are each independently C₁-C₁₀ straight chain alkyl, C₁-C₁₀ branched chain alkyl, C₃-C₁₀ cycloalkyl, or C₆-C₁₀ aryl;
R₉ is hydrogen, C₁-C₂₀ straight chain alkyl; R₁₀, R₁₁, and R₁₂ are each independently hydrogen, halogen atom, C₁-C₁₀ straight chain alkyl, C₁-C₁₀ branched chain alkyl, hydroxyl, nitro, -(CH₂)ₙ-NH₂, cyano group, or C₆-C₁₀ aryl; n is an integer between 0 and 5;
R₁₃, R₁₄, R₁₅, R₁₆, and R₁₇ are each independently hydrogen, halogen atom, C₁-C₂₀ straight chain alkyl, C₁-C₂₀ branched chain alkyl, nitro, amino, or cyano group;
X is Cl, or Br.

2. The isobutylene-based cationic salt ionic polymer according to claim 1, wherein R₁ is methylene or ethydene, preferably methylene; R₂ is methyl or ethyl, preferably methyl; R₃, R₄, and R₅ are each independently C₁-C₁₈ straight chain alkyl or C₆-C₉ aryl, preferably methyl, C₈-C₁₆ straight chain alkyl, or phenyl; and X is Br;
preferably, R₁ is methylene or ethydene, more preferably methylene; R₂ is methyl or ethyl, more preferably methyl; R₆, R₇, and R₈ are each independently C₁-C₈ straight chain alkyl, C₅-C₈ cycloalkyl, or C₆-C₈ aryl, more preferably C₁-C₈ straight chain alkyl, cyclopentyl, cyclohexyl, or phenyl; and X is Br;
preferably, R₁ is methylene or ethydene, more preferably methylene; R₂ is methyl or ethyl, more preferably methyl; R₉ is hydrogen, C₁-C₁₈ straight chain alkyl, more preferably hydrogen, C₁-C₁₆ straight chain alkyl; R₁₀, R₁₁, and R₁₂ are each independently hydrogen, halogen atom, C₁-C₅ straight chain alkyl, C₁-C₈ branched chain alkyl, hydroxyl, nitro, -(CH₂)ₙ-NH₂, cyano group, or C₆-C₈ aryl, n is an integer from 0 to 3, more preferably each independently hydrogen, halogen atom, C₁-C₄ straight chain alkyl, hydroxyl, nitro, cyano group, amino, or phenyl; and X is Br;
preferably, R₁ is methylene or ethydene, more preferably methylene; R₂ is methyl or ethyl, more preferably methyl; R₁₃, R₁₄, R₁₅, R₁₆, and R₁₇ are each independently hydrogen, halogen, C₁-C₁₅ straight chain alkyl, C₁-C₁₅ branched chain alkyl, nitro, amino, or cyano group, more preferably hydrogen, halogen, C₁-C₁₀ straight chain alkyl, amino, or cyano group; X is Br.

3. The isobutylene-based cationic salt ionic polymer according to claim 1 or 2, wherein a content of cationic salt groups is within the range of 1.5-35mol%, preferably 2.5-25mol%, based on the total molar amount of the polymer;
preferably, when Q is 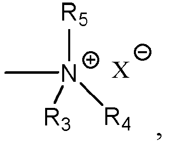 the content of cationic salt groups is within the range of 1.5-35mol%, preferably 2.5-25mol%, based on the total molar amount of the polymer;
preferably, when Q is 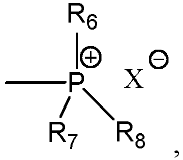 the content of cationic salt groups is within the range of 1.5-23mol%, preferably 3-18mol%, based on the total molar amount of the polymer;
preferably, when Q is 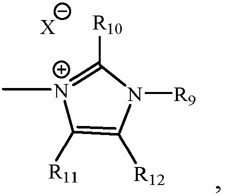 the content of cationic salt groups is within the range of 1.5-23mol%, preferably 3-18mol%, based on the total molar amount of the polymer;
preferably, when Q is 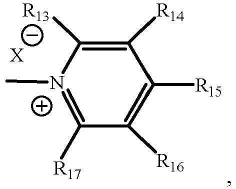 the content of cationic salt groups is within the range of 1.5-35mol%, preferably 3-25mol%, based on the total molar amount of the polymer.

4. The isobutylene-based cationic salt ionic polymer according to any one of claims 1-3, wherein a content of side-chain benzyl cationic salt groups is within the range of 1-20mol%, preferably 1.5-15mol%, and a content of main chain tertiary carbon cationic salt groups is within the range of 0.5-15mol%, preferably 1-10mol%, based on the total molar amount of the polymer;
preferably, when Q is 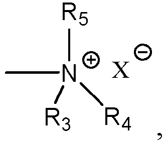 the content of side-chain benzyl cationic salt groups is within the range of 1-20mol%, preferably 1.5-15mol%, and the content of main chain tertiary carbon cationic salt groups is within the range of 0.5-15mol%, preferably 1-10mol%, based on the total molar amount of the polymer;
preferably, when Q is 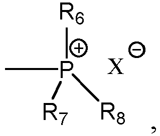 the content of side-chain benzyl cationic salt groups is within the range of 1-15mol%, preferably 2-13mol%, and the content of main chain tertiary carbon cationic salt groups is within the range of 0.5-8mol%, preferably 1-5mol%, based on the total molar amount of the polymer;
preferably, when Q is 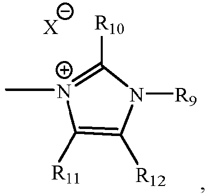 the content of side-chain benzyl cationic salt groups is within the range of 1-15mol%, preferably 2-13mol%, and the content of main chain tertiary carbon cationic salt groups is within the range of 0.5-8mol%, preferably 1-5mol%, based on the total molar amount of the polymer;
preferably, when Q is 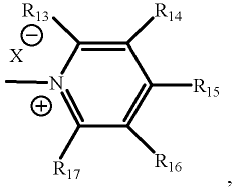 the content of side-chain benzyl cationic salt groups is within the range of 1-20mol%, preferably 2-15mol%, and the content of main chain tertiary carbon cationic salt groups is within the range of 0.5-15mol%, preferably 1-10mol%, based on the total molar amount of the polymer.

5. The isobutylene-based cationic salt ionic polymer according to any one of claims 1-4, wherein the structural unit A is contained in an amount of 1-20mol%, the structural unit B is contained in an amount of 0.5-10mol%, and the structural unit C is contained in an amount of 75-97mol%, based on the total molar amount of the polymer;
preferably, the structural unit A is contained in an amount of 2-15mol%, the structural unit B is contained in an amount of 1-5mol%, and the structural unit C is contained in an amount of 80-95mol%, based on the total molar amount of the polymer.

6. The isobutylene-based cationic salt ionic polymer according to any one of claims 1-5, wherein the isobutylene-based cationic salt polymer has a thermal decomposition temperature within the range of 150-550°C, more preferably 180-500°C;
preferably, the isobutylene-based cationic salt polymer is an isobutylene-based quaternary ammonium salt ionic polymer having a thermal decomposition temperature within the range of 150-500°C, more preferably 180-450°C;
preferably, the isobutylene-based cationic salt polymer is an isobutylene-based quaternary phosphonium salt ionic polymer having a thermal decomposition temperature within the range of 150-500°C, more preferably 200-450°C;
preferably, the isobutylene-based cationic salt polymer is an isobutylene-based imidazolium salt ionic polymer having a thermal decomposition temperature within the range of 150-550°C, more preferably 200-500°C;
preferably, the isobutylene-based cationic salt polymer is an isobutylene-based pyridinium salt ionic polymer having a thermal decomposition temperature within the range of 100-500°C, more preferably 150-450°C;
preferably , a temperature for 5wt% thermal weight loss of the isobutylene-based cationic salt ionic polymer is ≥ 170°C, preferably ≥ 180°C;
preferably, the isobutylene-based cationic salt polymer is an isobutylene-based quaternary ammonium salt ionic polymer, the temperature for 5wt% thermal weight loss of the isobutylene-based quaternary ammonium salt ionic polymer is ≥ 170°C, preferably ≥ 180°C; preferably, the isobutylene-based cationic salt polymer is an isobutylene-based quaternary phosphonium salt ionic polymer, the temperature for 5wt% thermal weight loss of the isobutylene-based quaternary phosphonium salt ionic polymer is ≥ 200°C, preferably ≥ 220°C;
preferably, the isobutylene-based cationic salt polymer is an isobutylene-based imidazolium salt ionic polymer, the temperature for 5wt% thermal weight loss of the isobutylene-based imidazolium salt ionic polymer is ≥ 200°C, preferably ≥ 220°C;
preferably, the isobutylene-based cationic salt polymer is an isobutylene-based pyridinium salt ionic polymer, the temperature for 5wt% thermal weight loss of the isobutylene-based pyridinium salt ionic polymer is ≥ 180°C, preferably ≥ 200°C.

7. A method for preparing the isobutylene-based cationic salt ionic polymer comprising:
(1) dissolving the polymer in an organic solvent to obtain a polymer solution, adding a halogen to the polymer solution to carry out a halogenation reaction to obtain a halogenated polymer solution;
(2) adding at least one of a tertiary amine compound, a tertiary phosphine compound, an imidazole compound, and a pyridine compound to the halogenated polymer solution to perform an ionization reaction to obtain the isobutylene-based cationic salt ionic polymer;
the polymer is a random copolymer of isobutylene and alkyl styrene;
the halogenation reaction is carried out under irradiation of a visible light, the visible light has a pulsed type light emission mode.

8. The method according to claim 7, wherein a content of structural unit provided by alkyl styrene is within the range of 3-25mol%, preferably 5-20mol%, and a content of structural unit provided by isobutylene is within the range of 75-97mol%, preferably 80-95mol%, based on the total molar amount of the polymer;
preferably, the polymer has a weight average molecular weight Mw within the range of 1×10⁴g/mol-1×10⁵g/mol, more preferably 2×10⁴g/mol-8×10⁴g/mol; and a molecular weight distribution coefficient within the range of 2-3.5, more preferably 2.2-3;
preferably, a content of aluminum ions in said polymer is less than 10ppm, more preferably less than 5ppm.

9. The method according to claim 7 or 8, wherein the wavelength of the visible light is within the range of 560-630nm;
preferably, the pulsed type light emission has a pulse time within the range of 5-40s, preferably 10-30s;
preferably, the molar ratio of the polymer to the halogen is 1: (0.5-2), preferably 1: (0.8-1.5), based on the molar content of the structural unit provided by alkyl styrene;
preferably, the halogen is liquid bromine;
preferably, the halogen is mixed with an organic solvent to obtain a halogen solution, and the halogen solution is dropwise added to the polymer solution for carrying out a halogenation reaction;
preferably, the dropwise addition rate of the halogen solution is controlled such that the halogenation reaction time is within the range of 30-180 min.

10. The method according to any one of claims 7-9, wherein the tertiary amine compound has a structure represented by formula (6); 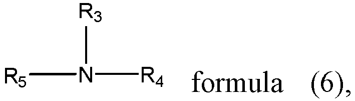 wherein R₃, R₄, and R₅ are each independently C₁-C₂₀ straight chain alkyl, C₁-C₂₀ branched chain alkyl, or C₆-C₂₀ aryl;
preferably, the tertiary phosphine compound has a structure represented by formula (7); 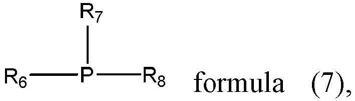 wherein R₆, R₇, and R₈ are each independently C₁-C₁₀ straight chain alkyl, C₁-C₁₀ branched chain alkyl, C₃-C₁₀ cycloalkyl, or C₆-C₁₀ aryl;
preferably, the imidazole compound has a structure represented by formula (8); 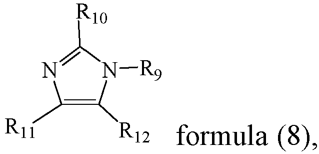 wherein R₉ is hydrogen, C₁-C₂₀ straight chain alkyl, R₁₀, R₁₁, and R₁₂ are each independently hydrogen, halogen atoms, C₁-C₁₀ straight chain alkyl, C₁-C₁₀ branched chain alkyl, hydroxyl, nitro, -(CH₂)ₙ-NH₂, cyano group, or C₆-C₁₀ aryl, n is an integer between 0 and 5;
preferably, the pyridine compound has a structure represented by formula (9); 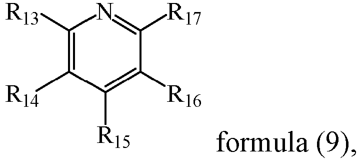 wherein R₁₃, R₁₄, R₁₅, R₁₆, and R₁₇ are each independently hydrogen, halogen atom, C₁-C₂₀ straight chain alkyl, C₁-C₂₀ branched chain alkyl, nitro, amino, or cyano group;
preferably, R₃, R₄, and R₅ are each independently C₁-C₁₈ straight chain alkyl or C₆-C₉ aryl; more preferably, R₃, R₄, and R₅ are each independently methyl, C₈-C₁₆ straight chain alkyl, or phenyl; further preferably, both R₃ and R₄ are methyl, and R₅ is C₈-C₁₆ straight chain alkyl, or phenyl;
preferably, R₆, R₇, and R₈ are each independently C₁-C₈ straight chain alkyl, C₅-C₈ cycloalkyl, or C₆-C₈ aryl; more preferably, R₆, R₇, and R₈ are each independently C₁-C₈ straight chain alkyl, cyclopentyl, cyclohexyl, or phenyl;
preferably, R₉ is hydrogen, C₁-C₁₈ straight chain alkyl; R₁₀, R₁₁, and R₁₂ are each independently hydrogen, halogen atom, C₁-C₅ straight chain alkyl, C₁-C₅ branched chain alkyl, hydroxyl, nitro, -(CH₂)ₙ-NH₂, cyano group, or C₆-C₈ aryl; n is an integer from 0 to 3; more preferably, R₉ is hydrogen, C₁-C₁₆ straight chain alkyl; R₁₀, R₁₁, and R₁₂ are each independently hydrogen, halogen atom, C₁-C₄ straight chain alkyl, hydroxyl, nitro, cyano group, amino, or phenyl;
preferably, R₁₃, R₁₄, R₁₅, R₁₆, and R₁₇ are each independently hydrogen, halogen, C₁-C₁₅ straight chain alkyl, C₁-C₁₅ branched chain alkyl, nitro, amino, or cyano group; more preferably, R₁₃, R₁₄, R₁₅, R₁₆, and R₁₇ are each independently hydrogen, halogen, C₁-C₁₀ straight chain alkyl, amino, or cyano group.

11. The method according to any one of claims 7-10, wherein the molar ratio of at least one of the tertiary amine compound, the tertiary phosphine compound, the imidazole compound, and the pyridine compound to the halogen is (0.8-1.5): 1, preferably (0.9-1.2): 1.

12. The method according to any one of claims 7-11, wherein the ionization reaction conditions in step (2) comprise: under the protection of a protective gas, a reaction temperature is within the range of 20-150°C, preferably 40-120°C, and a reaction time is within the range of 1-24h, preferably 2-20h;
preferably, the ionization reaction conditions comprise: under the protection of a protective gas, the reaction temperature is within the range of 20-100°C, more preferably 40-80°C, and the reaction time is within the range of 1-10h, more preferably 2-8h;
preferably, the ionization reaction conditions comprise: under the protection of a protective gas, the reaction temperature is within the range of 60-150°C, more preferably 80-120°C, and the reaction time is within the range of 4-24h, more preferably 6-20h;
preferably, the ionization reaction conditions comprise: under the protection of a protective gas, the reaction temperature is within the range of 60-120°C, more preferably 70-100°C, and the reaction time is within the range of 6-20h, more preferably 8-16h;
preferably, the ionization reaction conditions comprise: under the protection of a protective gas, the reaction temperature is within the range of 60-150°C, more preferably 80-120°C, and the reaction time is within the range of 4-20h, more preferably 6-16h.

13. A method for using the isobutylene-based cationic salt ionic polymer according to any one of claims 1-6 as an antibacterial agent.

14. The isobutylene-based cationic salt ionic polymer according to any one of claims 1-6 is used for inhibiting and killing at least one of bacteria, fungi, and viruses.

15. An antibacterial polymer material comprising the isobutylene-based cationic salt ionic polymer according to any one of claims 1-6;
preferably, the isobutylene-based cationic salt ionic polymer is used in an amount of 1-10 parts, more preferably 2-7 parts, relative to 100 parts of the polymer material;
preferably, the isobutylene-based cationic salt ionic polymer is an isobutylene-based quaternary ammonium salt ionic polymer; the isobutylene-based quaternary ammonium salt ionic polymer is used in an amount of 1-10 parts, more preferably 5-7 parts, relative to 100 parts of the polymer material;
preferably, the isobutylene-based cationic salt ionic polymer is an isobutylene-based quaternary phosphonium salt ionic polymer; the isobutylene-based quaternary phosphonium salt ionic polymer is used in an amount of 1-8 parts, more preferably 2-6 parts, relative to 100 parts of the polymer material;
preferably, the isobutylene-based cationic salt ionic polymer is an isobutylene-based imidazolium salt ionic polymer; the isobutylene-based imidazolium salt ionic polymer is used in an amount of 1-10 parts, more preferably 3-7 parts, relative to 100 parts of the polymer material;
preferably, the isobutylene-based cationic salt ionic polymer is an isobutylene-based pyridinium salt ionic polymer; the isobutylene-based pyridinium salt ionic polymer is used in an amount of 1-10 parts, more preferably 3-7 parts, relative to 100 parts of the polymer material;
preferably, the polymer material is at least one selected from the group consisting of plastics, rubber, fibers, and coatings.

## Patentansprüche

1. Kationisches Salzionenpolymer auf Isobutylenbasis, das eine Struktureinheit A, eine Struktureinheit B und eine Struktureinheit C umfasst; wobei die Struktureinheit A eine durch die Formel (2) und/oder die Formel (3) dargestellte Struktur und optional eine durch die Formel (1) dargestellte Struktur aufweist; wobei die Struktureinheit B eine durch die Formel (4) dargestellte Struktur aufweist; und wobei die Struktureinheit C eine durch die Formel (5) dargestellte Struktur aufweist; 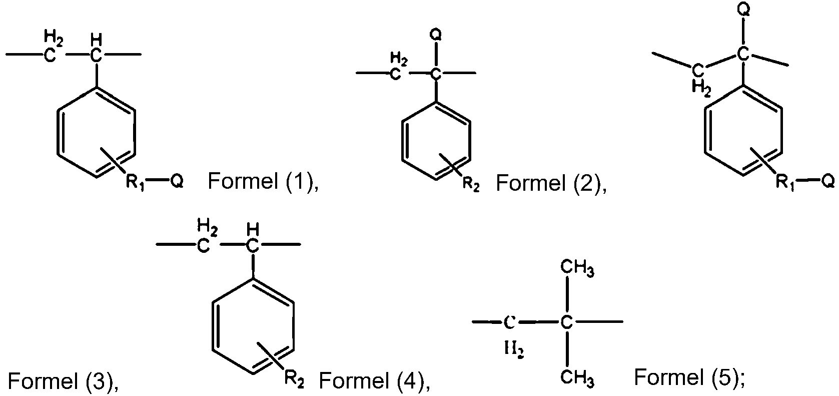
wobei R₁ ein C₁-C₄-Alkylen ist und R₂ ein C₁-C₄-Alkyl ist;
Q 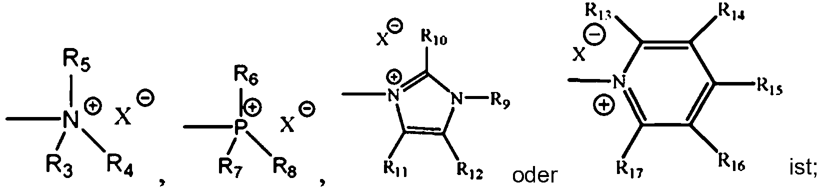
wobei R₃, R₄ und R₅ jeweils unabhängig voneinander geradkettiges C₁-C₂₀-Alkyl, verzweigtkettiges C₁-C₂₀-Alkyl oder C₆-C₂₀-Aryl sind;
R₆, R₇ und R₈ jeweils unabhängig voneinander geradkettiges C₁-C₁₀-Alkyl, verzweigtkettiges C₁-C₁₀-Alkyl, C₃-C₁₀-Cycloalkyl oder C₆-C₁₀-Aryl sind;
R₉ Wasserstoff, geradkettiges C₁-C₂₀-Alkyl ist; R₁₀, R₁₁ und R₁₂ jeweils unabhängig voneinander Wasserstoff, ein Halogenatom, geradkettiges C₁-C₁₀-Alkyl, verzweigtkettiges C₁-C₁₀-Alkyl, Hydroxyl, Nitro, -(CH₂)ₙ-NH₂, eine Cyanogruppe oder C₆-C₁₀-Aryl sind; n eine ganze Zahl zwischen 0 und 5 ist;
R₁₃, R₁₄, R₁₅, R₁₆ und R₁₇ jeweils unabhängig voneinander Wasserstoff, ein Halogenatom, geradkettiges C₁-C₂₀-Alkyl, verzweigtkettiges C₁-C₂₀-Alkyl, eine Nitro-, Amino- oder Cyanogruppe sind;
X Cl oder Br ist.

2. Kationisches Salzionenpolymer auf Isobutylenbasis nach Anspruch 1,
wobei R₁ Methylen oder Ethyliden, bevorzugt Methylen, ist; R₂ Methyl oder Ethyl, bevorzugt Methyl, ist; R₃, R₄ und R₅ jeweils unabhängig voneinander geradkettiges C₁-C₁₈-Alkyl oder C₆-C₉-Aryl, bevorzugt Methyl, geradkettiges C₈-C₁₆-Alkyl oder Phenyl sind; und X Br ist;
R₁ bevorzugt Methylen oder Ethyliden, bevorzugter Methylen ist; R₂ Methyl oder Ethyl ist, bevorzugter Methyl; R₆, R₇ und R₈ jeweils unabhängig voneinander geradkettiges C₁-C₈-Alkyl, C₅-C₈-Cycloalkyl oder C₆-C₈-Aryl, bevorzugter geradkettiges C₁-C₈-Alkyl, Cyclopentyl, Cyclohexyl oder Phenyl sind; und X Br ist;
R₁ bevorzugt Methylen oder Ethyliden, bevorzugter Methylen, ist; R₂ Methyl oder Ethyl, bevorzugter Methyl, ist; R₉ Wasserstoff, geradkettiges C₁-C₁₈-Alkyl, bevorzugter Wasserstoff, geradkettiges C₁-C₁₆-Alkyl ist; R₁₀, R₁₁ und R₁₂ jeweils unabhängig voneinander Wasserstoff, ein Halogenatom, geradkettiges C₁-C₅-Alkyl, verzweigtkettiges C₁-C₅-Alkyl, Hydroxyl, Nitro, -(CH₂)ₙ-NH₂, eine Cyano-Gruppe oder C₆-C₈-Aryl sind, n eine ganze Zahl von 0 bis 3 ist, bevorzugter jeweils unabhängig voneinander Wasserstoff, ein Halogenatom, geradkettiges C₁-C₄-Alkyl, Hydroxyl, Nitro, eine Cyano-Gruppe, Amino oder Phenyl; und X Br ist;
R₁ bevorzugt Methylen oder Ethyliden, bevorzugter Methylen, ist; R₂ Methyl oder Ethyl, bevorzugter Methyl, ist; R₁₃, R₁₄, R₁₅, R₁₆ und R₁₇ jeweils unabhängig voneinander Wasserstoff, Halogen, geradkettiges C₁-C₁₅-Alkyl, verzweigtkettiges C₁-C₁₅-Alkyl, eine Nitro-, Amino- oder Cyano-Gruppe, bevorzugter Wasserstoff, Halogen, geradkettiges C₁-C₁₀-Alkyl, eine Amino- oder Cyano-Gruppe, sind; X Br ist.

3. Kationisches Salzionenpolymer auf Isobutylenbasis nach Anspruch 1 oder 2, wobei der Gehalt an kationischen Salzgruppen im Bereich von 1,5 bis 35 Mol-%, bevorzugt 2,5 bis 25 Mol-%, bezogen auf die Gesamtmolmenge des Polymers, liegt;
wenn Q 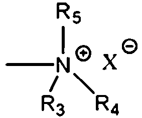 ist, der Gehalt an kationischen Salzgruppen bevorzugt im Bereich von 1,5 bis 35 Mol-%, bevorzugt 2,5 bis 25 Mol-%, bezogen auf die Gesamtmolmenge des Polymers, liegt;
wenn Q 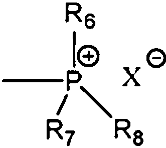 ist, der Gehalt an kationischen Salzgruppen bevorzugt im Bereich von 1,5 bis 23 Mol-%, bevorzugt 3 bis 18 Mol-%, bezogen auf die Gesamtmolmenge des Polymers, liegt;
wenn Q 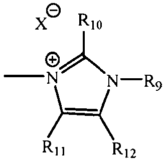 ist, der Gehalt an kationischen Salzgruppen bevorzugt im Bereich von 1,5 bis 23 Mol-%, bevorzugt 3 bis 18 Mol-%, bezogen auf die Gesamtmolmenge des Polymers, liegt;
wenn Q 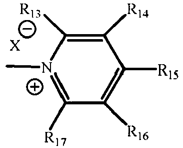 ist, der Gehalt an kationischen Salzgruppen bevorzugt im Bereich von 1,5 bis 35 Mol-%, bevorzugt von 3 bis 25 Mol-%, bezogen auf die Gesamtmolmenge des Polymers, liegt.

4. Kationisches Salzionenpolymer auf Isobutylenbasis nach einem der Ansprüche 1 bis 3, wobei der Gehalt an kationischen Salzgruppen der Benzyl-Seitenkette im Bereich von 1 bis 20 Mol-%, bevorzugt 1,5 bis 15 Mol-%, liegt, und der Gehalt an kationischen Salzgruppen an tertiären Kohlenstoffatomen der Hauptkette im Bereich von 0,5 bis 15 Mol-%, bevorzugt 1 bis 10 Mol-%, liegt, bezogen auf die Gesamtmolmenge des Polymers;
wenn Q 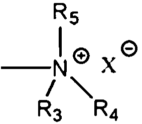 ist, der Gehalt an kationischen Salzgruppen der Benzyl-Seitenkette im Bereich von 1 bis 20 Mol-%, bevorzugt von 1,5 bis 15 Mol-%, liegt, und der Gehalt an kationischen Salzgruppen an tertiären Kohlenstoffatomen der Hauptkette im Bereich von 0,5 bis 15 Mol-%, bevorzugt von 1 bis 10 Mol-%, liegt, bezogen auf die Gesamtmolmenge des Polymers;
wenn Q 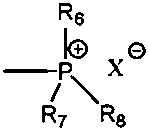 ist, der Gehalt an kationischen Salzgruppen der Benzyl-Seitenkette im Bereich von 1 bis 15 Mol-%, bevorzugt von 2 bis 13 Mol-%, liegt, und der Gehalt an kationischen Salzgruppen an tertiären Kohlenstoffatomen der Hauptkette im Bereich von 0,5 bis 8 Mol-%, bevorzugt von 1 bis 5 Mol-%, liegt, bezogen auf die Gesamtmolmenge des Polymers;
wenn Q 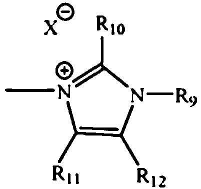 ist, der Gehalt an kationischen Salzgruppen der Benzyl-Seitenkette im Bereich von 1 bis 15 Mol-%, bevorzugt von 2 bis 13 Mol-%, liegt, und der Gehalt an kationischen Salzgruppen an tertiären Kohlenstoffatomen der Hauptkette im Bereich von 0,5 bis 8 Mol-%, bevorzugt von 1 bis 5 Mol-%, liegt, bezogen auf die Gesamtmolmenge des Polymers;
wenn Q 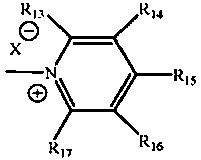 ist, der Gehalt an kationischen Salzgruppen der Benzyl-Seitenkette im Bereich von 1 bis 20 Mol-%, bevorzugt 2 bis 15 Mol-%, liegt, und der Gehalt an kationischen Salzgruppen an tertiären Kohlenstoffatomen der Hauptkette im Bereich von 0,5 bis 15 Mol-%, bevorzugt 1 bis 10 Mol-%, liegt, bezogen auf die Gesamtmolmenge des Polymers.

5. Kationisches Salzionenpolymer auf Isobutylenbasis nach einem der Ansprüche 1 bis 4, wobei die Struktureinheit A in einer Menge von 1 bis 20 Mol-% enthalten ist, die Struktureinheit B in einer Menge von 0,5 bis 10 Mol-% enthalten ist und die Struktureinheit C in einer Menge von 75 bis 97 Mol-% enthalten ist, bezogen auf die Gesamtmolmenge des Polymers;
die Struktureinheit A bevorzugt in einer Menge von 2 bis 15 Mol-% enthalten ist, die Struktureinheit B in einer Menge von 1 bis 5 Mol-% enthalten ist und die Struktureinheit C in einer Menge von 80 bis 95 Mol-% enthalten ist, bezogen auf die Gesamtmolmenge des Polymers.

6. Kationisches Salzionenpolymer auf Isobutylenbasis nach einem der Ansprüche 1 bis 5, wobei das kationische Salzpolymer auf Isobutylenbasis eine thermische Zersetzungstemperatur im Bereich von 150 bis 550 °C, bevorzugter von 180 bis 500 °C, aufweist;
das kationische Salzpolymer bevorzugt auf Isobutylenbasis ein ionisches Polymer auf Basis eines quaternären Ammoniumsalzes ist, das eine thermische Zersetzungstemperatur im Bereich von 150 bis 500 °C, bevorzugter von 180 bis 450 °C, aufweist;
das kationische Salzpolymer auf Isobutylenbasis bevorzugt ein ionisches Polymer auf Basis eines quaternären Phosphoniumsalzes auf Isobutylenbasis ist, das eine thermische Zersetzungstemperatur im Bereich von 150 bis 500 °C, bevorzugter von 200 bis 450 °C, aufweist;
das kationische Salzpolymer auf Isobutylenbasis bevorzugt ein ionisches Imidazoliumsalz-Polymer auf Isobutylenbasis ist, das eine thermische Zersetzungstemperatur im Bereich von 150 bis 550 °C, bevorzugter von 200 bis 500 °C, aufweist;
das kationische Salzpolymer auf Isobutylenbasis bevorzugt ein ionisches PyridiniumsalzPolymer auf Isobutylenbasis ist, das eine thermische Zersetzungstemperatur im Bereich von 100 bis 500 °C, bevorzugter von 150 bis 450 °C, aufweist;
bevorzugt eine Temperatur, bei der ein thermischer Gewichtsverlust von 5 Gew.-% des kationischen Salzionenpolymers auf Isobutylenbasis eintritt, ≥ 170 °C, bevorzugt ≥ 180 °C, beträgt;
das kationische Salzpolymer auf Isobutylenbasis bevorzugt ein ionisches Polymer auf Basis eines quaternären Ammoniumsalzes ist, wobei die Temperatur, bei der ein thermischer Gewichtsverlust von 5 Gew.-% des ionischen Polymers auf Basis eines quaternären Ammoniumsalzes eintritt, ≥ 170 °C, bevorzugt ≥ 180 °C, beträgt; das kationische Salzpolymer auf Isobutylenbasis bevorzugt ein ionisches Polymer auf Basis eines quaternären Phosphoniumsalzes ist, wobei die Temperatur, bei der ein thermischer Gewichtsverlust von 5 Gew.-% des ionischen Polymers auf Basis eines quaternären Phosphoniumsalzes eintritt, ≥ 200 °C, bevorzugt ≥ 220 °C, beträgt;
das kationische Salzpolymer auf Isobutylenbasis bevorzugt ein ionisches Imidazoliumsalz-Polymer auf Isobutylenbasis ist, wobei die Temperatur, bei der ein thermischer Gewichtsverlust von 5 Gew.-% des ionischen Imidazoliumsalz-Polymers auf Isobutylenbasis eintritt, ≥ 200 °C, bevorzugt ≥ 220 °C, beträgt;
das kationische Salzpolymer auf Isobutylenbasis bevorzugt ein ionisches Pyridiniumsalzpolymer auf Isobutylenbasis ist, wobei die Temperatur, bei der ein thermischer Gewichtsverlust von 5 Gew.-% des ionischen Pyridiniumsalzpolymers auf Isobutylenbasis eintritt, ≥ 180 °C, bevorzugt ≥ 200 °C, beträgt.

7. Verfahren zum Herstellen eines kationischen Salzionenpolymers auf Isobutylenbasis, umfassend:
(1) Auflösen des Polymers in einem organischen Lösungsmittel, um eine Polymerlösung zu erhalten, Zugeben eines Halogens zur Polymerlösung, um eine Halogenierungsreaktion durchzuführen und eine halogenierte Polymerlösung zu erhalten;
(2) Zugeben mindestens einer von einer tertiären Amin-Verbindung, einer tertiären Phosphin-Verbindung, einer Imidazol-Verbindung und einer Pyridin-Verbindung zu der halogenierten Polymerlösung, um eine Ionisationsreaktion durchzuführen und das kationische Salzionenpolymer auf Isobutylenbasis zu erhalten;
wobei das Polymer ein statistisches Copolymer aus Isobutylen und Alkylstyrol ist;
die Halogenierungsreaktion unter Bestrahlung mit sichtbarem Licht durchgeführt wird, wobei das sichtbare Licht einen gepulsten Lichtemissionsmodus aufweist.

8. Verfahren nach Anspruch 7, wobei ein Gehalt an Struktureinheiten, die durch Alkylstyrol bereitgestellt werden, im Bereich von 3 bis 25 Mol-%, bevorzugt 5 bis 20 Mol-%, liegt, und ein Gehalt an Struktureinheiten, die durch Isobutylen bereitgestellt werden, im Bereich von 75 bis 97 Mol-%, bevorzugt 80 bis 95 Mol-%, liegt, bezogen auf die Gesamtmolmenge des Polymers;
das Polymer bevorzugt ein gewichtsmittleres Molekulargewicht Mw im Bereich von 1×10⁴ g/mol bis 1×10⁵ g/mol, bevorzugter 2×10⁴ g/mol bis 8×10⁴ g/mol, und einen Molekulargewichtsverteilungskoeffizienten im Bereich von 2 bis 3,5, bevorzugter von 2,2 bis 3, aufweist; ein Gehalt an Aluminiumionen in dem Polymer bevorzugt weniger als 10 ppm, bevorzugter weniger als 5 ppm, beträgt.

9. Verfahren nach Anspruch 7 oder 8, wobei die Wellenlänge des sichtbaren Lichts im Bereich von 560 bis 630 nm liegt;
die gepulste Lichtemission bevorzugt eine Pulsdauer im Bereich von 5 bis 40 s, bevorzugt von 10 bis 30 s, aufweist;
das Molverhältnis des Polymers zum Halogen bevorzugt 1: (0,5-2), bevorzugt 1: (0,8-1,5) beträgt, bezogen auf den Molgehalt der durch Alkylstyrol bereitgestellten Struktureinheit; das Halogen bevorzugt flüssiges Brom ist;
das Halogen bevorzugt mit einem organischen Lösungsmittel gemischt wird, um eine Halogenlösung zu erhalten, und die Halogenlösung tropfenweise zu der Polymerlösung zugegeben wird, um eine Halogenierungsreaktion durchzuführen;
die Tropfenzugaberate der Halogenlösung bevorzugt so geregelt ist, dass die Halogenierungsreaktionszeit im Bereich von 30 bis 180 min liegt.

10. Verfahren nach einem der Ansprüche 7 bis 9, wobei die tertiäre Amin-Verbindung eine durch die Formel (6) dargestellte Struktur aufweist; 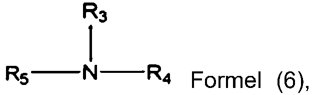
wobei R₃, R₄ und R₅ jeweils unabhängig voneinander geradkettiges C₁-C₂₀-Alkyl, verzweigtkettiges C₁-C₂₀-Alkyl oder C₆-C₂₀-Aryl sind; die tertiäre Phosphinverbindung bevorzugt eine durch Formel (7) dargestellte Struktur aufweist; 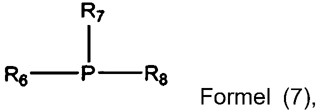
wobei R₆, R₇ und R₈ jeweils unabhängig voneinander geradkettiges C₁-C₁₀-Alkyl, verzweigtkettiges C₁-C₁₀-Alkyl, C₃-C₁₀-Cycloalkyl oder C₆-C₁₀-Aryl sind; die Imidazol-Verbindung bevorzugt eine durch Formel (8) dargestellte Struktur aufweist; 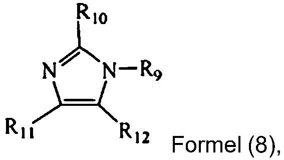
wobei R₉ Wasserstoff oder geradkettiges C₁-C₂₀-Alkyl ist, R₁₀, R₁₁ und R₁₂ jeweils unabhängig voneinander Wasserstoff, Halogenatome, geradkettiges C₁-C₁₀-Alkyl, verzweigtkettiges C₁-C₁₀-Alkyl, Hydroxyl, Nitro, -(CH₂)ₙ-NH₂, eine Cyano-Gruppe oder C₆-C₁₀-Aryl sind, n eine ganze Zahl zwischen 0 und 5 ist; die Pyridinverbindung bevorzugt eine durch die Formel (9) dargestellte Struktur aufweist; 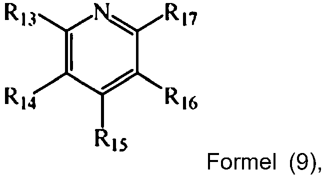
wobei R₁₃, R₁₄, R₁₅, R₁₆ und R₁₇ jeweils unabhängig voneinander Wasserstoff, ein Halogenatom, eine geradkettige C₁-C₂₀-Alkylgruppe, eine verzweigte C₁-C₂₀-Alkylgruppe, eine Nitro-, Amino- oder Cyanogruppe sind;
R₃, R₄ und R₅ bevorzugt jeweils unabhängig voneinander geradkettiges C₁-C₁₈-Alkyl oder C₆-C₉-Aryl sind; R₃, R₄ und R₅ bevorzugter jeweils unabhängig voneinander Methyl, geradkettiges C₈-C₁₆-Alkyl oder Phenyl sind; sowohl R₃ als auch R₄ weiter bevorzugt Methyl sind und R₅ geradkettiges C₈-C₁₆-Alkyl oder Phenyl ist;
R₆, R₇ und R₈ bevorzugt jeweils unabhängig voneinander geradkettiges C₁-C₈-Alkyl, C₅-C₈-Cycloalkyl oder C₆-C₈-Aryl sind; R₆, R₇ und R₈ bevorzugter jeweils unabhängig voneinander geradkettiges C₁-C₈-Alkyl, Cyclopentyl, Cyclohexyl oder Phenyl sind;
R₉ bevorzugt Wasserstoff oder geradkettiges C₁-C₁₈-Alkyl ist; R₁₀, R₁₁ und R₁₂ jeweils unabhängig voneinander Wasserstoff, ein Halogenatom, geradkettiges C₁-C₅-Alkyl, verzweigtkettiges C₁-C₅-Alkyl, Hydroxyl, Nitro, -(CH₂)ₙ-NH₂, eine Cyanogruppe oder C₆-C₈-Aryl sind; n eine ganze Zahl von 0 bis 3 ist; R₉ bevorzugter Wasserstoff oder geradkettiges C₁-C₁₆-Alkyl ist; R₁₀, R₁₁ und R₁₂ jeweils unabhängig voneinander Wasserstoff, ein Halogenatom, geradkettiges C₁-C₄-Alkyl, Hydroxyl, Nitro, eine Cyanogruppe, Amino oder Phenyl sind;
R₁₃, R₁₄, R₁₅, R₁₆ und R₁₇ bevorzugter jeweils unabhängig voneinander Wasserstoff, ein Halogenatom, geradkettiges C₁-C₁₅-Alkyl, verzweigtkettiges C₁-C₁₅-Alkyl, eine Nitro-, Amino- oder Cyanogruppe sind; R₁₃, R₁₄, R₁₅, R₁₆ und R₁₇ bevorzugt jeweils unabhängig voneinander Wasserstoff, Halogen, geradkettiges C₁-C₁₀-Alkyl, eine Amino- oder Cyanogruppe sind.

11. Verfahren nach einem der Ansprüche 7 bis 10, wobei das Molverhältnis mindestens einer der tertiären Aminverbindungen, der tertiären Phosphinverbindungen, der Imidazolverbindungen und der Pyridinverbindungen zum Halogen (0,8-1,5):1, bevorzugt (0,9-1,2):1, ist.

12. Verfahren nach einem der Ansprüche 7 bis 11, wobei die Ionisationsreaktionsbedingungen in Schritt (2) Folgendes umfassen: unter dem Schutz eines Schutzgases liegt die Reaktionstemperatur im Bereich von 20 bis 150 °C, bevorzugt von 40 bis 120 °C, und die Reaktionszeit im Bereich von 1 bis 24 Stunden, bevorzugt von 2 bis 20 Stunden;
bevorzugt umfassen die Ionisationsreaktionsbedingungen Folgendes: unter dem Schutz eines Schutzgases liegt die Reaktionstemperatur im Bereich von 20 bis 100 °C, bevorzugter von 40 bis 80 °C, und die Reaktionszeit im Bereich von 1 bis 10 Stunden, bevorzugter von 2 bis 8 Stunden;
bevorzugt umfassen die Ionisationsreaktionsbedingungen Folgendes: unter dem Schutz eines Schutzgases liegt die Reaktionstemperatur im Bereich von 60 bis 150 °C, bevorzugter von 80 bis 120 °C, und die Reaktionszeit im Bereich von 4 bis 24 Stunden, bevorzugter von 6 bis 20 Stunden
bevorzugt umfassen die Ionisationsreaktionsbedingungen Folgendes: unter dem Schutz eines Schutzgases liegt die Reaktionstemperatur im Bereich von 60 bis 120 °C, bevorzugter von 70 bis 100 °C, und die Reaktionszeit im Bereich von 6 bis 20 Stunden, bevorzugter von 8 bis 16 Stunden;
bevorzugt umfassen die Ionisationsreaktionsbedingungen Folgendes: unter dem Schutz eines Schutzgases liegt die Reaktionstemperatur im Bereich von 60 bis 150 °C, bevorzugter von 80 bis 120 °C, und die Reaktionszeit im Bereich von 4 bis 20 Stunden, bevorzugter von 6 bis 16 Stunden.

13. Verfahren zur Verwendung des kationischen Salzionenpolymers auf Isobutylenbasis nach einem der Ansprüche 1 bis 6 als antibakterielles Mittel.

14. Kationisches Salzionenpolymer auf Isobutylenbasis nach einem der Ansprüche 1 bis 6, das zur Hemmung und Abtötung von mindestens einem von Bakterien, Pilzen und Viren verwendet wird.

15. Antibakterielles Polymermaterial, das das kationische Salzionenpolymer auf Isobutylenbasis nach einem der Ansprüche 1 bis 6 umfasst;
bevorzugt wird das kationische Salz-Ionenpolymer auf Isobutylenbasis in einer Menge von 1 bis 10 Teilen, bevorzugter 2 bis 7 Teilen, bezogen auf 100 Teile des Polymermaterials, verwendet;
bevorzugt ist das kationische Salz-Ionenpolymer auf Isobutylenbasis ein quaternäres Ammoniumsalz-Ionenpolymer auf Isobutylenbasis; das quaternäre Ammoniumsalz-Ionenpolymer auf Isobutylenbasis wird in einer Menge von 1 bis 10 Teilen, bevorzugter 5 bis 7 Teilen, bezogen auf 100 Teile des Polymermaterials, verwendet;
bevorzugt ist das kationische Salz-Ionenpolymer auf Isobutylenbasis ein quaternäres Phosphoniumsalz-Ionenpolymer auf Isobutylenbasis; das quaternäre Phosphoniumsalz-Ionenpolymer auf Isobutylenbasis wird in einer Menge von 1 bis 8 Teilen, bevorzugter 2 bis 6 Teilen, bezogen auf 100 Teile des Polymermaterials, verwendet;
bevorzugt ist das kationische Salz-Ionenpolymer auf Isobutylenbasis ein Imidazoliumsalz-Ionenpolymer auf Isobutylenbasis; das Imidazoliumsalz-Ionenpolymer auf Isobutylenbasis wird in einer Menge von 1 bis 10 Teilen, bevorzugter 3 bis 7 Teilen, bezogen auf 100 Teile des Polymermaterials, verwendet;
bevorzugt ist das kationische Salzionenpolymer auf Isobutylenbasis ein Pyridiniumsalz-Ionenpolymer auf Isobutylenbasis; das Pyridiniumsalz-Ionenpolymer auf Isobutylenbasis wird in einer Menge von 1 bis 10 Teilen, bevorzugter 3 bis 7 Teilen, bezogen auf 100 Teile des Polymermaterials, verwendet;
bevorzugt ist das Polymermaterial mindestens eines, ausgewählt aus der Gruppe bestehend aus Kunststoffen, Kautschuk, Fasern und Beschichtungen.

## Revendications

1. Polymère ionique de sel cationique à base d'isobutylène comprenant un motif structural A, un motif structural B et un motif structural C ; le motif structural A présente une structure représentée par la formule (2) et/ou la formule (3), et facultativement une structure représentée par la formule (1) ; le motif structural B présente une structure représentée par la formule (4) ; et le motif structural C présente une structure représentée par la formule (5) ; 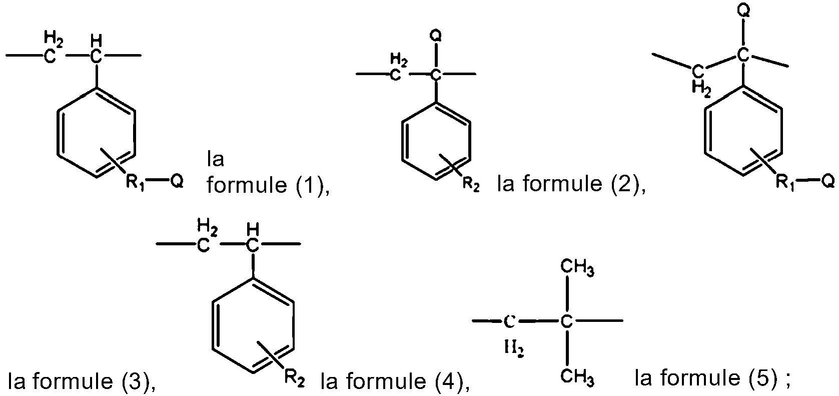
dans lesquelles R₁ est un alkylène en C₁-C₄, et R₂ est un alkyle en C₁-C₄ ;
Q est 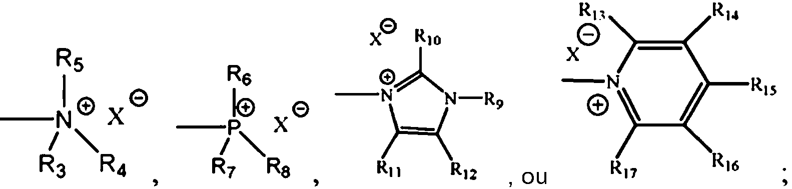
dans lesquelles R₃, R₄ et R₅ sont chacun indépendamment un alkyle linéaire en C₁-C₂₀, un alkyle ramifié en C₁-C₂₀ ou un aryle en C₆-C₂₀ ; R₆, R₇ et R₈ sont chacun indépendamment un alkyle linéaire en C₁-C₁₀, un alkyle ramifié en C₁-C₁₀, un cycloalkyle en C₃-C₁₀ ou un aryle en C₆-C₁₀ ; R₉ est un hydrogène, un alkyle linéaire en C₁-C₂₀ ; R₁₀, R₁₁ et R₁₂ sont chacun indépendamment un hydrogène, un atome d'halogène, un alkyle linéaire en C₁-C₁₀, un alkyle ramifié en C₁-C₁₀, un groupe hydroxyle, nitro, -(CH₂)ₙ-NH₂, cyano ou un aryle en C₆-C₁₀ ; n est un nombre entier compris entre 0 et 5 ; R₁₃, R₁₄, R₁₅, R₁₆ et R₁₇ sont chacun indépendamment un hydrogène, un atome d'halogène, un alkyle linéaire en C₁-C₂₀, un alkyle ramifié en C₁-C₂₀, un groupe nitro, amino ou cyano ; X est Cl, ou Br.

2. Polymère ionique de sel cationique à base d'isobutylène selon la revendication 1, dans lequel R₁ est un méthylène ou un éthylène, préférablement un méthylène ; R₂ est un méthyle ou un éthyle, préférablement un méthyle ; R₃, R₄ et R₅ sont chacun indépendamment un alkyle linéaire en C₁-C₁₈ ou un aryle en C₆-C₉, préférablement un méthyle, un alkyle linéaire en C₈-C₁₆ ou un phényle ; et X est Br ; préférablement, R₁ est un méthylène ou un éthylène, plus préférablement un méthylène ; R₂ est un méthyle ou un éthyle, plus préférablement un méthyle ; R₆, R₇ et R₈ sont chacun indépendamment un alkyle linéaire en C₁-C₈, un cycloalkyle en C₅-C₈ ou un aryle en C₆-C₈, plus préférablement un alkyle linéaire en C₁-C₈, un cyclopentyle, un cyclohexyle ou un phényle ; et X est Br ;
préférablement, R₁ est un méthylène ou un éthylène, plus préférablement un méthylène ; R₂ est un méthyle ou un éthyle, plus préférablement un méthyle ; R₉ est un hydrogène, un alkyle linéaire en C₁-C₁₈, plus préférablement un hydrogène, un alkyle linéaire en C₁-C₁₆ ; R₁₀, R₁₁ et R₁₂ sont chacun indépendamment un hydrogène, un atome d'halogène, un alkyle linéaire en C₁-C₅, un alkyle ramifié en C₁-C₅, un groupe hydroxyle, nitro, -(CH₂)ₙ-NH₂, cyano ou un aryle en C₆-C₈, n est un nombre entier allant de 0 à 3, plus préférablement chacun indépendamment un hydrogène, un atome d'halogène, un alkyle linéaire en C₁-C₄, un groupe hydroxyle, nitro, cyano, amino ou phényle ; et X est Br ;
préférablement, R₁ est un méthylène ou un éthylène, plus préférablement un méthylène ; R₂ est un méthyle ou un éthyle, plus préférablement un méthyle ; R₁₃, R₁₄, R₁₅, R₁₆ et R₁₇ sont chacun indépendamment un hydrogène, un halogène, un alkyle linéaire en C₁-C₁₅, un alkyle ramifié en C₁-C₁₅, un groupe nitro, amino ou cyano, plus préférablement un hydrogène, un halogène, un alkyle linéaire en C₁-C₁₀, un groupe amino ou cyano ; X est Br.

3. Polymère ionique de sel cationique à base d'isobutylène selon la revendication 1 ou la revendication 2, dans lequel une teneur en groupes de sel cationique est dans la plage de 1,5-35 mol%, préférablement de 2,5-25 mol%, sur la base de la quantité molaire totale du polymère ; préférablement, lorsque Q est 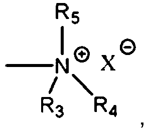 la teneur en groupes de sel cationique est dans la plage de 1,5-35 mol%, préférablement de 2,5-25 mol%, sur la base de la quantité molaire totale du polymère ; préférablement, lorsque Q est 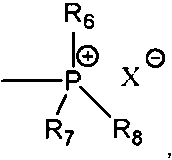 la teneur en groupes de sel cationique est dans la plage de 1,5-23 mol%, préférablement de 3-18 mol%, sur la base de la quantité molaire totale du polymère ; préférablement, lorsque Q est 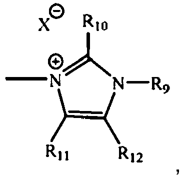 la teneur en groupes de sel cationique est dans la plage de 1,5-23 mol%, préférablement de 3-18 mol%, sur la base de la quantité molaire totale du polymère ; préférablement, lorsque Q est 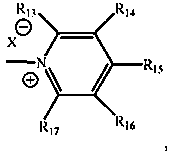 la teneur en groupes de sel cationique est dans la plage de 1,5-35 mol%, préférablement de 3-25 mol%, sur la base de la quantité molaire totale du polymère.

4. Polymère ionique de sel cationique à base d'isobutylène selon l'une quelconque des revendications 1 à 3, dans lequel une teneur en groupes de sel cationique benzyle de chaîne latérale est dans la plage de 1-20 mol%, préférablement de 1,5-15 mol%, et une teneur en groupes de sel cationique de carbone tertiaire de chaîne principale est dans la plage de 0,5-15 mol%, préférablement de 1-10 mol%, sur la base de la quantité molaire totale du polymère ; préférablement, lorsque Q est 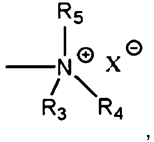 la teneur en groupes de sel cationique benzyle de chaîne latérale est dans la plage de 1-20 mol%, préférablement de 1,5-15 mol%, et la teneur en groupes de sel cationique de carbone tertiaire de chaîne principale est dans la plage de 0,5-15 mol%, préférablement de 1-10 mol%, sur la base de la quantité molaire totale du polymère ; préférablement, lorsque Q est 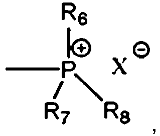 la teneur en groupes de sel cationique benzyle de chaîne latérale est dans la plage de 1-15 mol%, préférablement de 2-13 mol%, et la teneur en groupes de sel cationique de carbone tertiaire de chaîne principale est dans la plage de 0,5-8 mol%, préférablement de 1-5 mol%, sur la base de la quantité molaire totale du polymère ; préférablement, lorsque Q est 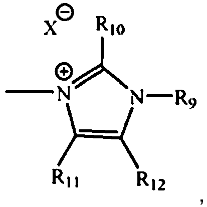 la teneur en groupes de sel cationique benzyle de chaîne latérale est dans la plage de 1-15 mol%, préférablement de 2-13 mol%, et la teneur en groupes de sel cationique de carbone tertiaire de chaîne principale est dans la plage de 0,5-8 mol%, préférablement de 1-5 mol%, sur la base de la quantité molaire totale du polymère ; préférablement, lorsque Q est 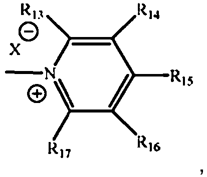 la teneur en groupes de sel cationique benzyle de chaîne latérale est dans la plage de 1-20 mol%, préférablement de 2-15 mol%, et la teneur en groupes de sel cationique de carbone tertiaire de chaîne principale est dans la plage de 0,5-15 mol%, préférablement de 1-10 mol%, sur la base de la quantité molaire totale du polymère.

5. Polymère ionique de sel cationique à base d'isobutylène selon l'une quelconque des revendications 1 à 4, dans lequel le motif structural A est contenu en une quantité de 1-20 mol%, le motif structural B est contenu en une quantité de 0,5-10 mol%, et le motif structural C est contenu en une quantité de 75-97 mol%, sur la base de la quantité molaire totale du polymère ; préférablement, le motif structural A est contenu en une quantité de 2-15 mol%, le motif structural B est contenu en une quantité de 1-5 mol%, et le motif structural C est contenu en une quantité de 80-95 mol%, sur la base de la quantité molaire totale du polymère.

6. Polymère ionique de sel cationique à base d'isobutylène selon l'une quelconque des revendications 1 à 5, dans lequel le polymère de sel cationique à base d'isobutylène présente une température de décomposition thermique dans la plage de 150-550 °C, plus préférablement de 180-500 °C ; préférablement, le polymère de sel cationique à base d'isobutylène est un polymère ionique de sel d'ammonium quaternaire à base d'isobutylène présentant une température de décomposition thermique dans la plage de 150-500 °C, plus préférablement de 180-450 °C ;
préférablement, le polymère de sel cationique à base d'isobutylène est un polymère ionique de sel de phosphonium quaternaire à base d'isobutylène présentant une température de décomposition thermique dans la plage de 150-500 °C, plus préférablement de 200-450 °C ;
préférablement, le polymère de sel cationique à base d'isobutylène est un polymère ionique de sel d'imidazolium à base d'isobutylène présentant une température de décomposition thermique dans la plage de 150-550 °C, plus préférablement de 200-500 °C ;
préférablement, le polymère de sel cationique à base d'isobutylène est un polymère ionique de sel de pyridinium à base d'isobutylène présentant une température de décomposition thermique dans la plage de 100-500 °C, plus préférablement de 150-450 °C ;
préférablement, une température correspondant à une perte de poids thermique de 5 % en poids du polymère ionique de sel cationique à base d'isobutylène est ≥ 170 °C, préférablement ≥ 180 °C ;
préférablement, le polymère de sel cationique à base d'isobutylène est un polymère ionique de sel d'ammonium quaternaire à base d'isobutylène, la température correspondant à une perte de poids thermique de 5 % en poids du polymère ionique de sel d'ammonium quaternaire à base d'isobutylène est ≥ 170 °C, préférablement ≥ 180 °C ; préférablement, le polymère de sel cationique à base d'isobutylène est un polymère ionique de sel de phosphonium quaternaire à base d'isobutylène, la température correspondant à une perte de poids thermique de 5 % en poids du polymère ionique de sel de phosphonium quaternaire à base d'isobutylène est ≥ 200 °C, préférablement ≥ 220 °C ;
préférablement, le polymère de sel cationique à base d'isobutylène est un polymère ionique de sel d'imidazolium à base d'isobutylène, la température correspondant à une perte de poids thermique de 5 % en poids du polymère ionique de sel d'imidazolium à base d'isobutylène est ≥ 200 °C, préférablement ≥ 220 °C ; préférablement, le polymère de sel cationique à base d'isobutylène est un polymère ionique de sel de pyridinium à base d'isobutylène, la température correspondant à une perte de poids thermique de 5 % en poids du polymère ionique de sel de pyridinium à base d'isobutylène est ≥ 180 °C, préférablement ≥ 200 °C.

7. Procédé de préparation du polymère ionique de sel cationique à base d'isobutylène comprenant :
(1) la dissolution du polymère dans un solvant organique pour obtenir une solution de polymère, l'ajout d'un halogène à la solution de polymère pour mettre en œuvre une réaction d'halogénation afin d'obtenir une solution de polymère halogéné ;
(2) l'ajout d'au moins un élément parmi un composé amine tertiaire, un composé phosphine tertiaire, un composé imidazole et un composé pyridine à la solution de polymère halogéné pour réaliser une réaction d'ionisation afin d'obtenir le polymère ionique de sel cationique à base d'isobutylène ; le polymère est un copolymère aléatoire d'isobutylène et d'alkylstyrène ; la réaction d'halogénation est mise en œuvre sous irradiation d'une lumière visible, la lumière visible présente un mode d'émission lumineuse de type pulsé.

8. Procédé selon la revendication 7, dans lequel une teneur en motif structural issu de l'alkylstyrène est dans la plage de 3-25 mol%, préférablement de 5-20 mol%, et une teneur en motif structural issu de l'isobutylène est dans la plage de 75-97 mol%, préférablement de 80-95 mol%, sur la base de la quantité molaire totale du polymère ; préférablement, le polymère présente une masse moléculaire moyenne en poids Mw dans la plage de 1×10⁴ g/mol-1×10⁵ g/mol, plus préférablement 2×10⁴ g/mol-8×10⁴ g/mol ; et un coefficient de distribution de masse moléculaire dans la plage de 2-3,5, plus préférablement de 2,2-3 ; préférablement, une teneur en ions aluminium dans ledit polymère est inférieure à 10 ppm, plus préférablement inférieure à 5 ppm.

9. Procédé selon la revendication 7 ou la revendication 8, dans lequel la longueur d'onde de la lumière visible est dans la plage de 560-630 nm ; préférablement, l'émission lumineuse de type pulsé présente un temps d'impulsion dans la plage de 5-40 s, préférablement de 10-30 s ; préférablement, le rapport molaire du polymère à l'halogène est de 1: (0,5-2), préférablement 1: (0,8-1,5), sur la base de la teneur molaire du motif structural issu de l'alkylstyrène ; préférablement, l'halogène est du brome liquide ; préférablement, l'halogène est mélangé avec un solvant organique pour obtenir une solution d'halogène, et la solution d'halogène est ajoutée goutte à goutte à la solution de polymère pour mettre en œuvre une réaction d'halogénation ; préférablement, la vitesse d'addition goutte à goutte de la solution d'halogène est commandée de telle sorte que le temps de réaction d'halogénation soit dans la plage de 30-180 min.

10. Procédé selon l'une quelconque des revendications 7 à 9, dans lequel le composé amine tertiaire présente une structure représentée par la formule (6) ; 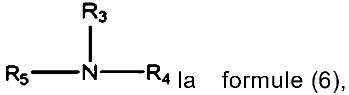
dans laquelle R₃, R₄ et R₅ sont chacun indépendamment un alkyle linéaire en C₁-C₂₀, un alkyle ramifié en C₁-C₂₀ ou un aryle en C₆-C₂₀ ; préférablement, le composé phosphine tertiaire présente une structure représentée par la formule (7) ; 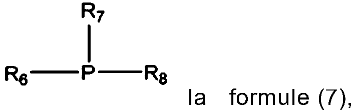
dans laquelle R₆, R₇ et R₈ sont chacun indépendamment un alkyle linéaire en C₁-C₁₀, un alkyle ramifié en C₁-C₁₀, un cycloalkyle en C₃-C₁₀ ou un aryle en C₆-C₁₀ ; préférablement, le composé imidazole présente une structure représentée par la formule (8) ; 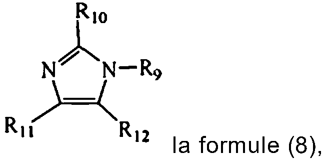
dans laquelle R₉ est un hydrogène, un alkyle linéaire en C₁-C₂₀, R₁₀, R₁₁ et R₁₂ sont chacun indépendamment un hydrogène, des atomes d'halogène, un alkyle linéaire en C₁-C₁₀, un alkyle ramifié en C₁-C₁₀, un groupe hydroxyle, nitro, -(CH₂)ₙ-NH₂, cyano ou un aryle en C₆-C₁₀, n est un nombre entier compris entre 0 et 5 ; préférablement, le composé pyridine présente une structure représentée par la formule (9) ; 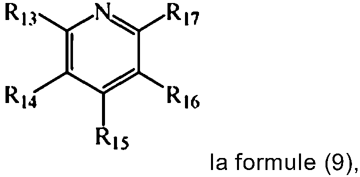
dans laquelle R₁₃, R₁₄, R₁₅, R₁₆ et R₁₇ sont chacun indépendamment un hydrogène, un atome d'halogène, un alkyle linéaire en C₁-C₂₀, un alkyle ramifié en C₁-C₂₀, un groupe amino, nitro ou cyano ; préférablement, R₃, R₄ et R₅ sont chacun indépendamment un alkyle linéaire en C₁-C₁₈ ou un aryle en C₆-C₉ ; plus préférablement, R₃, R4 et R₅ sont chacun indépendamment un méthyle, un alkyle linéaire en C₈-C₁₆ ou un phényle ; en outre, préférablement, R₃ et R₄ sont tous deux des méthyles, et R₅ est un alkyle linéaire en C₈-C₁₆, ou un phényle ; préférablement, R₆, R₇ et R₈ sont chacun indépendamment un alkyle linéaire en C₁-C₈, un cycloalkyle en C₅-C₈ ou un aryle en C₆-C₈ ; plus préférablement, R₆, R₇ et R₈ sont chacun indépendamment un alkyle linéaire en C₁-C₈, un cyclopentyle, un cyclohexyle ou un phényle ; préférablement, R₉ est un hydrogène, un alkyle linéaire en C₁-C₁₈ ; R₁₀, R₁₁ et R₁₂ sont chacun indépendamment un hydrogène, un atome d'halogène, un alkyle linéaire en C₁-C₅, un alkyle ramifié en C₁-C₅, un groupe hydroxyle, nitro, -(CH₂)ₙ-NH₂, cyano ou un aryle en C₆-C₈ ; n est un nombre entier allant de 0 à 3 ; plus préférablement, R₉ est un hydrogène, un alkyle linéaire en C₁-C₁₆ ; R₁₀, R₁₁ et R₁₂ sont chacun indépendamment un hydrogène, un atome d'halogène, un alkyle linéaire en C₁-C₄, un groupe hydroxyle, cyano, amino, nitro ou phényle ; préférablement, R₁₃, R₁₄, R₁₅, R₁₆ et R₁₇ sont chacun indépendamment un hydrogène, un halogène, un alkyle linéaire en C₁-C₁₅, un alkyle ramifié en C₁-C₁₅, un groupe nitro, amino ou cyano ; plus préférablement, R₁₃, R₁₄, R₁₅, R₁₆ et R₁₇ sont chacun indépendamment un hydrogène, un halogène, un alkyle linéaire en C₁-C₁₀, un groupe amino ou cyano.

11. Procédé selon l'une quelconque des revendications 7 à 10, dans lequel le rapport molaire d'au moins un élément parmi le composé amine tertiaire, le composé phosphine tertiaire, le composé imidazole et le composé pyridine à l'halogène est de (0,8-1,5) : 1, préférablement de (0,9-1,2) : 1.

12. Procédé selon l'une quelconque des revendications 7 à 11, dans lequel les conditions de réaction d'ionisation à l'étape (2) comprennent : sous la protection d'un gaz protecteur, une température de réaction est dans la plage de 20-150 °C, préférablement de 40-120 °C, et un temps de réaction est dans la plage de 1-24 h, préférablement de 2-20 h ; préférablement, les conditions de réaction d'ionisation comprennent : sous la protection d'un gaz protecteur, la température de réaction est dans la plage de 20-100 °C, plus préférablement de 40-80 °C, et le temps de réaction est dans la plage de 1-10 h, plus préférablement de 2-8 h ; préférablement, les conditions de réaction d'ionisation comprennent : sous la protection d'un gaz protecteur, la température de réaction est dans la plage de 60-150 °C, plus préférablement de 80-120 °C, et le temps de réaction est dans la plage de 4-24 h, plus préférablement de 6-20 h ; préférablement, les conditions de réaction d'ionisation comprennent : sous la protection d'un gaz protecteur, la température de réaction est dans la plage de 60-120 °C, plus préférablement de 70-100 °C, et le temps de réaction est dans la plage de 6-20 h, plus préférablement de 8-16 h ; préférablement, les conditions de réaction d'ionisation comprennent : sous la protection d'un gaz protecteur, la température de réaction est dans la plage de 60-150 °C, plus préférablement 80-120 °C, et le temps de réaction est dans la plage de 4-20 h, plus préférablement de 6-16 h.

13. Procédé pour une utilisation du polymère ionique de sel cationique à base d'isobutylène selon l'une quelconque des revendications 1 à 6 comme agent antibactérien.

14. Polymère ionique de sel cationique à base d'isobutylène selon l'une quelconque des revendications 1 à 6 est utilisé pour inhiber et tuer au moins un élément parmi des bactéries, des champignons et des virus.

15. Matériau polymère antibactérien comprenant le polymère ionique de sel cationique à base d'isobutylène selon l'une quelconque des revendications 1 à 6 ; préférablement, le polymère ionique de sel cationique à base d'isobutylène est utilisé en une quantité de 1-10 parties, plus préférablement de 2-7 parties, par rapport à 100 parties du matériau polymère ; préférablement, le polymère ionique de sel cationique à base d'isobutylène est un polymère ionique de sel d'ammonium quaternaire à base d'isobutylène ; le polymère ionique de sel d'ammonium quaternaire à base d'isobutylène est utilisé en une quantité de 1-10 parties, plus préférablement de 5-7 parties, par rapport à 100 parties du matériau polymère ; préférablement, le polymère ionique de sel cationique à base d'isobutylène est un polymère ionique de sel de phosphonium quaternaire à base d'isobutylène ; le polymère ionique de sel de phosphonium quaternaire à base d'isobutylène est utilisé en une quantité de 1-8 parties, plus préférablement de 2-6 parties, par rapport à 100 parties du matériau polymère ; préférablement, le polymère ionique de sel cationique à base d'isobutylène est un polymère ionique de sel d'imidazolium à base d'isobutylène ; le polymère ionique de sel d'imidazolium à base d'isobutylène est utilisé en une quantité de 1-10 parties, plus préférablement de 3-7 parties, par rapport à 100 parties du matériau polymère ; préférablement, le polymère ionique de sel cationique à base d'isobutylène est un polymère ionique de sel de pyridinium à base d'isobutylène ; le polymère ionique de sel de pyridinium à base d'isobutylène est utilisé en une quantité de 1-10 parties, plus préférablement de 3-7 parties, par rapport à 100 parties du matériau polymère ; préférablement, le matériau polymère est au moins un élément sélectionné dans le groupe constitué de plastiques, de caoutchouc, de fibres et de revêtements.
